# EUROPEAN PATENT SPECIFICATION

(11) **EP 1 849 095 B1**
(45) Date of publication and mention of the grant of the patent: **02.01.2013**
(21) Application number: 06706669.6
(22) Date of filing: 06.02.2006
(51) Int. Cl.: G06F 15/80, G06F 9/38

(54) **LOW LATENCY MASSIVE PARALLEL DATA PROCESSING DEVICE**
VORRICHTUNG ZUR VERARBEITUNG MASSIVER PARALLELDATEN MIT GERINGER LATENZ
DISPOSITIF DE TRAITEMENT DE DONNEES MASSIVEMENT PARALLELE A FAIBLE LATENCE

(30) Priority: 07.02.2005 DE 102005005766; 15.02.2005 EP 05003174; 07.03.2005 DE 102005010846; 17.03.2005 EP 05005832; 30.03.2005 DE 102005014860; 19.05.2005 DE 102005023785; 06.09.2005 EP 05019296
(43) Date of publication of application: 31.10.2007
(73) Proprietor: Richter, Thomas, 04703 Bockelwitz (DE); Krass, Maren, 8044 Zürich (CH)
(72) Inventor: VORBACH, Martin, 67360 Lingenfeld (DE); MAY, Frank, 81927 München (DE)
(74) Representative: Pietruk, Claus Peter
(86) International application number: PCT/EP2006/001014
(87) International publication number: WO 2006/082091

(56) References cited:
- WO-A-2004/114128
- FRANKLIN M ET AL: "A FILL-UNIT APPROACH TO MULTIPLE INSTRUCTION ISSUE" PROCEEDINGS OF THE ANNUAL INTERNATIONAL SYMPOSIUM ON MICROARCHITECTURE, November 1994 (1994-11), pages 162-171, XP000874608
- OZAWA M ET AL: "A CASCADE ALU ARCHITECTURE FOR ASYNCHRONOUS SUPER-SCALAR PROCESSORS" IEICE TRANSACTIONS ON ELECTRONICS, ELECTRONICS SOCIETY, TOKYO, JP, vol. E84-C, no. 2, February 2001 (2001-02), pages 229-237, XP001044150 ISSN: 0916-8524
- JONG-EUN LEE, YUNJIN KIM, JINYONG JUNG, SHINWON KANG, KIYOUNG CHOI: "Reconfigurable ALU Array Architecture with Conditional Execution" INTERNATIONAL SOC DESIGN CONFERENCE (ISOCC), [Online] 25 October 2004 (2004-10-25), XP002376739 Seoul, Korea Retrieved from the Internet: URL:poppy.snu.ac.kr/~jyjung/publications/i socc2004_jlee.pdf> [retrieved on 2006-04-12]
- CARDOSO J M P ET AL: "XPP-VC: a C compiler with temporal partitioning for the PACT-XPP architecture" FIELD-PROGRAMMABLE LOGIC AND APPLICATIONS. RECONFIGURABLE COMPUTING IS GOING MAINSTREAM. 12TH INTERNATIONAL CONFERENCE, FPL 2002. PROCEEDINGS (LECTURE NOTES IN COMPUTER SCIENCE VOL.2438) SPRINGER-VERLAG BERLIN, GERMANY, 2002, pages 864-874, XP002376740 ISBN: 3-540-44108-5

## Description

The present invention relates to a method of data processing and in particular to an optimized architecture for a processor having an execution pipeline allowing on each stage of the pipeline the conditional execution and in particular conditional jumps without reducing the overall performance due to stalls of the pipeline. The architecture according to the present invention is particularly adapted to process any sequential algorithm, in particular Huffman-like algorithms, e. g. CAVLC and arithmetic codecs like CABAC having a large number of conditions and jumps. Furthermore, the present invention is particularly suited for intra-frame coding, e. g. as suggested by the video codecs H.264.

Data processing requires the optimization of the available resources, as well as the power consumption of the circuits involved in data processing. This is the case in particular when reconfigurable processors are used.

Reconfigurable architecture includes modules (VPU) having a configurable function and/or interconnection, in particular integrated modules having a plurality of unidimensionally or multidimensionally positioned arithmetic and/or logic and/or analog and/or storage and/or internally/externally interconnecting modules, which are connected to one another either directly or via a bus system.

These generic modules include in particular systolic arrays, neural networks, multiprocessor systems, processors having a plurality of arithmetic units and/or logic cells and/or communication/peripheral cells (IO), interconnecting and networking modules such as crossbar switches, as well as known modules of the type FPGA, DPGA, Chameleon, XPUTER, etc. Reference is also made in particular in this context to the following patents and patent applications of the same applicant:
DE 44 16 881 A1, DE 197 81 412 A1, DE 197 81 483 A1,
DE 196 54 846 A1, DE 196 54 593 A1, DE 197 04 044 A1,
DE 198 80 129 A1, DE 198 61 088 A1, DE 199 80 312 A1,
PCT/DE 00/01869, DE 100 36 627 A1, DE 100 28 397 A1,
DE 101 10 530 A1, DE 101 11 014 A1, PCT/EP 00/10516,
EP 01 102 674 A1, DE 102 06 856 A1, WO 2003/025710,
DE 102 02 044 A1, DE 101 29 237 A1, DE 101 39 170 A1,
PCT/EP 03/09957, PCT/EP 2004/006547, EP 03 015 015 A1,
PCT/EP 2004/009640, PCT/EP 2004/003603, EP 04 013 557 A1.

It is to be noted that the cited documents disclose in particular details of configuration, routing, placing, design of architecture elements, trigger methods and so forth. It should be noted that whereas the cited documents refer in certain embodiments to configuration using dedicated configuration lines, this is not absolutely necessary. It will be understood from the present invention that it might be possible to transfer instructions intermeshed with data using the same input lines to the processing architecture without deviating from the scope of invention. Furthermore, it is to be noted that the present invention does disclose a core which can be used in an environment using any protocols for communication and that it can, in particular, be enclosed with protocol registers at the in- and output side thereof. Furthermore, it is obvious, in particular, though not only in hyper-thread applications, that the invention disclosed herein may be used as part of any other processor, in particular multi-core processors and the like.

The present invention relates to a data processing device for processing data according to instructions fetched and decoded each processing cycle. In this respect, it is noted that the following documents form prior art relevant to data processing: FRANKLIN M. et al: "A Fill-Unit Approach to Multiple Instruction Issue", Proceedings of the Annual International Symposium on Microarchitecture, November 1994 (1994-11), pages 162-171, XPO00874608; WO 2004/114128 A (KONINKLIJKE PHILIPS ELECTRONICS N.V., ALBA PINTO, CARLOS, A, SRINIVASAN), 29 December 2004 (2004-12-29); OZAWA M. et al: "A Cascade ALU Architecture for Asynchronous Super-Scalar Processors", IEICE Transactions on Electronics, Electronics Society, Tokyo, JP, vol. E84-C, no. 2, February 2001 (2001-02), pages 229-237, XP001044150 ISSN: 0916-8524; JONG-EUN LEE, YUNJIN KIM, JIN-YONG JUNG, SHINWON KANG, KIYOUNG CHOI: "Reconfigurable ALU Array Architecture with Conditional Execution", International SOC Design Conference (ISOCC), [Online] 25 October 2004 (2004-10-25), XP002376739, Seoul, Korea, Retrieved from the Internet:URL:poppy.snu.ac.kr/~jyjung/publications/Isocc2004 jlee.pdf>[retrieved on 2006-04-12].

The object of the present invention is to provide novelties for the industrial application.

This object is achieved by the subject matter of the independent claims. Preferred embodiments can be found in the dependent claims.

Most processors according to the state of the art use pipelining or vector arithmetic logics to increase the performance. In case of conditions, in particular conditional jumps, the execution within the pipeline and/or the vector arithmetic logics has to be stopped. In the worst case scenario even calculations carried out already have to be discarded. These so-called pipeline-stalls waste from ten to thirty clock-cycles depending on the particular processor architecture. Should they occur frequently, the overall performance of the processor is significantly affected. Thus, frequent pipeline-stalls may reduce the processing power of a two GHz-processor to a processing power actually used of that of a 100 MHz-processor. Thus, in order to reduce pipeline-stalls, complicated methods such as branch-prediction and -predication are used which however are very inefficient with respect to energy consumption and silicon area.

In contrast, VLIW-processors are more flexible at first sight than deeply pipelined architectures; however, in cases of jumps the entire instruction word is discarded as well; furthermore pipeline and/or a vector arithmetic logic should be integrated.

The processor architecture according to the present invention can effect arbitrary jumps within the pipeline and does not need complex additional hardware such as those used for branch-prediction. Since no pipeline-stalls occur, the architecture achieves a significant higher average performance close to the theoretical maximum compared to conventional processors, in particular for algorithms comprising a large number of jumps and/or conditions.

The invention is suited not only for use as e. g. a conventional microprocessor but also as a coprocessor and/or for coupling with a reconfigurable architecture. Different methods of coupling may be used, for example a "loose" coupling using a common bus and/or memory, the coupling to a (reconfigurable) processor using a so-called coprocessor-interface, the integration of reconfigurable units in the data path of the reconfigurable processor and/or the coupling of both architectures as thread resources in a hyper-thread architecture. Reference is made to PCT/EP 2004/003603 regarding couplings, in particular in view of hyper-thread architectures.

The architecture of the present invention has significant advantages over known processor architectures as long as data processing is effected in a way comprising significant amounts of sequential operations, in particular compared to VLIW architectures. The present architecture maintains a high-level performance compared to other processor-, coprocessor and generally speaking data processing units such as VLIWs, if the algorithm to be executed comprises a significant amount of instructions to be executed in parallel thus comprising implicit vector transformability or an instruction-level-parallelity ILP, as then advantages of meshing and connectivity of the given processor architecture particularities can be realized fully.

this is particularly the case where data processing steps have to be executed that can commonly best be mapped onto sequencer structures.

### Architecture according to the invention

Be it noted that in the following part, reference is made to the architecture according to the invention as a processor. However, it is to be understood that whereas the present invention can be considered to be a fully working processor and/or can be used to build such a fully working processor, it is also possible to derive only a processor core or, more generally speaking, a data processing core for use in a more complex environment such as multi-core processors where the core of the present invention can form one of many cores, in particular cores that may be different from each other. Furthermore, it will become obvious that the core of the present invention might be used to form a processing array element or circuitry included in a (coarse- and/or medium-grained) "sea of logic". However, despite these remarks, the following description will refer in most parts to a processor according to the invention yet without limitation and only to enable easier understanding of the invention to those skilled in the art. More generally speaking, not citing, relating to or repeating in every paragraph, sentence and/or for every verb and/or object and/or subject or other given grammatical construction any and all or at least some of possible, feasible, helpful or even less valued alternatives and/or options, often despite the fact that said referral might be deemed a necessary or helpful part of a more complete disclosure though deemed so not by a skilled person but a patent examiner, patent employee, attorney or judge construing such linguistic ramifications instead of focussing on the technical issues to be really addressed by a description disclosing technical ideas, is in no way understood to reduce the scope of disclosure.

This being stated, the processor according to the present invention (XMP) comprises several ALU-stages connected in a row, each ALU-stage executing instructions in response to the status of previous ALU-stages in a conditional manner. In order to be capable of executing any given program structure, complete program flow-trees can be executed by storing on each ALU-stage plane the maximum number of instructions.possibly executable on the respective plane. Using the status of the previous stages and/or the processor status register respectively, the instruction for a stage to be actually executed respectively is determined from clock-cycle to clock-cycle. In order to implement a complete program flow-tree, the execution of one instruction in the first ALU-stage is necessary, in the second ALU-stage, the conditional execution of one instruction out of (at least) two, on the third ALU-stage the conditional execution of one instruction out of (at least) four and on the n.th stage the conditional execution of an *OpCode* out of (at least) 2ⁿ is required. All ALUs may have and will have in the preferred embodiment reading and writing access to the common register set. Preferably, the result of one ALU-stage is sent to the subsequent ALU-stage as operand. It should be noted that here "result" might refer to result-related data such as carry; overflow; sign flags and the like as well. Pipeline register stages may be used between different ALU-stages. In particular, it can be implemented to provide a pipeline-like register stage not downstream of every ALU-stage but only downstream of a given group of ALUs: In particular, the group-wise relation between ALUs and pipeline stages is preferred in a manner such that within an ALU group only exactly one conditional execution can occur.

### A preferred embodiment of the ALU-stages

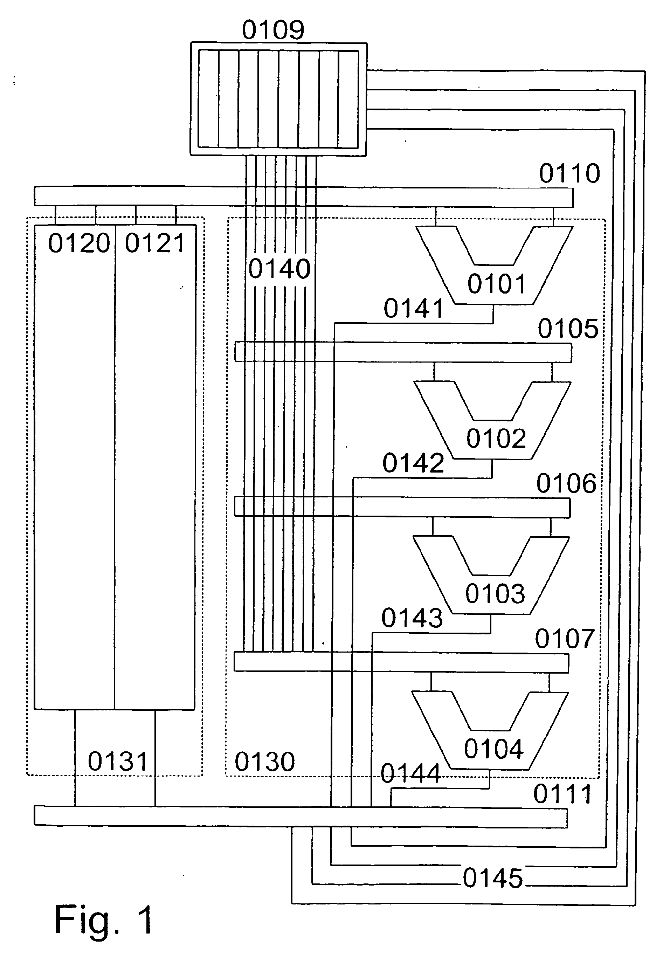

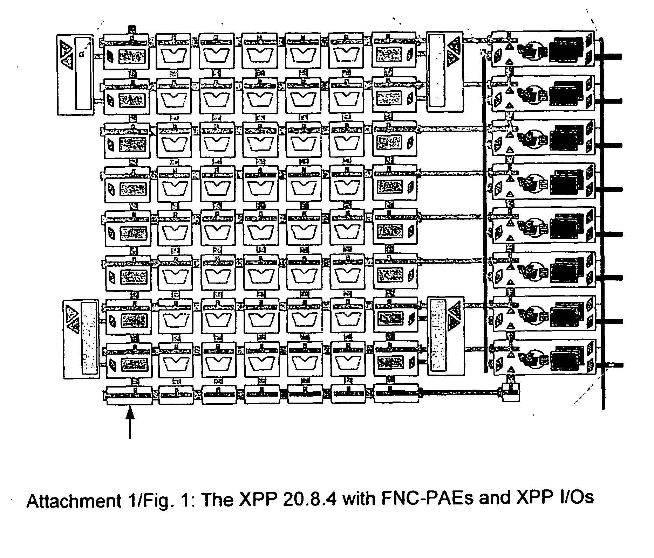

Fig. 1 shows the basic design of the data path of the present processor (XMP). Data and/or address registers of the processor are designated by 0109. Four ALU-stages are designated as 0101, 0102, 0103, 0104. The stages are connected to each other in a pipeline-like manner, a multiplexer-/register stage 0105, 0106, 0107 following each ALU. The multiplexer in each stage selects the source for the operand of the following ALU, the source being in this embodiment either the processor register or the results of respective previous ALUs. In this embodiment, the preferred implementation is used where a multiplexer can select as operand the result of any upstream ALU independent on how far upstream the ALU is positioned relative to the respective multiplexer and/or independent on what column the ALU is placed in. As the ALU-results can be taken over directly from the previous ALU, they do not have to be written back into the processor register. Therefore, the ALU-/register-data transfer is particularly simple and energy efficient in the machine suggested and disclosed. At the same time, there is no problem of data dependencies that are difficult to resolve (in particular difficult to resolve by compilers). Thus data dependencies between ALUs as well-known from VLIW-processors do not pose a problem here.

A register stage optionally following the multiplexer is decoupling the data transfer between ALU-stages in a pipelined manner. It is to be noted that in a preferred embodiment there is no such register stage implemented. Directly following the output of the processor register 0109, a multiplexer stage 0110 is provided selecting the operands for the first ALU-stage. A further multiplexer stage 0111 is selecting the results of the ALU-stages for the target registers in 0109.

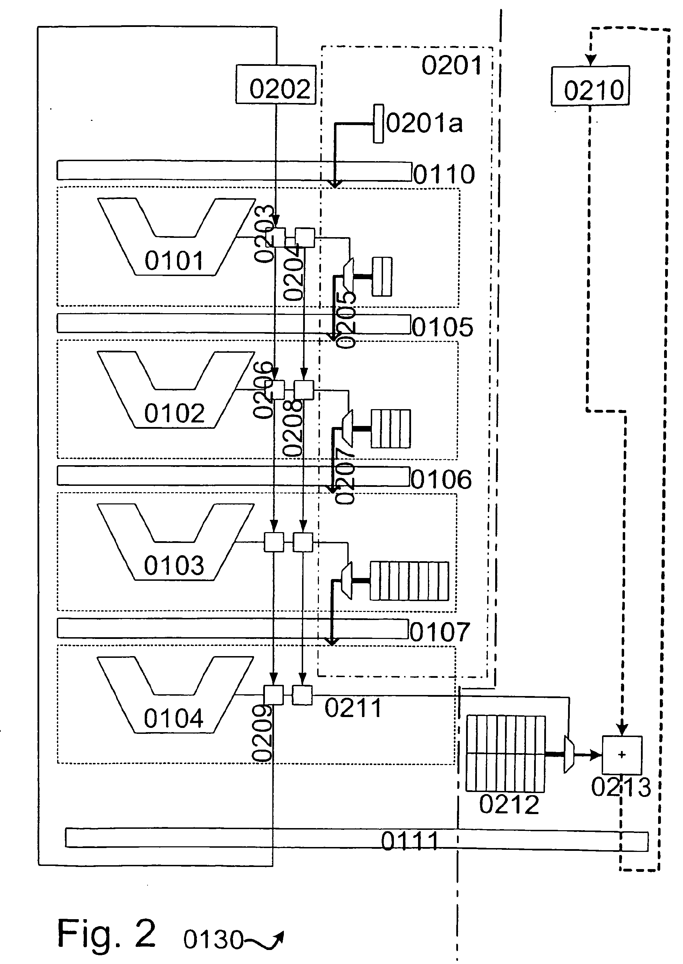

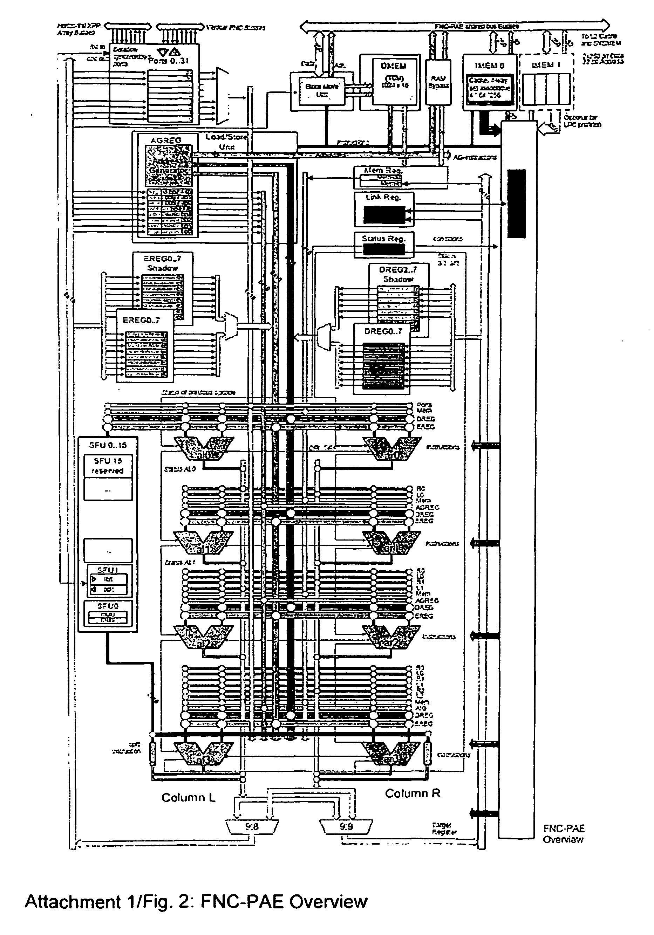

Fig. 2 shows the program flow control for the ALU-stage arrangement 0130 of Fig. 1. The instruction register 0201 holds the instruction to be executed at a given time within 0130. As is known from processors of the prior art, instructions are fetched by an instruction fetcher in the usual manner, the instruction fetcher fetching the instruction to be executed from the address in the program memory defined by the program pointer PP (0210).

The first ALU stage 0101 is executing an instruction 0201a defined in a fixed manner by the instruction register 0201 determining the operands for the ALU using the multiplexer stage 0110; furthermore, the function of the ALU is set in a similar manner. The ALU-flag generated by 0101 may be combined (0203) with the processor flag register 0202 and is sent to the subsequent ALU 0102 as the flag input data thereof.

Each ALU-stage within 0103 can generate a status in response to which subsequent stages execute the corresponding jump without delay and continue with a corresponding instruction. In dependence of the status obtained in 0203 one instruction 0205 of two possible instructions from 0201 is selected for ALU-stage 0102 by a multiplexer. The selection of the jump target is transferred by a jump vector 0204 to the subsequent ALU-stage. Depending on the instruction selected 0205, the multiplexer stage 0105 selects the operands for the subsequent ALU-stage 0102. Furthermore, the function of the ALU-stage 0102 is determined by the selected instruction 0205.

The ALU-flag generated by 0102 is combined with the flag 0204 received from 0101 (compare 0206) and is transmitted to the subsequent ALU 0103 as the flag input data thereof. Depending on the status obtained in 0206 and depending on the jump vector 0204 received from the previous ALU 0102, the multiplexer selects one instruction 0207 out of four possible instructions from 0201 for ALU-stage 0103.

ALU-stage 0101 has two possible jump targets, resulting in two possible instructions for ALU 0102. ALU 0102 in turn has two jump targets, this however being the case for each of the two jump targets of 0101. In other words, a binary tree of possible jump targets is created, each node of said tree having two branches here. In this way, ALU 0102 has 2ⁿ = 4 possible jump targets that are stored in 0201.

The jump target selected is transmitted via signals 0208 to the subsequent ALU-stage 0103. Depending on the instruction 0207 selected, the multiplexer stage 0106 selects the operands for the subsequent ALU-stage 0103. Also, the function of the ALU-stage 0103 is determined by the selected instruction 0207.

The processing in the ALU-stages 0103, 0104 corresponds to the description of the other stages 0101 and 0102 respectively; however, the instruction set from which is to be selected according to the predefined condition is 8 (for 0103) or 16 (for 0104) respectively. In the same way as in the preceeding stages a jump vector 0211 with 2ⁿ = 16 (n = number_of_stages = 4) jump targets is generated at the output of ALU-stage 0104. This output is sent to a multiplexer selecting one out of sixteen possible addresses 0212 as address for the next OpCode to be executed. The jump address memory is preferably implemented as part of the instruction word 0201. Preferably, addresses are stored in the jump address memory 0212 in a relative manner (e. g. +/- 127), adding the selected jump address using 0213 to the current program pointer 0210 and sending the program pointer to the next instruction to be loaded and executed. Note: In one embodiment of the present invention only one valid instruction is selectable for each ALU-stage while all other selections just issue NOP (no operation) or "invalid" instructions; reference is made to the attachment, forming part of the disclosure.

Flags of ALU-stage 0104 are combined with the flags obtained from the previous stages in the same manner as in the previous ALU-stage (compare 0209) and are written back into the flag register. This flag is the result flag of all ALU-operations within the ALU-stage arrangement 0130 and will be used as flag input to the ALU-path 0130 in the next cycle.

The preferred embodiment having four ALU-stages and having subsequent pipeline registers is an example only. It will be obvious to the average skilled person that an implementation can deviate from the shown arrangement such as for example with regard to the number of ALU-stages, the number and placement of pipeline stages, the number of columns, their connection to neighboring and/or non-neighboring columns and/or the arrangement and design of the register set.

The basic method of data processing allows for each ALU-stage of the multi-ALU-stage arrangement to execute and/or generate conditions and/or jumps. The result of the condition or the jump target respectively is transferred via flag vectors, e. g. 0206, or jump vectors, e. g. 0208, to the respective subsequent ALU-stage, executing its operation depending on the incoming vectors, e. g. 0206 and 0208 by using flags and/or flag vectors for data processing, e. g. as operands and/or by selecting instructions to be executed by the jump vectors. This may include selecting the no-operation instruction, effectively disabling the ALU. Within the ALU-stage arrangement 0130 each ALU can execute arbitrary jumps which are implicitly coded within the instruction word 0201 without requiring and/or executing an explicit jump command. The program pointer is after the execution of the operations in the ALU-stage arrangement via 0213, leading to the execution of a jump to the next instruction to be loaded.

The processor flag 0202 is consumed from the ALU-stages one after the other and combined and/or replaced with the result flag of the respective ALU. At the output of the ALU-stage arrangement (ALU-path) the result flag of the final result of all ALUs is returned to the processor flag register 0202 and defines the new processor status.

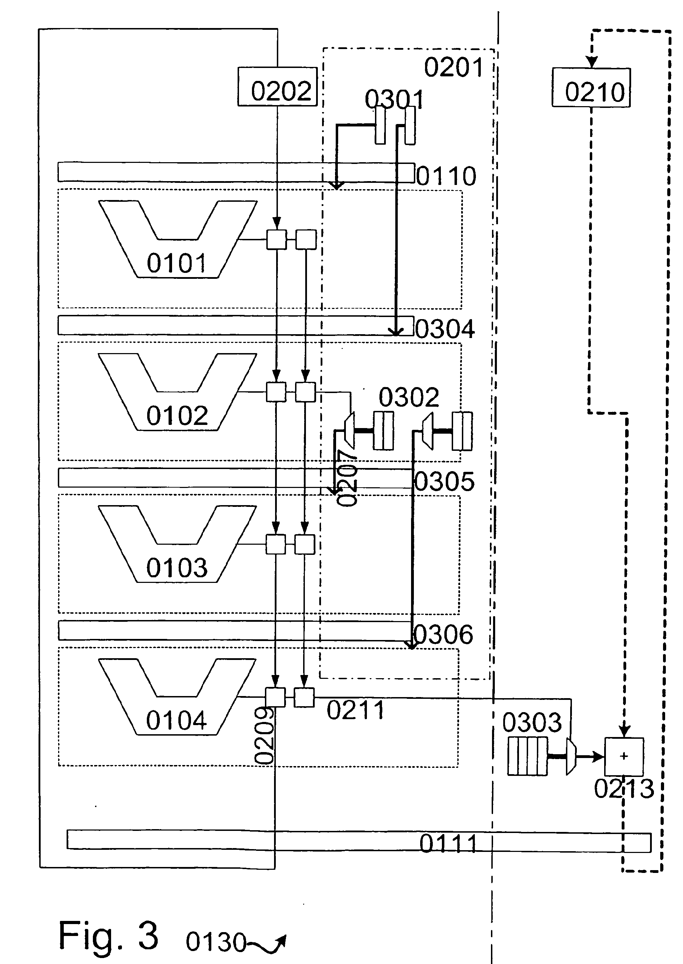

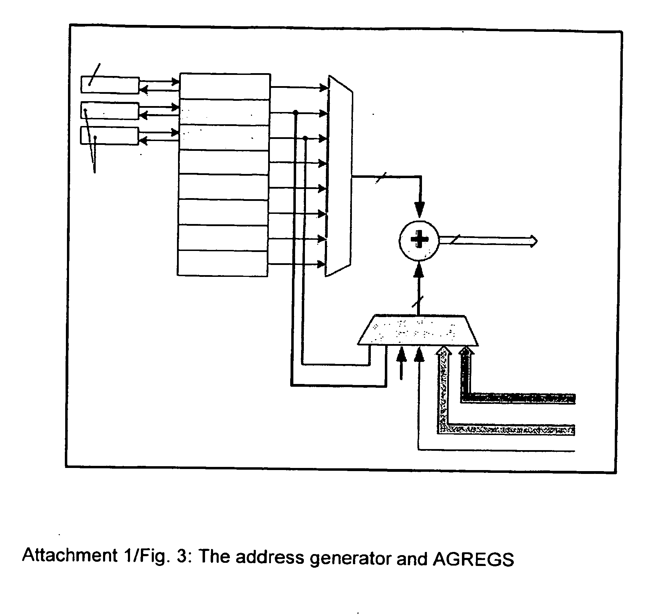

The design or construction of the ALU-stage according to Fig. 2 can be become very complex and consumptious, given the fact that a large plurality of jumps can be executed, increasing on the one hand the area needed while on the other hand increasing the complexity of the design and simulation. In view of the fact that most algorithms do not require plural branching directly one after the other, the ALU-path may be simplified. As an exemplary suggestion an embodiment thereof is shown in Fig. 3. According to Fig. 3, the general design closely corresponds to that of Fig. 2 restricting however the set of possible jumps to two. The instructions for the first two ALUs 0101 and 0102 are coded in the instruction registers 0301 in a fixed manner (fixed manner does not imply that the instruction is fixed during the hardware design process, but that it need not be altered during the execution of one program part loaded at one time into the device of Fig. 3). ALU-stage 0102 can execute a jump, so that for ALU-stages 0103 and 0104 two instructions each are stored in 0302, one of each pair of instructions being selected at runtime depending on the jump target in response to the status of the ALU-stage 0102 using a multiplexer. ALU-stage 0104 can execute a jump having four possible targets stored in 0303. A target is selected by a multiplexer at runtime depending on the status of ALU-stage 0104 and is combined with a program pointer 0210 using an adder 0213. A multiplexer stage 0304, 0305, 0306 is provided between each ALU-stages that may comprise a register stage each. Preferably, no register stage is implemented so as to reduce latency.

### Instructions connected in parallel

Preferably, in the other stage arrangement 0101, 0102, 0103, 0104 = 0130 only instructions simple and executable fast with respect to time are implemented in the ALU. This is preferred and does not result in significant restrictions. Due to the fact that the most frequent instructions within a program do correspond to this restriction (compare for example instructions ADD, SUB, SHL, SHR, CMP, ......), more complex instructions having a longer processing time and thus limiting ALU-stage arrangements with respect to their clock frequencies may be connected as side ALUs 0131, preferably in parallel to the previously described ALU-stage arrangement. Two "side-ALUs" are shown to be implemented as 0120 and 0121. More complex instructions as referred to can be multipliers, complex shifters and dividers.

It should be explicitly mentioned that in a preferred embodiment in particular any instructions that require a large area on the processor chip for their implementation can and will be implemented in the side-ALU arrangement instead of being implemented within each ALU. It is an alternative possibility to not allow for the execution of such instructions requiring larger areas for their hardware implementation not in every ALU of the ALU-stages but only in a subset thereof, for example in every second ALU.

Side-ALUs 0131, although drawn in the figure at the side of the pipeline, need not be physically placed at the side of the ALU-stage/pipeline-arrangement. Instead, they might be implemented on top thereof and/or beneath thereof, depending on the possibilities of the actual process used for building the processor in hardware. Side-ALUs 0131 receive their operands as necessary via a multiplexer 0110 from processor register 0109 and write back results to the processor register using multiplexer 0111. Thus, the way side-ALUs receive the necessary operands corresponds to the way the ALU-stage arrangement receives operands. It should be noted that instead of only receiving operands from the processor register 0109, the side-ALUs might be connected to the outputs of one ALU, ALU-stage or a plurality of ALU-stages as well. While in some machine models an instruction group is executed in the ALU-stage arrangement 0130 or the side-ALU 0131, a hyper-scalar execution model processing data simultaneously in both ALU-units 0130 and 0131 is implementable as well.

By way of integration of reconfigurable processors, e. g. a VPU in a side-ALU a close connection and coupling to the sequential architecture is provided. It should be noted that the processor in a processor core of the present invention might be coupled itself to a reconfigurable processor, that is an array of reconfigurable elements. Then, in turn, side-ALUs may comprise reconfigurable processors. These processors may have reduced complexity, compared to the processing array that the ALU-arrangement 0130 is coupled to, e. g. by providing less processing elements and/or only next-neighbor-connections and/or different protocols. It should be noted that it is easily possible to obtain a Babushka-(or chain-)like coupling if preferred. It is also to be noted that the side-ALU might transfer data to a larger array if needed. Furthermore, it is to be noted that where side-ALU comprise reconfigurable processors, the architecture and/or protocol thereof need not necessarily be the same as that the ALU-arrangement of the present invention is coupled to on a larger scale; that means that when considered as Babushkas, the outer Babushka reconfigurable processor array might have a different protocol compared to that of an inner Babushka reconfigurable processor array. The reason for this results in the fact that for smaller arrays, different protocols and/or connectivities might be useful. For example, when the ALU-arrangement of the present invention is coupled to a 20x20 processing array and comprises a smaller reconfigurable processing array in its ALU, e. g. a 3x3 array, there might not be the need to provide non next-neighbour connectivities in the 3x3 array, particularly in case where multidimensional toroidal connectivity is given. Also, there will not necessarily be the necessity to partially reconfigure the inner Babushka processor arrays. In a smaller array of a side-ALU, it might be sufficient to provide for reconfiguration of the entire (smaller) array only.

It should be noted that although the side-units 0131 are referred to above and in the following to be side-"ALUs", in the same way that an XPP-like array can be coupled to the architecture of the invention as a side-ALU, other units may be used as "ALUs", for example and without limitation lookup-tables, RAMs, ROMs, FIFOs or other kinds of memories, in particular memories that can be written in and/or read out from each and/or a plurality of the ALU-stages or ALUs in the multiple row ALU arrangement of the present invention; furthermore, it is to be understood that any cell element and/or functionality of a cell element that has been disclosed in the previous applications of the present applicant can be implemented as side-ALUs, for example ALUs combined with FPGA-grids, VLIW-ALUs, DSP-cores, floating point units, any kind of accelerators, peripheral interfaces such as memory- and/or I/O-busses as already known in the art or to be described in future upcoming technologies and the like.

It should also be understood that whereas the ALUs in the rows of ALU-stages in the ALU-arrangement of the present invention are disclosed and described above and below to be ALUs capable of carrying out a given set of instructions, such as a reduced instruction set having a restricted latency, at least some of the ALUs in the path may be constructed and/or designed to have other functionality. Where it is reasonable to assume that algorithms need to be processed on the arrangement of the present invention that require huge amounts of floating point instructions, despite the comments above, at least some of the ALUs in the ALU-stage path and not only in the side-ALUs may comprise floating point capability. Where performance is an issue and ALUs need to be implemented having a functionality executed slower than other functionalities but not used frequently, it would be possible to slow down the clock in cases where an OpCode referring to this functionality is definitely or conditionally to be executed. The clock frequency would be indicated in the instructions(s) to be loaded for the entire ALU-arrangement as might be done in other cases as well. Also, when needed, some of the ALUs in at least one of the columns may be configurable themselves so that instructions can be defined by referring to an (if necessary preconfigured) configuration. Here, the status that would be transferred from one row to the other and/or between columns of ALUs would be the overall status of the ((re)configurable) array. This would allow for defining a very efficient way of selecting instructions. It should be understood that in a case like that, the instructions used in the invention to be loaded into an ALU could comprise an entire configuration and/or a multiplicity of configurations that can be selected using other instructions, trigger values and so forth.

Furthermore, it should be understood that in certain cases units as described above as possible alternatives to common place classic ALUs for the side-ALUs (or, more precisely, side-units) could also be used in at least some parts of the data path, that is for at least one ALU in the ALU-arrangement of the present invention; accordingly, one or more "ALU-like" element(s) may be built as lookup-tables, RAM, ROM, FIFO or other memories, I/O-interface(s), FPGAs, DSP-cores, VLIW-units or combination(s) thereof. It should also be noted that even in this case a plurality of operands processing and altering and/or combining units, that is "conventional" ALUs, even if having a reduced set of operand processing possibilities by omitting e. g. multiplier stage, will remain. Furthermore, it should be noted that even in such a case a significant difference from the present invention to a conventional XPP or other reconfigurable array exists in that the definition of the status is completely different.

In a conventional XPP, the status is distributed over the entire array and only in considering the entire array with all trigger vectors exchanged between ALUs thereof and protocol-related states can the status of the array be defined. In contrast, the present invention also has a clearly defined status at each row (stage) which can be transferred from row to row. Further to the exchange of such processor-like status from row to row, it is also possible to exchange status (or status-like) information between different columns of the device according to the invention. This is clearly different from any known processor.

Operands connected in parallel and/or switched and/or parallelized allow for the execution of operations of the remaining data paths, in particular the ALU-data paths. Thus, data processing can be parallelized on instruction level, allowing for the exploitation of instruction level parallelism (ILP).

### Register Access

Each ALU in the ALU-stage arrangement 0130 may, in the preferred embodiment of the present invention, select any register of the processor register 0109 as operand register 0140 via the respective multiplexer/register stage 0105, 0106, 0107. The result of the operation and/or calculation 0141, 0142, 0143, 0144 of each ALU-stage is sent to the respective subsequent stage(s) that is either, in the normal case, the directly succeeding stage and/or one or more stages thereafter, and can thus be selected by the multiplexer-/register stage 0105, 0106, 0107 thereof as operand. The same holds for status information which can be sent to the directly succeeding stage and/or can be sent to one or more stages further downstream.

Multiplexer stage 0111 is connected via a bus system 0145, and serves to transfer the results of the operations/calculations 0141, 0142, 0143, 0144 according to the instruction to be executed for writing into the processor register 0109.

### Implementation of asynchronous concatenation of ALUs in plural parallel ALU-paths

The embodiments previously described have a disadvantage remaining: The ALU-stage path should operate completely without pipelining to obtain maximum performance in particular for algorithms such as CABAC, given the fact that only then can all ALU-stages carry out operations in every clock-cycle effectively. Pipelining has no advantage here, given the fact that calculation operations are linearly (sequentially) dependent from one another in a temporal manner resulting in the fact that a new operation could only be started once the result of the last pipeline stage is present. Thus, most of the ALU-stages would always run empty. Accordingly, an asynchronous connection of the ALU-stages it is preferred. Based on transistor geometries according to the state of the art, this is no problem, given the fact that the single ALUs within the ALU-stages according to the invention comprise only fast and thus simple commands such as ADD, SUB, AND, OR, XOR, SL, SR, CMP and so forth in the preferred embodiment, thus allowing an asynchroneous coupling of a plurality of ALU-stages, for example four, with several 100 MHz.

However, branching in the code within the ALU-stage arrangement may cause timing problems as the corresponding ALUs are to change their instructions at runtime asynchronously, leading to an increase of runtime.

Now, given the fact that the ALUs within the ALU-stage arrangement are designed very simple in the preferred embodiment, a plurality of ALU-stages can be implemented, each ALU-stage being configured in a fixed manner for one of the possible branches.

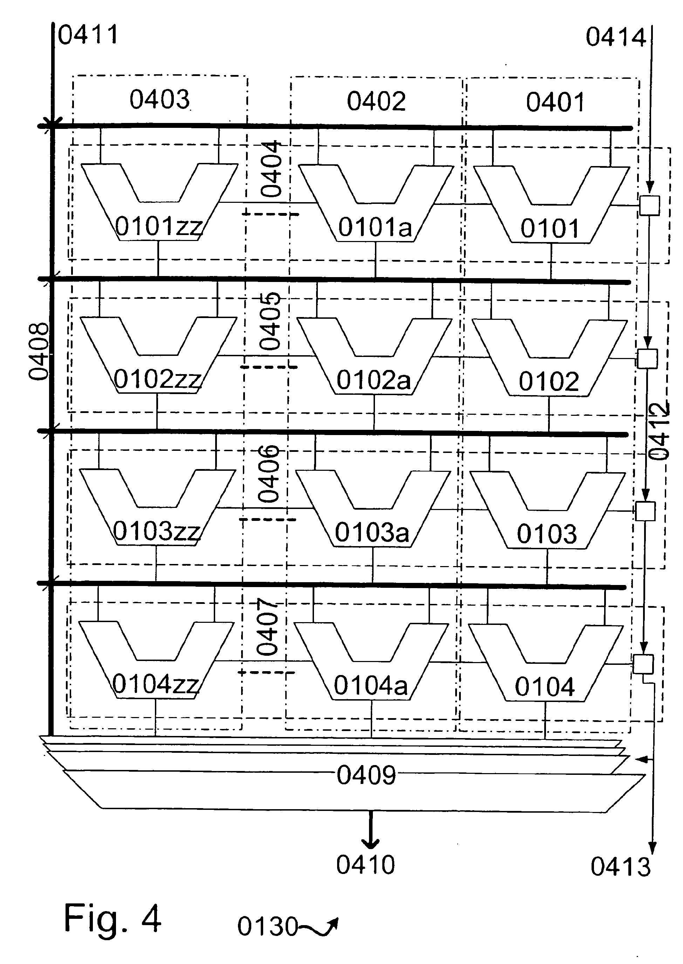

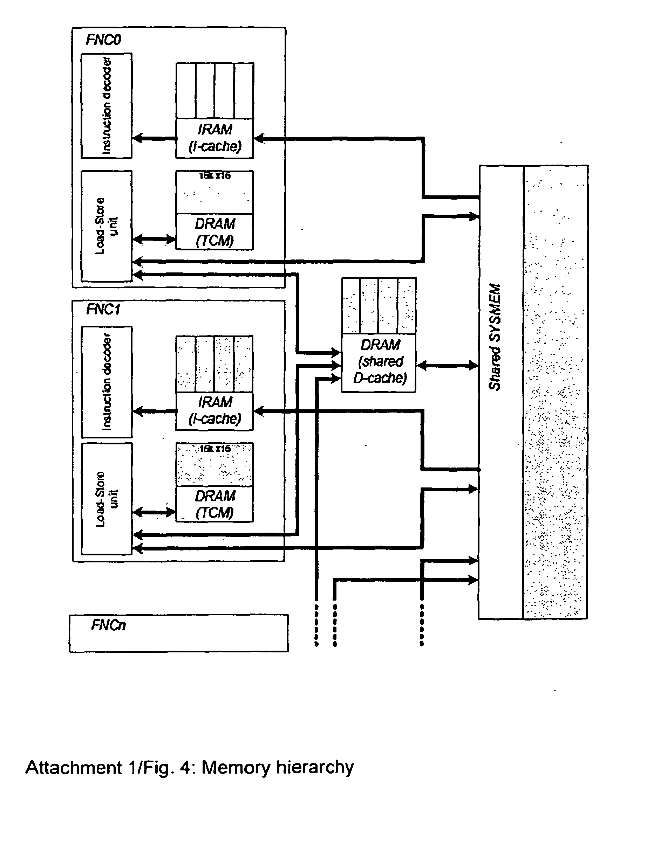

Fig. 4 shows a corresponding arrangement wherein the ALU-stage arrangement 0401 (corresponding to 0101 .... 0104 in the previous embodiment) is duplicated in a multiple way, thus implementing for branching zz-ALU-stages arrangements 0402 = (0101a ... 0104a) to 0403 = (0101zz ... 0104zz). In each ALU-stage arrangement 0401 to 0403 the operation is defined by specific instructions of the OpCode not to be altered during the execution. The instructions comprise the specific ALU command and the source of each operand for each single ALU as well as the target register of any. Be it noted that the register set might be defined to be compatible with register and/or stack machine processor models. The status signals are transferred from one ALU-stage to the next 0412. In this way, the status signals inputted into one ALU-row 0404, 0405, 0406, 0407 may select the respective active ALU(s) in one row which then propagate(s) its status signal(s) to the subsequent row. By activating an ALU within an ALU-row depending on the incoming status signal 0412, a concatenation of the active ALUs for pipelining is obtained producing a "virtual" path of those jumps actually to be executed within the grid/net. Each ALU has, via a bus system 0408, cmp. Fig. 4, access to the register set (via bus 0411) and to the result of the ALUs in the upstream ALU-rows. (It will be understood that in Fig. 4 the use of reference signs will differ for some elements compared to reference signs used in Fig. 1; e. g. 0408 corresponds to 0140, 0409 corresponds to 0111 and 0410 to 0145. Similar differences might occur between other pairs of figures as well.) The complete processing within the ALUs and the transmission of data signals and status signals is carried out in an asynchronous manner. Several multiplexers 0409 at the output of the ALU-stages select in dependence of the incoming status signals 0413 the results which are actually to be delivered and to be written into the data register (0410) in accordance with the jumps carried out virtually. The first ALU-row 0404 receives the status signals 0414 from the status register of the processor. The status signal created within the ALU-rows corresponds, as described above, to the status of the "virtual" path, and thus the data path jumped to and actually run through, and is written back via 0413 to the status register 0920 of the processor.

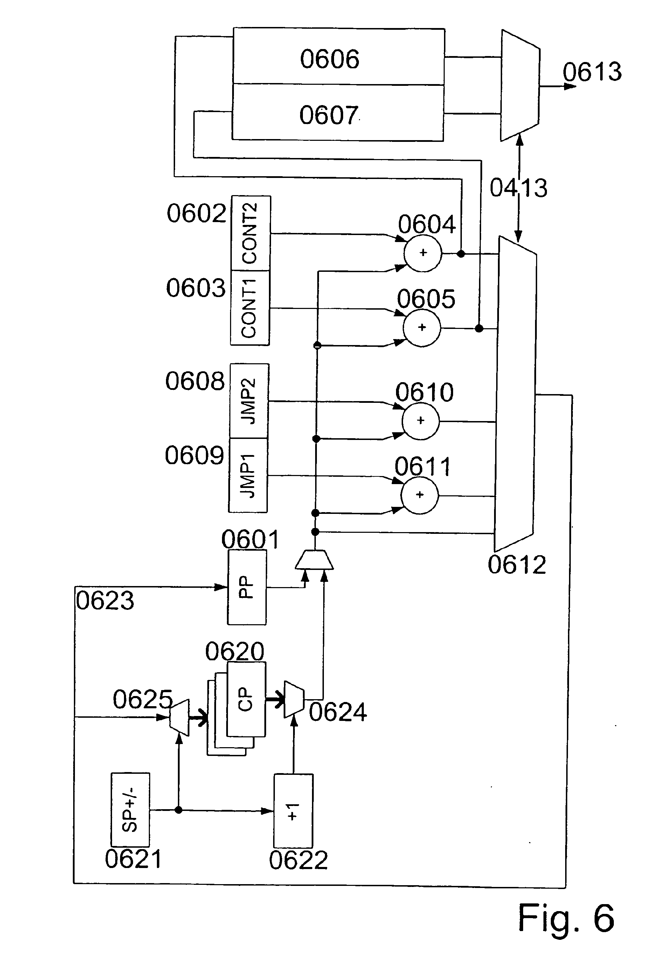

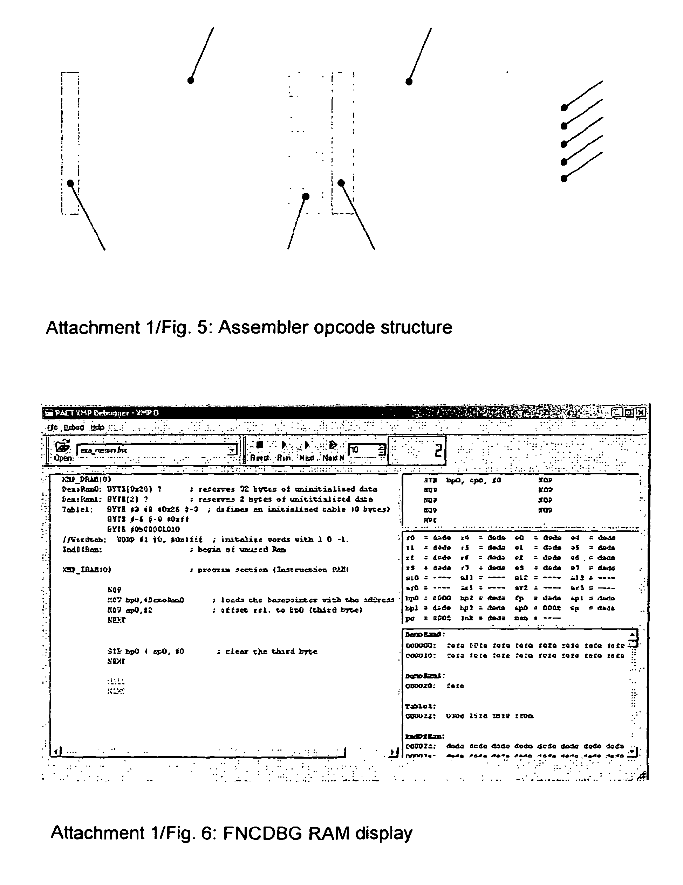

A particular advantage of this ALU implementation resides in that the ALU-stages arrangement 0401, 0402, 0403 can not only operate as alternative paths of branches but can also be used for parallel processing of instructions in instruction level parallelism (ILP), several ALUs in one ALU-row processing operands at the same time that are all used in one of the subsequent rows and/or written into the register. A possible implementation of a control circuitry of the program pointer for the ALU-unit is described in Fig. 6. Details thereof will be described below.

### Load-Store

In a preferred embodiment of the technology according to the present invention, the load/store processor is integrated in a side element, compare e. g. 0131, although in that case 0131 is preferably referred to not as a "side-ALU" but as a side-L/S-(load/store)-unit. This unit allows parallel and independent access to the memory. In particular, a plurality of side-L/S-units may be provided accessing different memories, memory parts and/or memory-hierarchies. For example, L/S-units can be provided for fast access to internal lookup tables as well as for external memory accesses. It should be noted explicitly that the L/S-unit(s) need not necessarily be implemented as side-unit(s) but could be integrated into the processor as is known in the prior art. For the optimised access to lookup-tables an additional load-store command is preferably used (MCOPY) that in the first cycle loads a data word into the memory in a load access and in a second cycle writes to another location in the memory using a store access of the data word. The command is particularly advantageous if for example the memory is connected to a processor using a multiport interface, for example a dual port or two port interface, allowing for simultaneous read and write access to the memory. In this way, a new load instruction can be carried out directly in the next cycle following the MCOPY instruction. The load instruction accesses the same memory during the store access of MCOPY in parallel.

### XMP processor

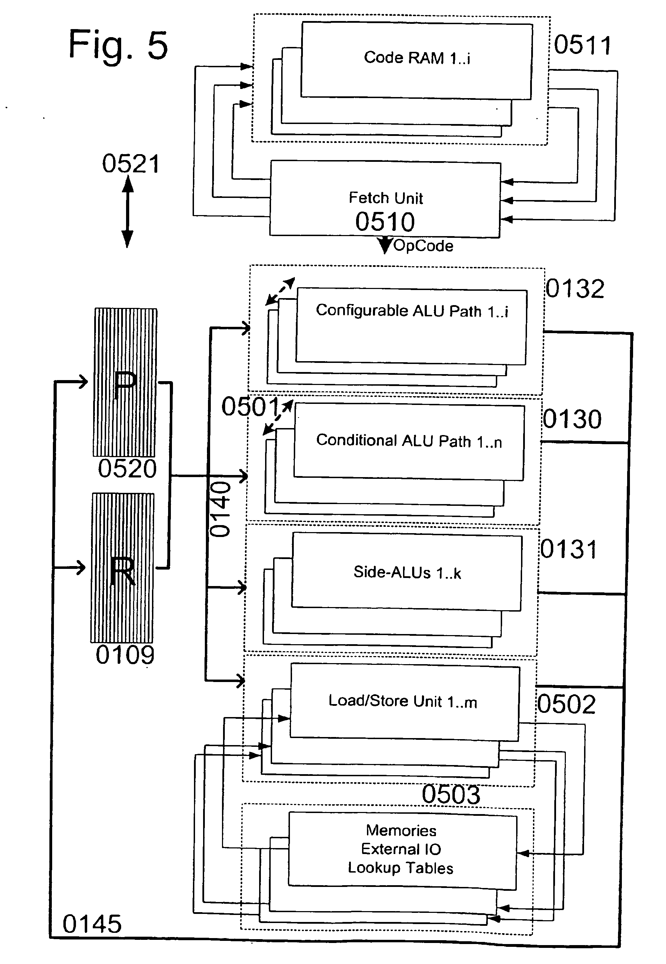

Fig. 5 shows an overall design of an XMP processor module. In the core, ALU-stage arrangements 0130 are provided that can exchange data with one another as necessary in the way disclosed for the preferred embodiment shown in Fig. 4 as indicated by the data path arrow 0501. In parallel thereto, side-ALUs 0131 and load/store-units 0502 are provided, where again a plurality of load/store-units may be implemented accessing memory and/or lookup tables 0503 in parallel. The data processing unit 0130 and 0131 and load/store-unit 0502 are loaded with data (and status information) from the register 0109 via the bus system 0140. Results are written back to 0109 via the bus system 0145.

In parallel thereto, as OpCode-fetcher 0510 is provided and working in parallel, loading the subsequently following respective Opcodes. Preferably, a plurality of possible subsequent OpCodes are loaded in parallel so that no time is lost for loading the target OpCode. In order to simplify parallel loading of OpCodes, the OpCode-fetcher may access a plurality of code memories 0511 in parallel.

In order to allow for a simple and highly performing integration into an XPP processor and/or to allow for the coupling of a plurality of XMPs and/or a plurality of XMPs and XPPs, a particular register P0520 is implemented. The register acts as input-/output port 0521 to the XPP and to the XMPs. The port conforms to the protocol implemented on the XPP or other XMPs and/or translates such protocols. Reference is made in particular to the RDY/ACK handshake protocol as described in PCT/EP 03/09957, PCT/DE 03/00489, PCT/EP 02/02403, PCT/DE 97/02949.

Data input from external sources are written with a RDY flag into P setting the VALID-flag in the register. By the read access to the corresponding register, the VALID-flag is reset. If VALID is not set, the execution stops during register read access until data have been written into the register and VALID has been set. If the register is empty (no VALID), external write accesses are prompted immediately with an ACK-handshake. In case the register contains valid data, externally written data is not accepted and no ACK-handshake is sent until the register has been read by the XMP. For output registers, VALID and RDY are set whenever new data has been written in. RDY and VALID will be reset by receiving an ACK from external. If ACK is not set, the execution of a further register write access is stopped until data from external has been read out of the register and VALID has been reset. If the register is full (VALID) the RDY-handshake is signalled externally and will be reset as soon as the data has been read externally and has been prompted by the ACK-handshake. Without RDY being set the register can not be read from externally.

It has to be noted that whereas the above refers to one single stage for the register, registers comprising multiple register stages, e. g. FIFOs, can be implemented. For explanation of some of the protocols that may be used, reference is made to the disclosure of PCT/DE 97/02949, PCT/DE 03/00489, PCT/EP 02/02403.

### Fetch-unit

Fig. 6 shows an implementation of the OpCode-fetch-unit. The program pointer 0601 points to the respective OpCode of a cycle currently executed. Within one OpCode instruction a plurality of jumps to subsequent OpCodes may occur. It is to be distinguished between several kinds of jumps:
a) CONT is relative to the program pointer and points to the OpCode to be subsequently executed, loaded in parallel to the data processing. The processing of CONT corresponds to the incrementing of a program pointer taking place in parallel to the ALU data processing and to the loading of the next OpCodes of conventional processors according to the state of the art. Therefore, CONT does not need an additional cycle for execution.
b) JMP is relative to the program pointer and points to the OpCode to be executed subsequently that is jumped to. According to the JMP of the prior art, the program pointer is calculated anew and in the next cycle (t+1) a new OpCode is loaded which is then executed in cycle (t+2). Therefore, one data processing cycle is lost during processing of JMP.

During linear processing of program.code, the instruction CONT is executed with a parameter "one" being transmitted, corresponding to the common implementation of the program pointer. Additionally, this parameter transferred can differ from "one" thus causing a relative jump by adding this parameter to the program pointer, the jump being effected in the forward- or backward direction depending on the sign of the parameter. During the ALU-data processing the jump will be calculated and executed. A plurality of CONT-branches may be implemented thus supporting a plurality of jump targets without loosing an execution cycle. Shown are two CONT-branches 0602, 0603, one having for example a parameter "one" thus pointing to the instruction following immediately thereafter while the second can be e. g. -14 and thus having the effect of a jump to an OpCode stored fourteen memory locations back.

Multiple CONT-parameters, e. g. two, may be combined with the program pointer (as obtained by counting 0604, 0605) and a possible subsequent OpCode may be read from multiple, e. g. two code memories 0606, 0607. At the end of the ALU data processing the OpCode 0613 to be actually carried out is selected in response to the status signal, that is the jump target is selected at the end of the processing using the "virtual" path. Due to the fact that all possible OpCodes have been preloaded already, the data processing can continue in the cycle following immediately thereafter.

The execution of CONTs is comparatively expensive in view of the fact that the memory accesses to the code memory have to be executed in parallel and/or a multiple and/or a multi-port memory has to be used to allow for parallel loading of several OpCodes.

In contrast, JMP corresponds to the prior art. In case of a JMP the relative parameters 0608, 0609 are combined with a program pointer and a program pointer is using the multiplexer 0612. In the next clock-cycle (cycle+1) the code memory 0607, 0606 is addressed via the program pointer. The jump to the next OpCode is carried out and in response, the next OpCode is carried out in the next cycle (cycle+2). Therefore, although one processing cycle is lost, no additional costs are involved.

In order to optimize a combination of cost efficiency and performance the XMP implements both methods. Within one complex OpCode a set of subsequent operations can be jumped to directly and without additional delay cycles using CONT. If additional jumps within a complex OpCode are used, JMP may be used.

Furthermore, there is a particular method of executing CALLs. Basically, CALLs may be implemented corresponding to the prior art using an external stack not shown in Fig. 6. Shown, however, is an optional and/or additional way of implementing a minimum return address stack in the fetch unit. The stack is designed from a set of registers 0620, into which the addresses are written to which the program pointer will point next, 0623. In one embodiment, the stack pointer is implemented as an up-down-counter 0621 and points to the current writing position of the stack, while the value (pointer+1) 0622 is pointing to the current read position. Using a demultiplexer 0625, 0623, the next program pointer address is written into the register 0620 using a multiplexer 0624 for reading from the stack. Using the small register stack a number of CALL-RET jumps determined by the number of the register 0620 may be executed without requiring memory stack access. In this way, the implementation of a stack is not needed for small processors and at the same time the access is more performance-efficient than the usual stack access.

Commonly, the stack registers need not be saved by or for target applications aimed at, compare for example CABAC. However, should this be the case, a certain amount of registers could be duplicated and switched following a jump and/or optionally a stack is implemented, preferably used only when absolutely necessary and accepting the inherent loss of performance connected therewith.

In the implementation presented as an example two CONT and two JMP are provided; however, it should be explicitly noted that the number is depending only on the implementation and can vary arbitrarily between 0 and n and can be different in particular for CONT and JMP.

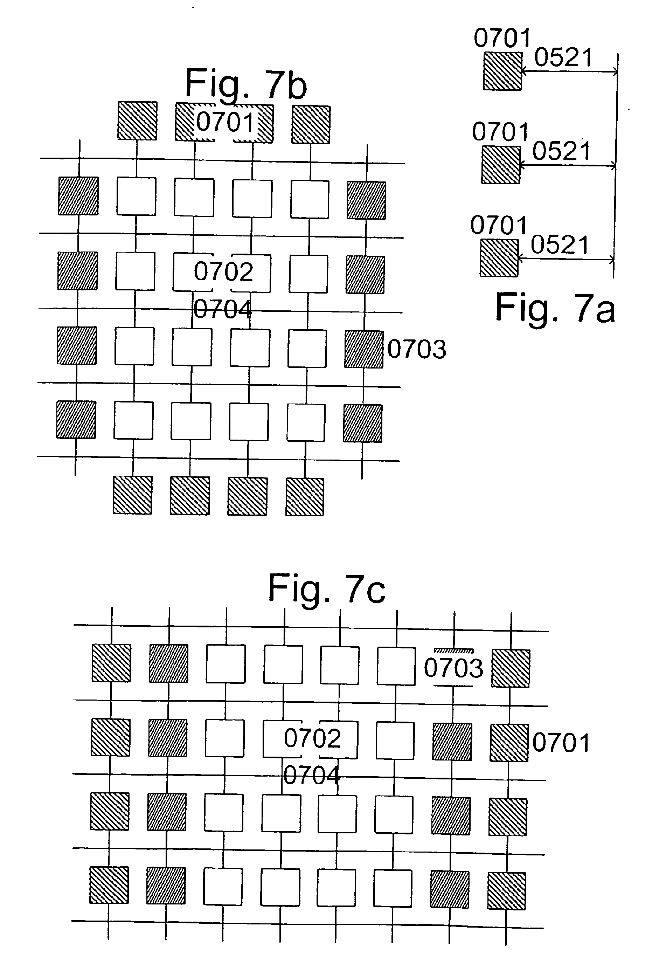

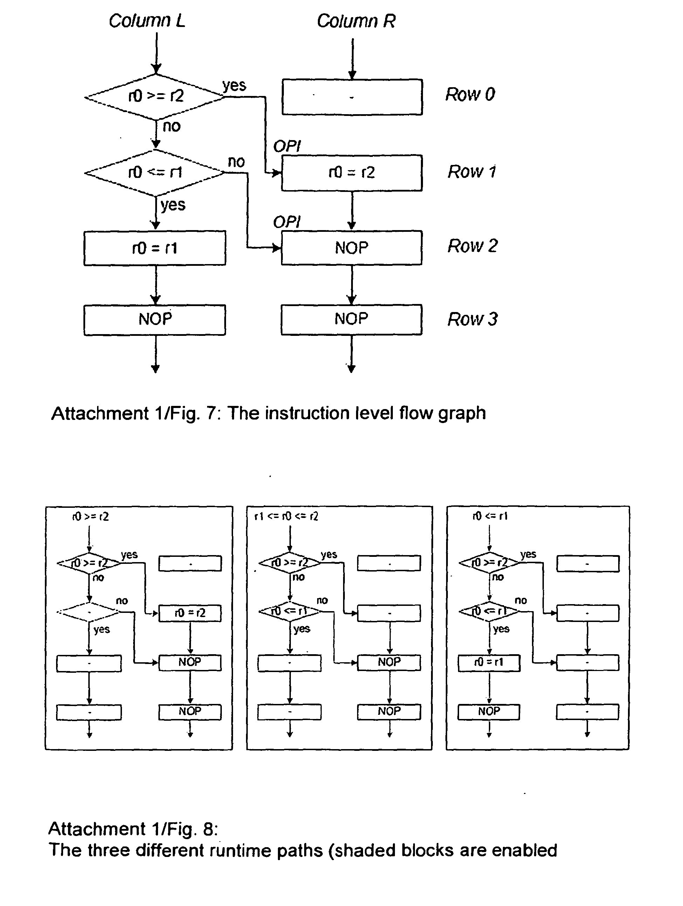

Fig. 7 shows the interconnection of a plurality of XMPs and their coupling to an XPP.

In Fig. 7a a plurality of XMPs (0701) are connected via the P-register and the port 0521 with each other. Preferably, a bus system configurable at runtime such as those used in the XPP is used. In this way, all registers of P can, as is preferred, be connected via the bus system independently. In this respect, the register P corresponds to an arrangement of a plurality of input-/output-registers of the XPP technology as described for example in PCT/DE 97/02949, PCT/DE 98/00456, PCT/DE 03/00489, PCT/EP 01/11593 and PCT/EP 03/09957.

Fig. 7b and Fig. 7c show possible couplings of the XMP 0701 to an XPP processor, here shown to comprise an array of ALU-PAEs 0702 and a plurality of RAM-PAEs 0703 connected to each other via a configurable bus system 0704. As described in Fig. 7a, the XMP disclosed is connected using the bus system 0704 in one embodiment.

It is to be noted explicitly that basically XMP processors can be integrated into the array of an XPP in the very same manner as an ALU-PAE, a SEQ-PAE and/or instead of SEQ-PAEs, in particular in an XPP according to PCT/EP 03/09957 or in the way any other PAE could be integrated.

### Examples of programming

The subsequent code examples are given for an XMP processor having the following parameters:
● register set R: 16 registers
● register set P: 16 registers
● 4 ALU-stages (0404, 0405, 0406, 0407)
● 2 parallel ALU-paths (0401 and 0402)
● 1 side ALU: multiplier
● 1 load-store-unit
● 2 parallel code-RAMs
● 2 CONT-jumps per operation (e.g. HPC and LPC, cmp. attachment)
● 2 JMP-jumps per operation

Video-Codecs according to best art known use the CABAC algorithm for entropy coding. The most relevant routine within the CABAC is shown subsequently as 3-address-assembler-code:

| | | |
|---|---|---|
| | LOAD state, *stateptr | ; RangeLPS = ... |
| | SHR range2, range, # 14 | |
| | AND range2, range2, #3 | |
| | SHL state2, state, #2 | |
| | OR adr1, state2, range2 | |
| | ADD adr1, adr1, Ipsrangeptr | |
| | LOAD rangelps, *adr1 | |
| | SUB range, range, rangelps | ;range -= ... |
| | AND bit, state, # 1 | ; bit = (*state) & I |
| | CMP low, range | ; if (low < range) |
| | JMP GE L1 | ;jump if previous condition met |
| | ADD state3, mpsstateptr, state | ;*state = mps_state[*state] |
| | LOAD state4, *state3 | |
| | STORE stateptr, state4 | |
| | JMP L2 | |
| L1: | XOR bit2, bit, #1 | |
| | SUB low, low, range | |
| | MOV range, rangelps | |
| | ADD state3, Ipsstateptr, state | ; *state = Ips_state[*state] |
| | LOAD state4, *state3 | |
| | STORE stateptr, state4 | |
| L2: | CMP range, Ox10000 | ;renorm_cabac_decoder function |
| | JMP GE L3 | ;while-loop exit condition |
| | SHL range, range, #2 | |
| | SHL low, low, #2 | |
| | SUB bitsleft, bitsleft, # 1 | ;-bits_left |
| | JMP NZ L2 | ;jump if not zero |
| | CMP bytestreamptr, bytestreamendptr | |
| | JMP GE L4 | |
| | LOAD byte, *bytestreamptr | |
| | ADD low, low, byte | ;low += *bytestream |
| L4: | ADD bytestreamptr, bytestreamptr, # 1 | |
| | MOV bitsleft, #8 | |
| | JMP L2 | |
| L3: | | |

The routine contains 34 assembler OpCodes and correspondingly at least as many processing cycles. Additionally, it has to be considered that jumps normally use two cycles and may lead to a pipeline stall requiring additional cycles.

The routine is recoded subsequently so that it can be executed using an XMP processor, having in its preferred embodiment four ALU-stages and no pipeline between the ALU-stages. Furthermore, two parallel ALU-stage parts are implemented, the second part executing an OpCode-implicit jump without need for an explicit jump OpCode or without risk of a pipeline stall. Within the ALU-path, that is both ALU-strip-paths in common, implicit conditional jumps can be executed. During processing of an OpCode both possible subsequent OpCodes are loaded in parallel and at the end of an execution the OpCode to be jumped to is selected without requiring an additional cycle. Furthermore, the processor in the preferred embodiment comprises a load/store-unit parallel to the ALU-stage paths and executing in parallel.

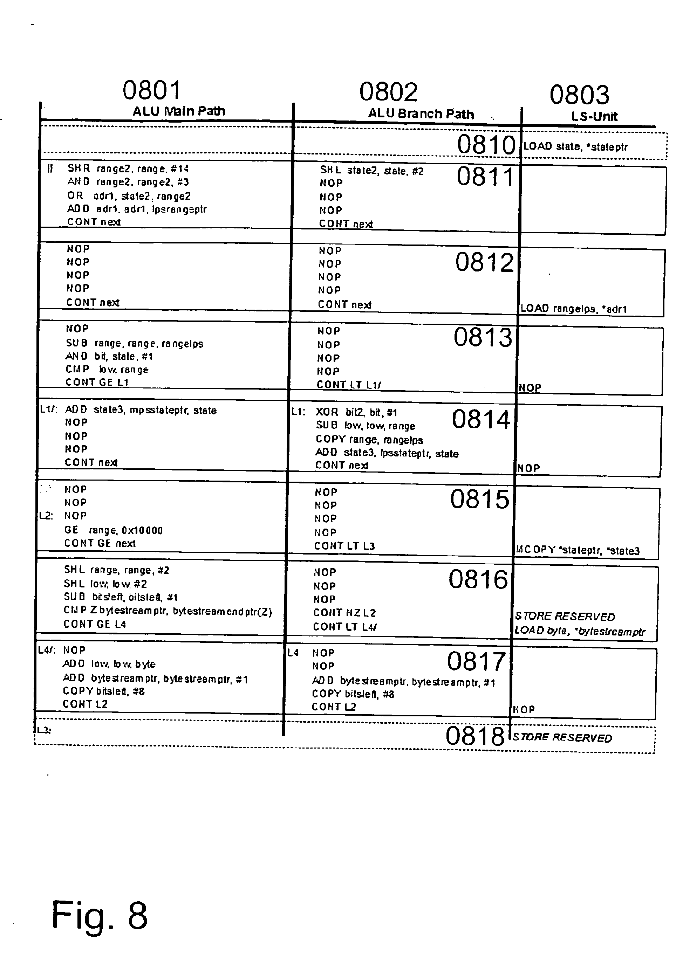

The design of the different elements is shown in Fig. 8. 0801 denotes the main ALU-stage path, 0802 denotes the ALU-stage path executed in case of a branching. 0803 includes the processing of the load-/store-unit, one load-/store operation being executed per four ALU-stage operations (that is during one ALU-stage cycle).

Corresponding to the frames indicated (0810, 0811, 0812, 0813, 0814, 0815, 0816, 0817,0818), four ALU-stage instructions form one OpCode per clock cycle. The OpCode comprises both ALU-stages (four instructions each plus jump target) and the load-/store-instruction.

In 0811 the first instructions are executed in parallel in 0801 and 0802 and the results are processed subsequently in data path 0801.

In 0814 either 0801 or 0802 are executed.

In 0816 the execution is either stopped following SUB using CONT NZ L2 or continued using CMP. Depending on the result of CMP, the execution is either continued using CONT GE L4 or CONT LT L4/. It should be noted that in this example three CONTs within the OpCode occur which is not allowed according to the embodiment in the example. Here, a CONT would have to be replaced by a JMP.

MCOPY 0815 copies the memory location *state3 to *stateprt and reads during execution cycle 0815 the data from state3. In 0816 data is written to *stateptr; simultaneously read access to the memory already takes place using LOAD in 0816. For jumping into the routine, the caller (calling routine) executes the LOAD 0804. When jumping out of the routine therefore the calling routine has to attend to not accessing the memory for writing in a first subsequent cycle due to MCOPY.

The instruction CONT points to the address of the OpCode to be executed next. Preferably it is translated by the assembler in such a way that it does not appear as an explicit instruction but simply adds the jump target relative to the offset of the program pointer.

The corresponding assembler program can be programmed as listed hereinafter: three {} brackets are used for the description of an OpCode, the first bracket containing the four instructions and the relative program pointer target of the main ALU-stage path, the second bracket including the corresponding branching ALU-stage path and the third bracket determining an OpCode for the load-/store-unit.

Assembler code construction:

```
L:  {               main-ALU-stages instructions (4)
                   jump to next OpCode
    }
L/: {
                    branching-ALU-stages instructions (4)
                   jump to next OpCode
     }
     {
                   load-store instruction (1)
     }
```

During execution of four ALU-stages instructions only one load-store instruction is executed, as due to latency and processor core external accesses more runtime is needed. For each bracket of the main- and branching-ALU-stage block a label can be defined specifying jump targets as known in the prior art. For example, L: as indicated and L/: as indicated is used for the inverse jump target.

There is no need to define a jump to the next instruction (CONT) as long as the next OpCode to be executed is the one to be addressed by the program pointer +1 (PP++).

Furthermore, no "filling" NOPs are needed.

```
     {
           SHR range2, range. #14
           AND range2. range2. #3
     }{
     }{
           LOAD state, *stateptr
     }
     {
           SHL state2, state, #2
           OR adr1, state2, range2
           ADD adr1, adr1, Ipsrangeptr
     }{
     }{
     }
      {
     }{
      }{
           LOAD rangelps, *adr1
      }
      {
           SUB range, range, rangelps
           AND bit, state, #1
           CMP low, range
           CONT GEL1
      }{
           CONT LT L1/
      }{
      }
 L1/: {
           ADD state3. mpsstateptr, state
           CONT next
 L1 : }{
           XOR bit2, bit, # 1
           SUB low, low, range
           MOV range, rangelps
           ADD state3, Ipsstateptr, state
      }{
      }
 L2: {
           CMP range. 0x10000
           CONT GE Next
 L2/: }{
           CONT L3(C)
      }{
           MCOPY *stateptr, *state3
      }
      {
           SHL range, range. #2
           SHL low, low, #2
           SUB bitsleft, bitsleft, #1
           CONT Z next
      }{
           CONT NZ L2
      }{
                 ; RESERVED (MCOPY)
      }
      {
           CMP bytestreamptr, bytestreamendptr
           CONT GE L4
     }{
           CONT LT L4/
     }{
           LOAD byte, *bytestreamptr
    }
    L4/: {
           ADD low, low, byte
           ADD bytestreamptr, bytestreamptr, #1
           MOV bitsleft, #8
           CONT L2
     }{
           ADD bytestreamptr, bytestreamptr, #1
           MOV bitsleft, #8
           CONT L2
     }{
     }
     L3:
```

### Optimized implementation

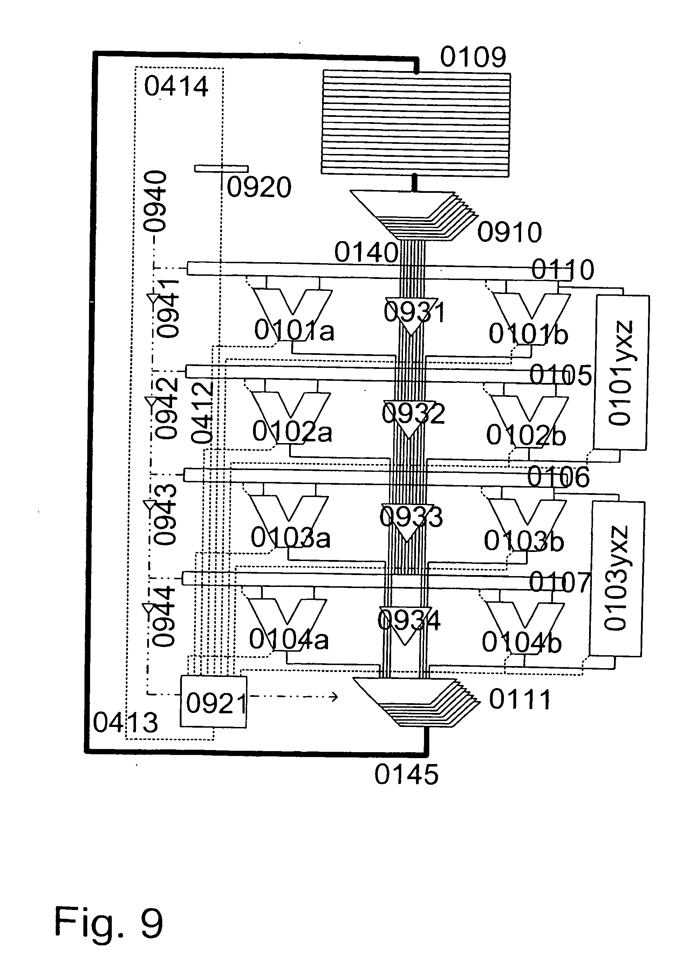

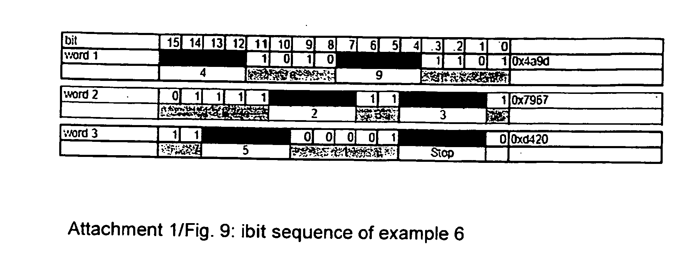

Fig. 9 shows in detail a design of a data path according to the present invention, wherein a plurality of details as described above yet not shown for simplicity in Fig. 1-4 is included. Parallel to two ALU-strip-paths two special units 0101xyz, 0103xyz are implemented for each strip, operating instead of the ALU-path 0101..4b. The special units can include operations that are more complex and/or require more runtime, that is operations that are executed during the runtime of two or, should it be implemented in a different way and/or wished in the present embodiment, more ALU-stages. In the embodiment of Fig. 9, special units are adapted for example for executing a count-leading-zeros DSP- instruction in one cycle. Special units may comprise memories such as RAMs, ROMs, LUTs and so forth as well as any kind of FPGA circuitry and/or peripheral function, and/or accelerator ASIC functionality. A further unit which may be used as a side-unit, as an ALU-PAE or as part of an ALU-chain is disclosed in attachment 2.

Furthermore, an additional multiplexer stage 0910 is provided selecting from the plurality of registers 0109 those which are to be used in a further data processing per clock cycle and connects them to 0140. In this way, the number of registers 0109 can be increased significantly without enlarging bus 0140 or increasing complexity and latency of multiplexers 0110, 0105 ... 0107. The status register 0920 and the control path 0414, 0412, 0413 are also shown. Control unit 0921 surveys the incoming status signal. It selects the valid data path in response to the operation and controls the code-fetcher (CONT) and the jumps (JMP) according to the state in the ALU-path.

It has been proven by implementing the unit that in view of the signal delay and the power dissipation of the data bus it is preferable to use a chain of driver stages instead of one single driver stage following multiplexer 0110 or instead of implementing a tree structure of drivers, the chain being constructed preferably in parallel to the ALUs to amplify the signals from the registers. By implementing the drivers in parallel to the ALUs, smaller, more energy efficient drivers can be used (0931, 0932, 0933, 0934). Their high delay is acceptable, since even in the most energy efficient and thus slowest variant of the drivers the buffered signals are transferred faster to downstream ALUs than signals can be transferred to downstream ALUs via the ALUs parallel to the driver. The drivers amplify both the signals of the data register 0109 as well as those of the respective previous ALU-stages. It should be understood that these drivers are not considered vital and are thus purely optional.

In implementing the unit, a further problem occurs in that in case the optionally provided registers in the multiplexer stages 0105, 0106, 0107 are not used, all signals run through the entire gates of the ALU-paths in an asynchronous way. Accordingly, a significant amount of glitches and hazards is caused by switching through successively the logic gates, the glitches and hazards thus comprising no information whatsoever. In this way, on the one hand a significant amount of unwanted noise is created while on the other hand a large amount of energy for recharging the gates is needed. This effect can be suppressed by generating a signal 0940 at the beginning of the processing controlled by the clock unit and directed into a delay chain 0941, 0942, 0943, 0944. The delay members 0941 ... 0944 are designed such that they delay the signal for the maximum delay time of each ALU-stage. After each delay stage the signal delayed in this manner will be propagated to the stage of the corresponding multiplexer unit 0105...0107 serving there as an ENABLE-signal to enable the propagation of the input data. If ENABLE is not set, the multiplexers are passive and do not propagate input signals. Only when the ENABLE-signal is set, input signals are propagated. This suppresses glitches and hazards sufficiently since the multiplexer stages can be considered to have a register stage effect in this context. It should be understood that this hazard/glitch reduction is not considered vital and thus is purely optional.

It should be noted that in cases where energy consumption is of concern, a latch can be provided at the output of the multiplexer stage, the latch being set transparent by the ENABLE-signal enabling the data transition, while holding the previous content if ENABLE is not set. This is reducing the (re)charge activity of the gates downstream significantly.

### Optimization of jump operations and configurable ALU-path

The comparatively low clock frequency of the circuit and/or the circuitry and/or the I/O constructed therewith allow for a further optimisation that makes it possible to reduce the multiple code memory to one. Here, a plurality of code-memory accesses is carried out within one ALU-stage cycle and the plurality of instruction fetch accesses to different program pointers described are now carried out sequentially one after the other. In order to carry out n instruction fetch accesses within the ALU-stage clock cycle, the code memory interface is operated with the n-times ALU-stage clock frequency.

If the ALU-path is completely programmable, a disadvantage may be considered to reside in the fact that a very large instruction word has to be loaded. At the same time it is, as has been described, advantageous to carry out jumps and branches fast and without loss of clock cycles thus having an increased hardware complexity as a result.

The frequency of jumps can be minimized by implementing a new configurable ALU-unit 0132 in parallel to the ALU-units 0130 and 0131 embedded in a similar way in the overall chip/processor design. This unit generally has ALU-stages identical to those of 0130 as far as possible; however, a basic difference resides in that the function and interconnection of the ALU-stages in the new ALU-unit 0132 is not determined by an instruction loaded in a cycle-wise manner but is configured. That means that the function and/or connection/interconnection can be determined by one or more instructions word(s) and remains the same for a plurality of clock cycles until one or more new instruction words alter the configuration. It should be noted that one or more ALU-stage paths can be implemented in 0132, thus providing several configurable paths. There also is a possibility of using both instruction loaded ALUs and configurable elements within one strip.

In using a jump having a particular jump instruction or being characterized by for example an exception address, program execution can be transferred to one (or more) of the ALU-stages in 0132 which are thus activated to load data from the register file, process data and write them back, the register sources and targets being preconfigured.

Now, it is possible to configure core routines used frequently and/or sub-routines to be jumped to in a fast manner into one or a plurality of such preconfigured and/or configurable ALU-stages. For example, the core of the CABAC algorithm can be configured in one or more of these preconfigured ALU-stages and then be jumped to without loss of clock cycles. In such a case, no operation for loading CABAC instructions other than a calling or jumping command to invoke the preconfigured algorithms is needed, accelerating processing while reducing power consumption due to the decreased loading of commands.

In order to implement configurable ALU-stages, these can either be multiplied and/or a configuration register is simply multiplied and then one of the configuration registers is selected prior to activation.

The possibility to implement methods of data processing such as wave reconfiguration and so forth in the configurable ALU-stages is to be noted (compare e.g. PCT/DE 99/00504, PCT/DE 99/00505, PCT/DE 00/01869.

It should be noted that the implementation of a plurality of configurable ALU-stages has proven to be particularly energy efficient. Furthermore, as the parallel loading of a plurality of OpCodes during one execution cycle (in order to enable fast jumps) is not needed, the corresponding memory interface and the code memory can be built significantly smaller thus reducing the overall area despite the additional use of configurable ALU-stages.

### Example CABAC dispatcher

The assembler code of a dispatcher is, for better understanding of its implementation, indicated as follows:

| | |
|---|---|
| init: | MOV range, #0x1 fe |
| | IBIT offset, #9 |
| | |
| entry: | MOV cmd, p0 |
| | CMP cmd, 0x8000 |
| | CONT GE dispatch |
| | CMP cmd, 276 |
| | CONT EQ terminate |
| decode: | |
| | |
| dispatch: | CMP cmd, 0x8001 |
| | CONT EQ init |

A first XMP implementation is described hereinafter. The instruction JMP is an explicit jump instruction requiring one additional clock cycle for fetching the new OpCode as is known in processors of the prior art. The JMP instruction is preferably used in branching where jumps are carried out in the less performance relevant branches of the dispatcher.

```
 init: {
                 MOV range, #01x1fe
                 IBIT offset, #9
           }{
           }{
           }
 entry: {
                 MOV cmd, p0
                 CMP cmd, 0x8000
                 CONT GE dispatch
                 CMP cmd, 276
                 JMP EQ terminate
                 CONT decode
           }{
           }{
           }
 dispatch: {
                 CMP cmd, 0x8001
                 CONT EQ init
                 CONT bypass
           }{
           }{
           }
```

The routine can be optimised by using the conditional pipe capability of the XMP:

```
 init: {
                 MOV range, #01x1fe
                 IBIT offset, #9
           }{
           }{
           }
           entry: {
                 MOV cmd, p0
                 CMP cmd, 0x8000
                 CMP LT cmd, 276 ; Conditional-Pipe
                 JMP EQ terminate
                 CONT decode
           }{
                 NOP
                 NOP
                 CMP cmd, 0x800 ; Conditional-Pipe
                 JMP EQ init
                 CONT bypass
           }{
           }
```

The device of the present invention can be used and operated in a number of ways.

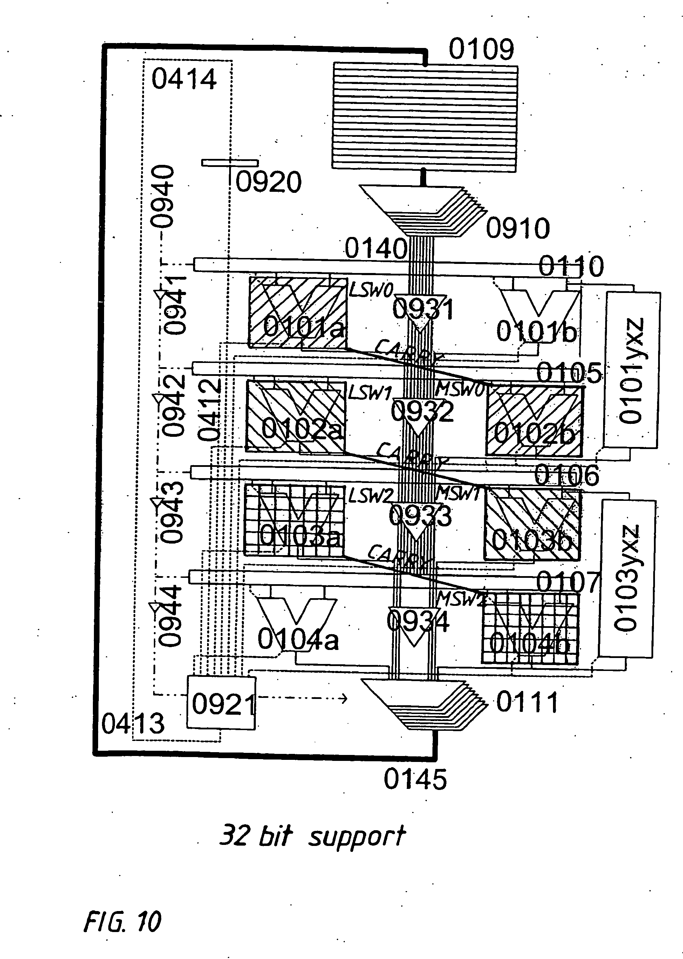

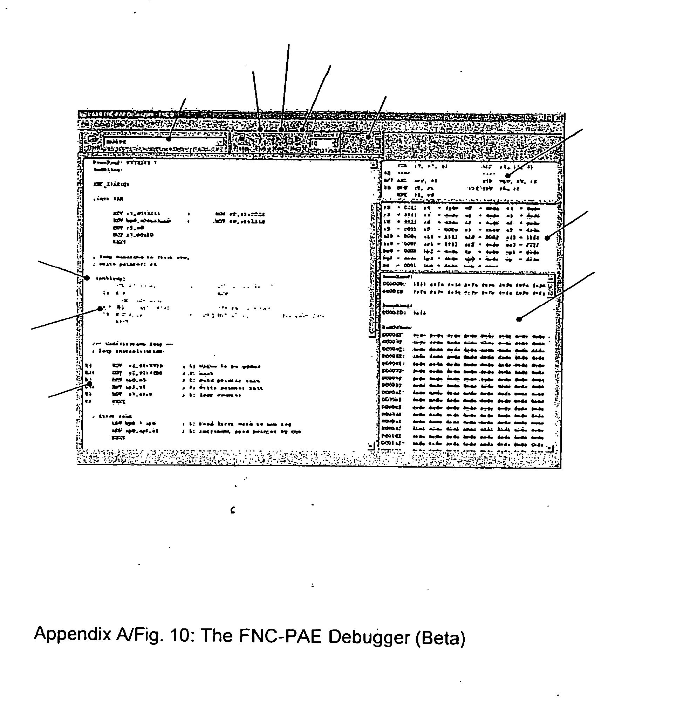

In Figs10, a way of obtaining double precision operations is disclosed. In the figure, a carry-signal from the result on one ALU-stage is transferred to the ALU-stage in the next row on the opposite side. In this way, the upper ALU can calculate the lower significant word result as well as the carry of this result and the lower ALU-stage calculates the most significant word MSW by taking account of the carry-information; for example, in the upper stage ALU on the one side, an ADD can be calculated whereas in the opposite half of the subsequent ALU-stage an ADDC (add-carry) is implemented. It is to be noted that as shown in Fig. 10 a plurality of double precision operations can be carried out in the typical embodiment. For example, if four stages of two 16-bit ALUs are provided in an embodiment, three 32-bit double precision operations can be carried out simultaneously by using the arrangement and connection shown in Fig. 10. The remaining two ALUs can be used for other operations or can carry out no operations.

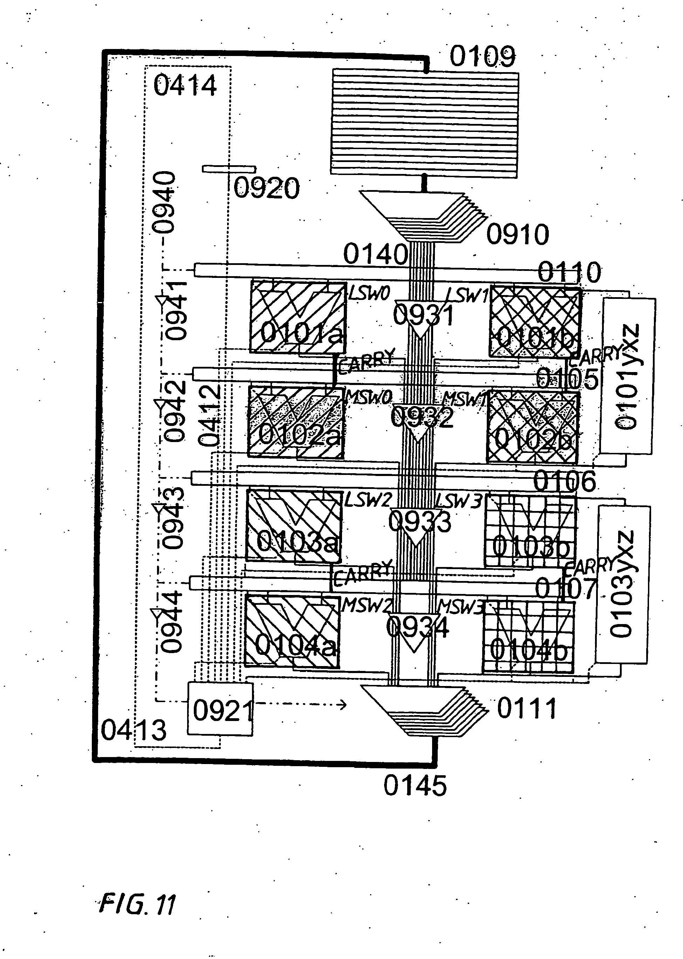

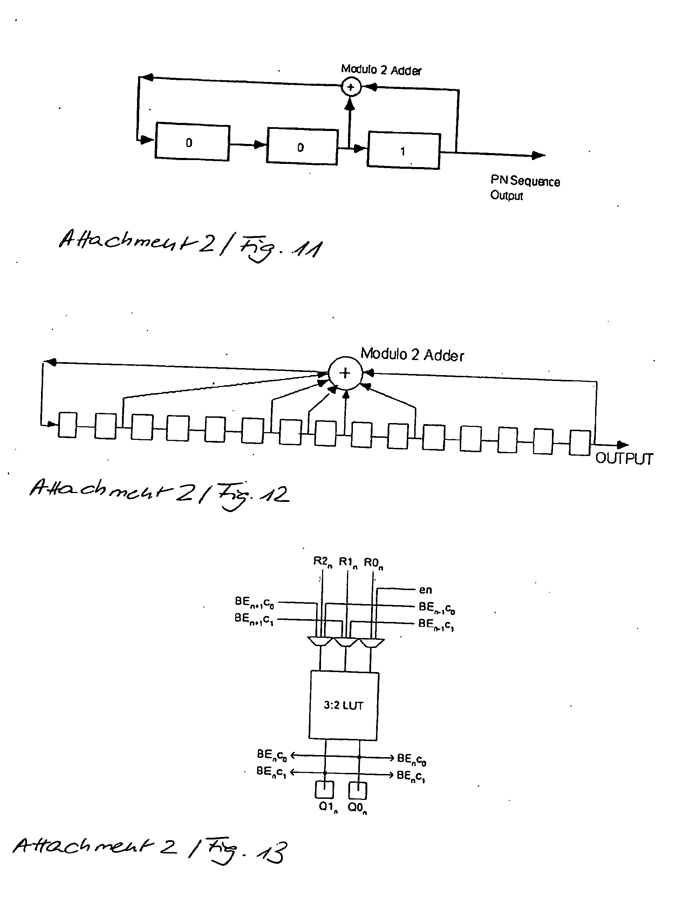

An alternative implementation using different code instructions is shown in Fig. 11. Here, the upper ALU-stage is calculating the least significant word whereas the subsequent ALU-stage is calculating the most significant word, again taking into account, of course, the carry-signal information.

It is to be noted also that the idea of obtaining double precision could be extended to arrangements having more than two columns. In this context, the average skilled person is explicitly advised that although using two columns in the device of the invention is preferred, it is by no means limited to this number. Furthermore, it is feasible in cases where more than two rows and/or columns are provided, to even carry out triple precision or n-tuple precision using the principles of the present invention. It should also be noted that in the typical embodiment, a carry-information will be available to subsequent ALU-stages. Accordingly, no modification of the ALU-arrangement of the present invention is needed.

The embodiment of Fig. 11 does not need any additional hardware connection between the flag units of the respective ALUs. However, for the embodiment of Fig. 10, additional connection lines for transferring CARRY might be provided.

It is also to be anticipated that the way of processing data is highly preferred and advisable in VLIW-like structures adapted to status propagation according to the principle laid out in the present disclosure. It is to be noted that the transferral of status information relating to operand processing results and/or evaluation of conditions from one ALU to another ALU, e. g. one capable of operating independently in the same clock cycle and/or in the same row, is advantageous for enhancing VLIW-processors and thus considered an invention per se.

The transferral of CARRY information from one stage to the next either in the same column or in a neighboring column is not critical with respect to timing as the CARRY information will arrive at the ALU of the subsequent stage approximately at the same time as the input operand data for that ALU. Accordingly, a combination of transferring status information such as CARRY signals to subsequent stages and the exchange of the information regarding activity of neighboring ALUs on the same stage which is not critical in respect to timing either, is allowed in a preferred embodiment. In particular, in a particularly preferred embodiment the information regarding activity of a given cell is not evaluated at the same stage but at a subsequent stage so that the cross-column propagation of status information is not and/or not only effected within one stage under consideration but is effected to at least one neighboring column downstream. (The effects with respect to maximum peak performance of an embodiment like that will be obvious to the skilled person.)

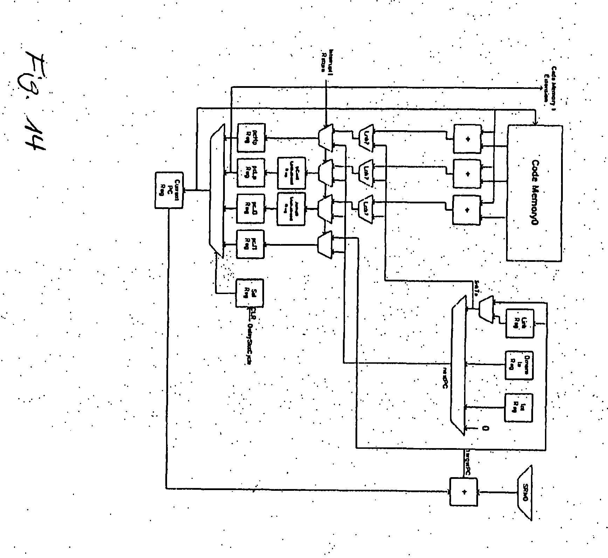

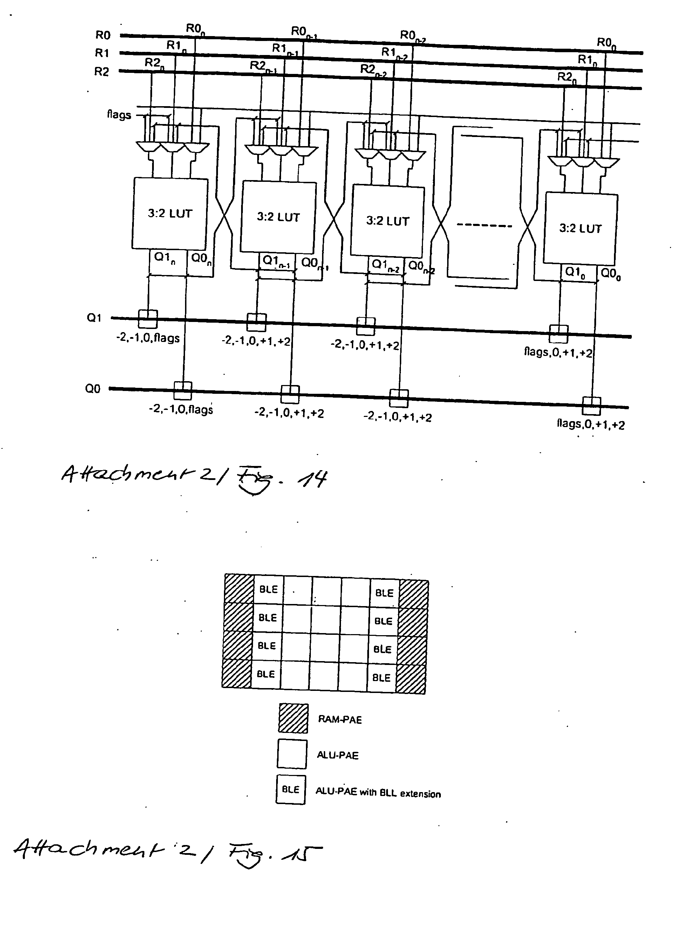

It should be noted that in a preferred embodiment, synthesis of the design gives evidence that it can be operated at approximately 450 MHz implemented in a 90 nm silicon process. It is to be noted that in order to achieve such performance, several measures have to be taken such as, for example, distributing multiplexers such as 0111 in Fig. 1 spatially and/or with respect to e. g. the OpCode-fetcher, a preferred high performance embodiment thereof being shown in Fig. 14, the operation thereof being obvious to the skilled person.

Whereas a complete disclosure of the present invention and/or inventions related thereto yet being independent thereof and thus considered to be subject matter claimable in divisional applications hereto in the future has been given to allow easy understanding of the present invention, the attachment hereto forming part of the disclosure as well will give even more details for one specific embodiment of the present invention. It should be noted that the attachment hereto is in no way to be construed to restrict the scope of the present invention. It will be easily understandable that where in the attachment necessities are spoken of and/or no alternative is given, this simply relates to the fact that there is considered to exist no other implementation of the one particular embodiment disclosed in the attachment that could be disclosed without confusing the average skilled person. This means that obviously a number of alternatives and/or additions will exist and be possible to implement even for those instances where they are not mentioned or stated to be not useful and/or not existent, any such statement being either a literal statement or a statement that can be derived from the attachment by way of interpretation.

However, the following should be noted with respect to the attachment:

In the attachment, reference is made to interfacing FNC-PAEs with an XPP. It should be noted again that in general terms, any protocol whatsoever can be used for interfacing and/or connecting the FNC, that is the preferred embodiment of the design of the present XMP invention. However, it will be obvious to the skilled person that any dataflow protocol is highly preferred and that in particular protocols like RDY/ACK, RDY/ABLE, CREDIT-protocols and/or protocols intermeshing data as well status, control information and/or group information could be used.

Furthermore, with respect to the architecture overview given in the attachment, it is to be stated that the general principle of the invention or a part thereof might be used to modify VLIW processors so as to increase the performance.

With respect to paragraph 2.6 of the attachment, where the OpCode structure of the arrangement of the present invention is shown, that arrangement being designated to be an "FNC-PAE" and/or and "XMP" in the attachment, it is to be noted that the CONT-command referred to above is designated to be HPC and LPC in the attachment as will be easily understood.

With respect to paragraph 2.8.2.1 of the attachment, it should be noted that the use of a link register is advantageous per se and not only in connection with the use multi-row- and/or multi-column ALU-arrangements of the present invention although it presents particular advantages here. By using a program structure where first a link-register is set to the address of a callee, then, in a later instruction the program pointer is set to the value previously stored in the link-register while simultaneously writing the return address of the subroutine called into the link-register. Then, in order to return from the subroutine, the program pointer is set again to the value of the link-register, a penalty-free call-return-implementation of a subroutine can be achieved. This is the case for any given processor architecture and is considered an invention per se.

Furthermore, when returning from the subroutine, the link-register can be set again to point to the start address of the subroutine. This enables the caller to call the subroutine again in only one cycle. For example, if in cycle (t) the last OpCode of the subroutine is executed, then in cycle (t+1) the caller checks a termination condition, sets the link-register to point back to itself, and jumps to the current content of the link-register, all in one OpCode and hence in one cycle. In cycle (t+2) the first OpCode of the subroutine is executed.

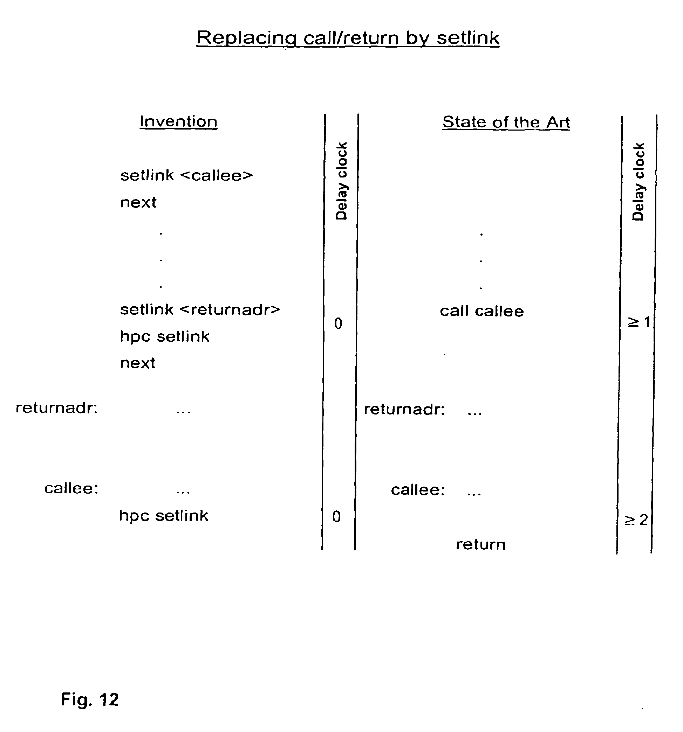

It should also be noted that using link-registers according to the (additional) invention disclosed herein, even nested calls are feasible without additional delay by pushing link-register contents.onto a stack in the background while executing other operations prior to calling further subroutines and by popping link-register information from the stack once the (if necessary nested) (sub)subroutine called from the subroutine is returned from. An example thereof is given in Fig. 12.

With respect to the examples disclosing the use of the "opposite path active" and the "opposite path inactive"(OPI/OPA-) conditions, the following is to be noted:
First, in the embodiment shown in Fig. 7 of paragraph 3.6.2, the OPI/OPA-conditions are propagated to ALU-stages of the opposite path at least one stage downstream. This ensures that no timing problems occur. However, it will be understood by the average skilled person, that provided a suitable design and/or sufficiently low clock frequencies are used for the circuitry which might be advantageous with respect to power consumption, it would be possible to propagate OPI/OPA- and/or other state information also within the same stage from one column (S) to another, preferably to a neighboring path (strip).

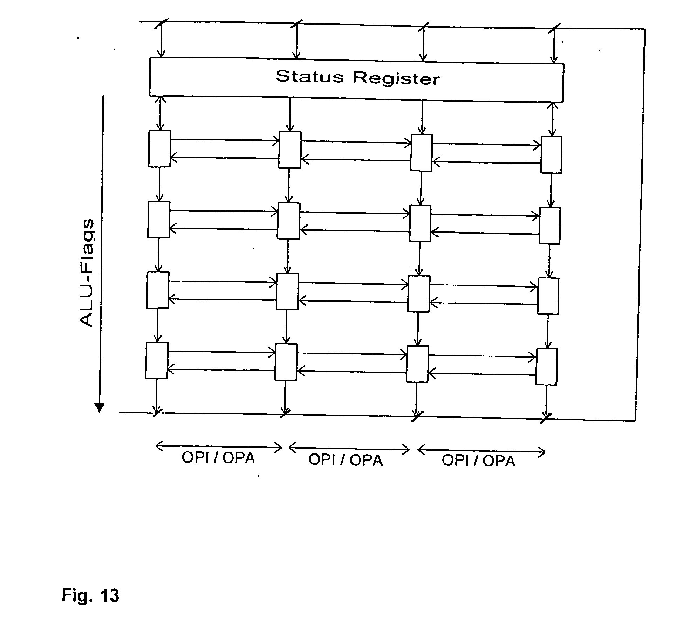

Furthermore, with respect to OPI/OPA-conditions in particular and to the exchange of status information from ALU to ALU, reference is made to Fig. 13. Here, four rows of ALUs arranged in four columns are shown together with a status register and the connections for transferring status information such as ALU-flags. It will be understood that Fig. 13 does not show any path for data (operand) exchange in order to increase the visibility and the ease of understanding. As is obvious, in the embodiment shown in Fig. 13, status information is transferred beginning from a status register to the first row of ALU-units, each ALU-unit therein receiving status information from the register for the respective column. From row to row, status information is propagated in the embodiment shown. Thus, there exists a path for ALU status information to the neighboring downstream ALU in the same column. Then, status information is also exchanged within one row, as indicated by the OPI/OPA-connection lines. In the embodiment shown, only next-neighbours are connected with one another. It will be understood however that this need not be the case and that the connectivity may be a function of the complexity of the circuit. Now, although the arrows between the ALUs in one row are indicated to be OPI/OPA-information, that is information regarding whether the opposite (neighboring) column is active (OPA) or inactive (OPI), it is easily feasible to transfer other information such as overflow flags, condition evaluation flags and so forth from column to column.

It is also noted that at the last row, status information is transferred via a suitable connect to the input of the status register.

The arrangement may now transfer status information from ALU to ALU as follows:
From row to row, ALU-flags may be transferred, for example overflow, carries, zeros and other typical processor flags. Furthermore, information is propagated indicating whether the previous (upstream) ALU-stage and/or ALU-stages have been active or not. In this case, the given ALU-stage can carry out operations depending on whether or not ALU-stages upstream in the same column have been active for the very clock cycle. The upper-most ALU-row (stage) will receive from the status register the output of the down-most ALU-stage obtained in the last clock cycle. Now, a particular advantage of the present invention resides in that the different columns are not only defining completely independent ALU-pipelines (or ALU-chains) but may communicate status information to one another thus allowing evaluations of branches, conditions and so forth as will be obvious from the above and hereinafter, transferring such information to neighboring columns, be it one, two or more ALUs in the same row or rows downstream. It is also possible to implement conditional execution in the ALU receiving such information. Some conditions that can be tested for are listed in a non-limiting way in table 29 of the attachment. Accordingly, such examples of conditions include "zero-flag set", "zero-flag not set", "carry-flag set", carry-flag not set", "overflow-flag set", "overflow-flag not set" and conditions derived therefrom, "opposite ALU-column is active", "opposite ALU-column is inactive", "if last condition (in one of the previous cycles) enabled left column (status register flag)", "if last condition (in one of the previous cycles) enabled right column (status register flag)", "activate ALU-column if deactivated". It will be understood that whereas in Fig. 13 only horizontal connections between columns are provided, other implementations might be chosen, providing alternatively and/or additionally non-horizontal connections between columns and/or horizontal and/or non-horizontal non-next-neighboring column connections.

The propagation of such information between different columns is helpful in programming efficient and performant programs in the following way:
First, assume that every ALU is to carry out one instruction, that is all columns are enabled. In such a case, if and as long as no status information is exchanged causing an ALU in one column to not process data any further in response to a condition met in the same or in a neighboring column, the ALUs simply are connected in a chained way. It is to be noted however, that any condition, if not true, may deactivate ALUs downstream in the column the condition is encountered.

Now, assume that a program part requires branching to two different branches. One branch can be processed in the left column, the other branch can be processed in the right column. It will be obvious that in the end, only one branch must be executed. Which branch is active will depend on a condition determined during processing. By transferring information regarding this condition, it becomes possible to evaluate only the branch where the condition is met, while preferably taking care that operations in the other branch that is of no concern since the condition for this branch is not met will not be carried out by disabling the corresponding column. Accordingly, information regarding such conditions can be used to activate or deactivate ALUs in the neighboring and/or in the same column. The deactivation can be done using e. g. the "opposite path inactive"- or "opposite path active"-conditions and the respective signals transferred between the columns. It should be noted that disabling a column can be implemented by simply not enabling the propagation of any data output therefrom. Despite the fact that data output from disabled ALUs is not effected in a valid way, it will be easily understood that status information from the disabled ALU and/or column will be propagated nonetheless.

Now, consider a case where disabling of a neighboring column ALU has the result that any ALU downstream thereof in the same neighboring column can be disabled as well. This can be effected by transferring in a first step disabling information to a first ALU in the neighboring column and then propagating the disabling information within this column to downstream ALUs in this column. Ultimately, such disabling information will be returned to the status register. This is needed for example in cases where in response to one prior condition, very long branches have to be executed. However, there are certain cases where only a limited number of operations in one branch is needed. Here, the previously disabled column has to be "made active" in the subsequent stage again. One example of such a re-activation can be found in cases where two branches merge again and the previously inactive column can be used again. This can be effected by the ACT-(activate-)condition activating an ALU-column downstream in a column of an ALU receiving said ACT-signal and preferably including the ALU receiving said signal if said column is deactivated. Instead of using an ACT-condition, it would obviously be possible to enable the corresponding ALUs and all ALUs downstream thereof in the same column unconditionally unless other conditions are met.

Furthermore, whereas it has been indicated above that a disabling might be useful to reduce power consumption in the evaluation of branches by disabling certain ALUs, it is preferred to implement other conditions as well in order to improve the data processing.

It is thus highly preferred to implement the following:

| | |
|---|---|
| OPI: | Should the ALU in the same row of the opposite column be inactive, then the ALU in the column under consideration is activated. |
| OPA: | Should the ALU in the same row of the opposite column be active, then the ALU in the same row and in the column under consideration is activated as well; otherwise, the ALU in the column considered is inactivated. |

In a preferred embodiment, the inactivation takes place no matter what the activation status of ALUs upstream in the column under consideration is. It will be easily understood by the average skilled person that a column deactivated for example by the evaluation of OPA-conditions can be reactivated in an ALU downstream using the activate-(ACT-)condition.

Furthermore, it is also highly preferred to implement evaluations of last conditions, occurring in one of the previous cycles. The attachment in table 29 lists two such conditions, namely LCL and LCR. These have the following meaning:

| | |
|---|---|
| LCL: | In case the last condition previously evaluated, no matter how far back the evaluation thereof has taken place, had enabled the left column, the ALU in the column under consideration is enabled. In case the last previous condition evaluated, no matter how far back the evaluation thereof has taken place, has disabled the left column, the ALU in the column under consideration is disabled. It should be noted that |
| | even although this condition checks whether the left column in the previous condition had been enabled, it can now be evaluated with effect to either the left and/or the right column using the LCL condition. |
| LCR: | In the same manner as LCL, the LCR-condition has the following effect: In case the previous condition activated the right column, then the ALU in the column under consideration is activated as well, no matter whether or not the column under consideration is the left or right column. However, in cases where the previous condition disabled the right column, the column under consideration will be deactivated as well. |

It should be noted for both LCL and LCR that if the column is active, it is not activated, but stays active. If it is not active, the LCL/LCR conditions have no effect.

It should again be noted that activation/deactivation using LCL, LCR, OPI or OPA are useful in VLIW architectures as well where they can be implemented by register enabling without having adverse effects on clock cycles and the like.

In more general terms, LCL-like conditions evaluate a last previous condition for one or a plurality of columns so as to determine the activation state of the column(s) under consideration for which the LCL-like condition is evaluated.

The following attachment 1 does form part of the present application to be relied upon for the purpose of disclosure and to be published as integrated part of the application.

### Chapter 1

### Foreword

The XPP Architecture is built in a strictly modular way from basic Processing Array Elements. The PAEs of the XPP-IIb Architecture are optimized for static mapping of flow graphs to the array.

Two basic types of PAEs for mapping of flow graphs exist:
■ ALU PAEs performs the basic arithmetic and logical operation
■ RAM PAEs can store data e.g. for intermediate results or are used s lookup tables.

The program flow can be steered by an independent one-bit event network. This allows conditional operations of the data flow and synchronization to external processors. The XPP features offer the required bandwidth and parallelism for algorithms with a relatively uniform structure and high data requirements on proceeding time (data-flow oriented).

However, most emerging signal processing algorithms consist not only of the data flow part but increasingly need complex control-flow oriented sections. Those sections should be processed by sequential processors which support a higher programming language such as C. One solution is to use in Systems on Chip (SoC) an embedded microprocessor such as ARM or MIPS for the control flow sections and an embedded XPP array for the data flow sections. This is a feasible solution in terms of performance and development efforts for applications which don't require extreme processing requirements for control flow sections.

But of-the-shelf microcontrollers cannot keep pace with the demands of new algorithms, especially in high definition video applications (HD-video).

PACT introduces now its *Function PAEs* (FNC-PAE) Architecture which can seamlessly be integrated into the XPP array. The FNC-PAEs consist of a set of parallel operating ALUs for typical control flow applications which allow a high degree of parallelism combined with zero overhead branching for sequential algorithms.

### 1.1 Application Space

The following summary gives an idea of algorithms where the XPP array with ALU-PAEs and RAM-PAEs provides a high performance programmable solution.
■ Cosine transforms for Video Codecs
■ Encoder motion estimation and decoder motion compensation
■ Picture improvement, Deblocking filters
■ Scaling and adapted filters
■ FFTs for baseband processing or Software defined radio

The *FNC-PAEs* extend the application space of the XPP array to algorithms such as
■ CAVLC for video codecs
■ CABAC arithmetic endoder/decoder
■ Huffman encoder / decoder
■ Audio processing
■ FFT address generation
■ Forward error correction for software defined radio, such as Viterbi, Turbo Coder.

Due to the sequential nature of the FNC-PAE, it can also be used as control processor for reconfiguration of the array and for communication with other modules in a SoC. Furthermore, FNC-PAEs provide hardware structures that allow efficient compiler designs.

Though FNC-PAEs have some similarities with VLIW architectures, they differ in many points. The FNC-PAEs are designed to for maximum bandwidth for control-flow handling where many decisions and branches in an algorithm are required.

This manual describes the concepts and architecture of the FNC-PAE and the assembler.

For details about the XPP array, based on ALU-PAEs and RAM PAEs refer to the XPP-IIb reference manual and the XPP-IIb programming tutorial.

### Chapter 2

### FNC-PAE Architecture

### 2.1 Integration into the XPP Array

Figure 1 shows the XPP array (XPP 40.16.8¹) with four integrated FNC PAEs.
¹ The first figure defines the number of ALU-PAEs, the second the number of RAM-PAEs and the third the number of FNC-PAEs. Since the 16 RAM-PAEs are always placed at the left and right edges, the numbering scheme defines also the 5×8 ALU-PAEs array at the core.

ALU-PAEs and RAM-PAEs are placed at the center of the XPP array. The FNC-PAEs are attached at the right edge of the XPP-IIb array to every row with their data flow synchronized ports. Like the XPP BREG, the dirction if bottom up with four input and four output ports. The FNC-PAEs provide additional ports for direct communication between the FNC-PAE cores vertically. The communication protocol is the same as with the horizontal XPP busses in the XPP array: data packets are transferred with point to point connections. Also evens can be exchanged between FNC-PAEs with vertical event busses. The 1/0 of the XPP array which is integrated into the RAM-PAEs is maintained. The-array is scalable in the number of rows and columns.

### 2.2 Interfacing to FNC-PAEs

As with the other PAEs, the interfacing is based on the XPP dataflow protocol: a source transmits single-word packets which are consumed by the receiver. The receiving object consumes the packets only if all required inputs are available. This simple mechanism provides a self-synchronising network. Due to the FNC-PAE's sequential nature, in many cases they don't provide results or consume inputs with every clock cycle. However, the dataflow protocols ensure that all XPP objects synchronize automatically to FNC-PAE inputs and outputs. Four FNC-PAE input ports are connected to the bottom horizontal busses, four output ports transfer data packets to the top horizontal busses. As with data, also events can be received and sent using horizontal event busses.

### 2.3 FNC-PAE Architecture Overview

The FNC-PAE is based on a load/store VLIW architecture. Unlike VLIW processors it comprises implicit conditional operation, sequential and parallel operation of ALUs within the same clock cycle.

Core of the FNC-PAE is the ALU data path, comprising eight 16-bit wide integer ALUs arranged in four rows by two columns (Figure 2). The whole data-path operates non-pipelined and executes one opcode in one clock cycle. The processing direction is from top to bottom.

Each ALU receives operands from the register file DREG, from the extended register file *EREG,* from the address generator register file *AGREG* or memory register *MEM-out.* All registers and datapaths are 16-bit wide. ALUs have access to the results of all ALUs located above. Furthermore, the top-row ALUs have access to up to one of 32 automatically synchronized 10 ports connecting the FNC-PAE to other PAEs, such as the array of ALU- and RAM-PAEs, or to any kind of processor.

The EREGs and DREGs provide one set of shadow registers¹, enabling fast context switching when calling a subroutine. The DREGs r2..r7 and all EREGs are duplicated, while the DREGs r0 and r1 allow transferring parameters.
¹ Currently the shadow registers are not yet supported

A Load/Store unit comprises an address generator and data memory interface. The address generator offers multiple base pointers and is supporting post-increment and post-decrement for memory accesses. The Load/Store unit interfaces directly with the ALU data-path. One Load/Store operation per execution cycle is supported².
² Note: The FNC-PAE's architecture allows duplication of the Load/Store unit to support multiple simultaneous data memory transfers as a future enhancement.

Up to 16 Special Function Units (*SFU*) operate in parallel to the ALU data-path. In contrast to the ALU data-path, SFUs may operate pipelined. SFUs have access to the same operand sources as the top row of ALUs and write back their results by utilizing the bottom left ALU. The SFU instruction set supports up to 7 commands per SFU. SFU0 is reserved for a 16×16 multiplier - and optionally a 16-bit divider. Special opcodes that support specific operations such as bit-field operations are integrated as SFUs.

The FNC-PAE gains its high sequential performance from the eight ALUs working all in the same cycle and its capability to execute conditions within the ALU data-path. ALU operations are enabled or disabled at runtime based on the status-flags of ALUs located above. The operation of ALUs can be controlled conditionally based on the status flags of the ALU on the same column the row above. The top ALUs use the input of the status via the status register of the last ALU of same column the cycle before. In parallel to the data-path, two candidate instructions are fetched simultaneously for execution in the next cycle¹. At the end of each processing cycle, one of these instructions is selected based on the overall status of the ALU data-path. This enables branching on instruction level to two targets without any delay. Additional conditional jump operations allow branching to two further targets causing a one cycle delay.
¹ Simultaneous instruction fetch requires two instruction memories (option)

Figure 2: PNC-PAE Overview

### 2.4 The ALU Data Paths

The ALU data-path comprises eight 16-bit wide integer ALUs arranged in four rows by two columns. Data processing in the left or right ALU column (path) occurs strictly from top to bottom. This is an important fact since conditional operation may disable the subsequent ALUs of the left or right path. The complete ALU datapath is executed within one clock cycle.

All ALUs have access to three 16-bit register files DREG (r0 .. r7), EREG (e0 .. e7), and AGREG (bp0 bp7). Additionally each row of ALUs has access to the previously processed results of all the ALUs above.

In order to achieve fast data processing within the ALU data-path the ALUs support a restricted set of operations: addition, subtraction, compare, barrel shifting, and boolean functions as well as jumps. More complex operations are implemented separately as SFU functions. Most ALU instructions¹are available for all ALUs, however some of them are restricted to specific rows of ALUs. Furthermore the access to source operands from the AGREGs, EREGs, I/O is restricted in some rows of ALUs, also the available targets may differ from column to column².
¹*Instructions* steer single ALUs. An opcode comprises the instructions for all ALUs and other information. An opcode is executed within one clock cycle.
² For details refer to chapter 2.12.2

The strict limitation enables data processing inside the data-path with minimum delays and without any pipeline stage. Furthermore, some restrictions allow to limit the required size of the program memory. Operands from the register file are fed into the ALUs. The ALU output of a row can be fed into the ALUs of the next row. Thus, up to four consecutive ALU operations per column can be performed within the same clock cycle. The final result is written to the register file or other target registers within the very same clock cycle. Status flags of the ALUs are fed into the next row of ALUs. The status flags of the bottom ALUs are stored in the Status Register. Flags from the status register are used by the ALUs of the first row and the instruction decoder to steer conditional operations. This model enables the efficient execution of highly sequential algorithms in which each operation depends on the result of the previous one.

### 2.5 Register File

The ALUs can access several 16-bit registers simultaneously. The general purpose registers DREGs (r0.. r7) can be accessed by all ALUs independently with simultaneous read and write. The extended registers EREG (e0 .. e7), the address generator registers bp0 ..bp7 and the ports can also be accessed by the ALUs however with restrictions on some ALUs. Simultaneous writing within one cycle to those registers is only allowed if the same index is used. E.g. if one ALUwrites to *e1*, another ALU is only allowed to write to *bp1*.

Reading data from the *mem-out* register directly into a register is planned. Currently, an ALU must read from *mem-out* and then transfer data to a register if required.

The DREGs and EREGS have a shadow registers, which enable fast context switch e.g. for interrupt routines. Shadow registers *r0* and *r1* are identical to *r0* rsp. *r1*. This allows transferring parameters when the shadow register set is selected. Shadow registers scan be selected with call and ret instructions.

### 2.6 Instruction Fetch and Decode

The instruction memory is 256 Bits wide. Table 1 shows the 256 bit wide general opcode structure of the FNC-PAE.

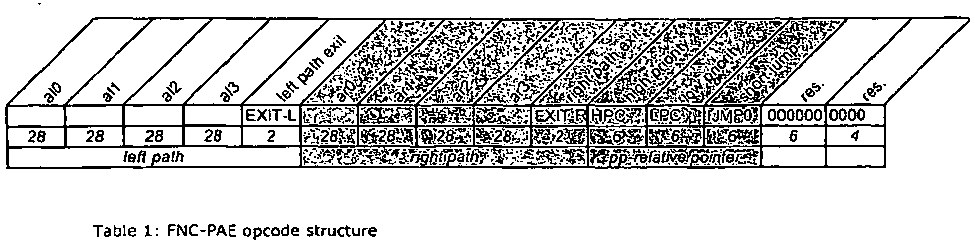

The opcode provides the 28-bit instructions for the eight ALUs. The function of the other bit fields is as below:
■ *EXIT- L, EXIT-R:* two bits specify which of the relative pointer *(HPC, LPC* or *IJMP0)* will be fetched for the next opcode. Separate exits for the left and right ALU column allow selection of two simultaneously fetched opcodes.
■ *HPC:* high priority continue: 6 bits (signed) specify the next opcode to be fetched relative to the current program pointer *PP. HPC* is the default pointer, since it is pre-fetched in any case. One code specifies to use the *Ink* register to select the next opcode absolutely.
■ *LPC:* low priority continue: as with HPC, 6 bits (signed) specify the next opcode to be fetched in case of branches. One code specifies to use the *Ink* register to point to the next opcode absolutely.
■ *IJMP0.* Implicit short jump: 6 bits (signed) specify the next opcode to be fetched relative to the current program pointer. Jumps require always one cycle delay since the next opcode cannot be pre-fetched.

The FNC-PAE is implemented using a two stage pipeline, containing the stages instruction fetch (*IF*) and execution *(EX). IF* comprises the instruction fetch from instruction memory and the instruction decode within one cycle. Therefore the instruction memory is implemented as fast asynchronous SRAM.

During *EX* the eight ALUs, the Load/Store unit and the SFU (special function units) execute their commands in parallel. The ALU data-path and the address generator are not pipelined. Both load and store operations comprise one pipeline stage. SFUs may implement pipelines of arbitrary depth (for details refer to the section 2.14).

In difference to usual processors the Program Pointer¹ *pp* is not incremented sequentially if no jump occurs. Instead, a value defined by the *HPC* entry of the opcode is added to the *pp*.
¹ We use the term "Program Pointer" to distinguish from "Program Counters" which increment unconditionally by one as usual in other microprocessors.

If two parallel instruction memories are available (implementation specific), two instructions will be fetched simultaneously. In this case *HPC* and *LPC* are added to *pp*, pointing to two alternative instructions. One of them defined by *HPC* is located in the main instruction memory and the other one defined by *LPC* is located in the additional parallel instruction memory. Thus, both instructions can already be fetched and the next opcode can be executed without delay. The jump section comprises relative jumps of +- 15 positions or absolute jumps via the Link Register *Ink.* With Jump and subroutine calls it is possible to select the shadow register files, which are used during execution of the subroutine.

### 2.7 Conditional Operation

Many ALU instructions support conditional execution, depending on the results the previous ALU operations, either from the ALU status flags of row above or - for the first ALU row - the status register, which holds the status of the ALUs of row 3 from results of the previous clock cycle. For a summary of conditions refer to chapter 3.1.7. When a condition is FALSE, the instruction with the condition and all subsequent instructions in the same ALU column are deactivated. The status flag indicating that a column was activated /deactivated is also available for the next opcode *(LCL* or *LCR* condition). A deactivated ALU column can only be reactivated by the *ACT* condition.

The conditions *LCL* or *LCR* provide an efficient way to implement branching without causing delay slots, as it allows executing in the current instruction the same path as conditionally selected in the previous opcode(s).

The *HPC, LPC* and *IJMP0* pointer can be used for branching based on conditions. Without a condition, the *HPC* defines the next opcode. It is possible to define one of the three pointers based on results of a condition for branch targets within the 6-bit value. Long jumps are possible with dedicated ALU opcodes.

### 2.8 Branching

Several instructions may modify the Program Pointer *pp*.

Multiple types of jump instructions are supported:
■ Opcode implicit program pointer modifiers using the *HPC, LPC* and *IJMP0* pointers
■ Explicit program pointer modifiers (i.e. ALU-instructions)
■ Subroutine calls and return via link register *(Ink)* and Stack
■ Interrupt calls and return via *IntInk* register
   Addresses are always referred as 256-bit words of the instruction memory (not as byte-addresses). Thus in the assembler opcodes are the direct reference for *pp* modifiers.

### 2.8.1 Opcode Implicit Program Pointer Modifiers

Implicit Program Pointer modifiers¹ are available with all opcodes and allow PP relative jumps by +/- 15 opcodes or 0 if the instruction processes a loop in its own. The pointer *HPC* or *LPC* (6 bit each) define the relative branch offset. The fields *EXIT-L* and *EXIT-R* define which of the pointers will be used. One *HPC* or *LPC* code is reserved for selection of jumps via the *Ink register.*
¹ Assembler statements: HPC, LPC, JMPS

### HPC - High Priority Continue

The HPC points to the next instruction to be executed relative to the actual pp. The usage of the HPC pointer can be specified explicitly in one of the paths (i.e. ALU columns). The EXIT-L or EXIT-R specify weather the HPC-pointer will point to the next opcode. In order to emulate a "normal" program counter, *HPC* is set to 1. The assembler performs this per default.

In conditional instructions, the "Else" statement (Assembler syntax: ! HPC <label>¹ ) defines to use the *LPC* pointer as branch offset if the condition is NOT TRUE. Otherwise, the LPC (default) or IJMP0 (if specified) is used as the next branch target. Note, that "Else" cannot be used with all instructions.
¹ The label is optional. If label is not specified *pp*+1 is used. If an absolute value (e.g. #3) is specified, it is added the value to the *pp* (e.g. *pp*+3).

### LPC - Low Priority Continue

The LPC points to the next instruction to be executed relative to the actual *pp.* The usage of the LPC pointer can be specified explicitly in one of the paths (i.e. ALU columns). This statement is evaluated only, if the path where it is specified is activated.

In conditional instructions, the "Else" statement (Assembler syntax: ! LPC <label>) defines to use the *LPC* pointer as branch offset if the condition is NOT TRUE. Otherwise, the HPC (default) or IJMP0 (if specified) is used as the next branch target. Note, that "Else" cannot be used with all instructions.

### IJMP0 - Short Jump

In addition to the *HPC* / *LPC,* the 6-bit pointer *lJMP0* points relatively to an alternate instruction and is used within complex dispatch algorithms.

The *IJMP0* points to the next instruction to be executed relative to the actual *pp.* The usage of the *IJMP0* pointer can be specified explicitly in one of the paths (i.e. ALU columns). This statement is evaluated only, if the respective path is activated.

In conditional instructions, the "Else" statement (Assembler syntax: ! JMPS <label>) defines to use the *IJMP0* pointer as branch offset if the condition is NOT TRUE. Otherwise, the HPC (default) or LPC (if specified) is used as the next branch target. Note, that "Else" cannot be used with all instructions.

Short jumps cause one delay slot which cannot be used for execution.

### 2.8.1.1 LPC Implementation Specific Behaviour

The FNC-PAE can be implemented either with one or two instruction memories:

### Implementation with one Instruction Memory

The standard implementation of the FNC-PAE will perform conditional jump operations with the LPC pointer, causing a delay slot since the next instruction for the branch must be fetched and decoded first. This hardware option is more area efficient since only one instruction memory is required.

### Implementation with two Instruction Memories

This high performance implementation of the FNC-PAE comprises two instruction memories allowing parallel access. In this case the instructions referenced by *HPC* and *LPC* are fetched simultaneously. The actual instruction to be executed is selected right before execution depending on the execution state of the previous instruction. This eliminates the delay slot even while branching with LPC thus providing maximum performance.

Programs using *LPC* can be executed on both types of FNC-PAE implementation. Since programs, which are written for the FNC-PAE should be compatible for both implementations (one or two instruction memories), the delay slot which occurs with one instruction memory should not be used for execution of opcodes¹.
¹ Anyway, the current implementation does not allow using the delay slots.

### 2.8.2 Explicit Program Pointer Modifiers

Explicit Jumps are ALU instructions which comprise relative jumps and call/return of subroutines. Table 2 summarizes the ALU-instructions which modify directly or indirectly the program pointer PP.

**Table 2: Instructions modifying the PP**

| opcode | | |
|---|---|---|
| *jmp* | Jump with two variants: | |
| | ● | Jump target defined in EREG, DREG. |
| | ● | Jump target with 16-bit immediate value. |
| | All Jump variants cause a one cycle delay slot. | |
| *call* | Call subroutine | |
| | Variants: | |
| | ● | *PP* + *IJMP0* is pushed to stack using stack pointer *sp* with *sp* post-decrement. The subroutine address is defined in EREG, DREG or ALU. |
| | ● | Jump target with 16-bit immediate value. |
| *ret* | Return from Subroutine. The return address is read from stack using stack pointer sp and sp pre-increment. | |
| *setInki,* | Set Link Register does not directly modify the pp, however the Ink instruction will move the *Ink* register content to pp. | |
| | ● | The *Ink* register is loaded with an 16-bit immediate value. |
| *setInkr* | Set Link Register does not directly modify the pp, however the Ink instruction will move the *Ink* register content to pp. | |
| | ● | The Ink register is loaded with EREG. DREG or ALU. |
| *Ink* | The *pp* is loaded with the content of the Ink register. | |

Explicit jumps are ALU instructions which define the next instructions². Only one instruction per opcode is allowed.
² Assembler instruction JMPL

### JMP - explicit jump

Explicit jumps are implemented in the traditional manner. The JMP target is defined absolutely by either an immediate value or by the content of a register or ALU relative to the current *pp*.

The assembler statement JMPL <label> defines long jumps to an absolute address.

### CALL/RET

Subroutine CALL and RET are implemented in the traditional manner, i.e. the return address is pushed to the stack and the return address is popped after the RET. The stack pointer is the AGREG register *sp.* The CALL target address is defined absolutely by either a 16 bit immediate value or by the content of a register or ALU. Note, that the return address is defined as *pp + IJMP0¹.*
¹ This is different to normal microprocessor implementations, which add 1 to the return address.

### 2.8.2.1 The Link Register (Ink)

The link register supports fast access to subroutines without the penalty of requiring stack operations as for *call* and *ret.* The link register is used to store the program pointer to the next instruction which is restored for returning from the routine.

The *Ink* can be set explicitly by the *setInki* rsp. *setInkr* opcodes, adding a 16-bit constant to *pp* or adding a register or ALU value to the *pp.*

The special implicit pp modifier of the *HPC* and *LPC* pointers (code 0× 1 F, refer to 2.8.1), selects the content of register *Ink* as the absolute address of the next instruction. The *Ink* instruction moves the content of the link register to the *pp.* Thus the previously stored address in the *Ink* register is the new execution address.

### 2.9 Load/Store Unit

The Load/Store unit comprises the AGREGs, an address generator, and the Memory-in and Memory-out registers.

The Load/Store unit generates addresses for the data memories in parallel to the execution of the ALU data-path. The Load/Store unit supports up to eight base pointers. One of the eight base pointers is dedicated as stack pointer, whenever stack operations (push, pop, call, ret) are used. For C compilers another base pointer is dedicated as frame pointer *fp*. Furthermore the *bp5* and *bp6* can be used as the address pointers *ap0* and *ap1* with post - increment/decrement.

**Table 3: AGREG functions**

| **AGREC base pointer** | **Alternate Function** |
|---|---|
| bp0 | - |
| bp1 | - |
| bp2 | - |
| bp3 | - |
| bp4 | fp (Frame Pointer) |
| bp5 | ap0 (Address Pointer0) |
| bp6 | ap0 (Address Pointer1) |
| bp7 | sp (Stack Pointer) |

### 2.9.1 Address Generator

All load/store accesses use one of the base pointers bp0 ..bp7 to generate the memory addresses. Optionally an offset can be added as depicted in Figure 3. The Data-RAM address output delivers Byte-addresses.

The address generator allows addition of the following sources:
■ ap0 (see post increment/decrement modes Table 4)
■ ap1 (see post increment/decrement modes Table 4)
■ 0
■ 6-bit signed constant from opcode for load operations
■ registers r0 .. r7
■ EREG registers, restricted to e1, e3, e5, e7

Table 4 summarizes the options that define the auto-increment/decrement modes. The options are available for *bp5*/*ap0* and *bp6*/*ap1.*

The mode for post increment and decrement depends on the opcode. For byte load/store *(stb, Idbu, Idbs, cpw) ap0* rsp. *ap1* are incremented or decremented by one. For word load/store *(stw, Idw, cpw) ap0* rsp. *ap1* are incremented or decremented by two.

**Table 4: Address Generator Modes**

| **Mode** | **Function** |
|---|---|
| 0 | *bp0.. bp7* one of the basepointers |
| 1 | *(bp0.. bp7)* + *(ap0++)* |
| | one of the basepointer plus *np0,* post increment of *np0 (bp0.. bp7)* + *(ap1*++*)* |
| | one of the basepointer plus *bp4,* post increment of *np1* |
| 2 | *(bp0 bp7)* + *(ap0-)* |
| | *one of the basepointer plus ap0.* post decrement *of ap0 (bp0.. bp7)* + *(ap1-)* |
| | one of the basepointer plus *ap1.* post decrement *of ap1* |
| 3 | *(bp0.. bp7)* + *ap0* |
| | one of the basepointer plus *np0* |
| | *(bp0.. bp7) + np1* |
| | one of the basepointer plus *ap1* |

### 2.10 Memory Load / Store Instructions

Store operations use pipeline stages, when writing the data to the memory. However, the hardware implementation hides the pipelining from the programmer. Memory store operations always use the address generator for address calculation. Store operations operate either on bytes or on 16-bit words. The byte ordering is *Little Endian,* thus address line 0 = 0 selects the LSB of a 16 bit word¹.
¹ The Debugger shows memory sections which are defined as 16-bit words with the LSB on the right side of the word.

### Note:

Only one load or store operation per opcode is allowed

**Table 5: Store instructions**

| **opcode** | **Store Operations** | |
|---|---|---|
| *srw* | Store Word | |
| | Sources can be EREG, DREG or ALUs. The target address is defined by the Address Generator. | |
| | Restrictions | |
| | ■ | *STW* does not support 6-bit offset |
| *stb* | Store Byte | |
| | Sources can be EREG, DREG or ALUs. | |
| | The target address is defined by the Address Generator. | |
| | Restrictions | |
| | ■ | *STB* does not support 6-bit offset |
| *wrp* | Write Port . Sources: EREG. DREG or ALUs. Target port is defined by the 5-bit port address. | |
| | Restrictions | |
| | ■ | WRP *is available in the top and bottom rows of ALUs only.* |

The data read by a load operation in the previous cycle is available in the *mem-*register of the ALU data-path. The data is available in the target (e.g on of the registers, ALU inputs) one cycle after issuing the load operation. Load operations support loading of 16-bit words and signed and unsigned bytes.

**Table 6: Load instructions**

| **opcode** | **Load Operations** | |
|---|---|---|
| *ldw* | Load Word | |
| | The source address is defined by the Address Generator. The read value is available one cycle later in the mem-out register. | |
| | Restrictions | |
| | ■ | *LDW* is available in the top and bottom rows of ALUs only. |
| *Idbs* | Load Byte signed. | |
| | The 8-bit signed value is sign-extended to 16 bit. | |
| | The read value is available one cycle later in the mem-out register. A0 = 0 addresses the LSB of a word, A1 = 1 the MSB (Little Endian). | |
| | Restrictions | |
| | ■ | *LDBS* is available in the top and bottom rows of ALUs only. |
| *Idbu* | Load Byte unsigned. | |
| | The byte is loaded to the LSB of the target. The MSB is set to 0. | |
| | The read value is available one cycles later in the mem-out register. A0 = 0 addresses the LSB of a word. (Little Endian) | |
| | Restrictions | |
| | ■ | *LDBS* is available in the top and bottom rows of ALUs only. |

Reading from Mem-out to a register requires a move operation

Stack operations requires *bp7*/*sp,* each operation modifies sp accordingly.

**Table 7: Stack instructions**

| **opcode** | **Stack Operations** | |
|---|---|---|
| *push* | Push word to stack. | |
| | Sources | can be EREG, DREG, AGREG, SREG, LNK or INTLNK. |
| | The memory address is defined by the stack pointer. The stack-pointer *sp* is decremented by two after the operation. | |
| | Restrictions | |
| | ■ | *PUSH* is available in the top and bottom rows of ALUs only. |
| *pop* | Pop word from stack. | |
| | Targets can be EREGs, DREGs, AGREGs, SREG, LNK or INTLNK. | |
| | The memory address is defined by the stack pointer. The stack-pointer *sp* is incremented by two before the operation. | |
| | Restrictions | |
| | ■ | *POP* is available in the top and bottom rows of ALUs only. |
| *call* | Call subroutine | |
| | ■ | *pp* + *IJMP0* is pushed to stack using stack pointer *sp* with *sp* post-decrement by two. The subroutine address is defined by EREG, DREG or ALU. |
| | | (See also 2.8.2) |
| *ret* | Return from Subroutine. The return address is popped from stack to *pp* and the stack pointer *sp* is post-incremented by two. | |

### 2.11 Local Memories

The FNC-PAE is implemented using the Harvard processing model, therefore at least one data memory and one instruction memory are required. Both memories are implemented as fast SRAMs thus allowing operation with only one pipeline stage.

### 2.11.1 Instruction Memory

The instruction memory is 256 bits wide in order to support the VLIW-like instruction format. For typical embedded applications the program memory needs to be 16 to 256 entries large. The program pointer *pp* addresses one 256-bit word of the program memory which holds one opcode.

For supporting low-priority-continue (LPC) without a delay slot, a second instruction memory is required However, the second instruction memory may be significantly smaller, typically 1/4 to 1/16 of the main instruction memory is sufficient.

### 2.11.2 Local Data Memory

In accordance with the ALU word width, the data memory is 16-bit wide. For typical embedded applications the data memory needs to be 2048 to 8196 entries large. The memory is accessed using the address generator and the Mem-in reg for memory writes and the Mem-out register for memory read.

The Data Memory is embedded into the memory hierarchy as first level Cache. Sections of the Cache can be locked in order to have a predictable timing behaviour for time-critical data¹.
¹ Details about cache implementations depend on the ongoing implementation.

Additional block move commands allow memory-memory transfers and data exchange to external Memories without using the ALU data paths.

The Block Move unit is not implemented yet.

### 2.12 ALUs

### 2.12.1 ALU instructions

The ALUs provide the basic calculation functions. Several restrictions apply, since not all opcodes are useful or possible in all positions and the available number of opcode bits in the instruction memory is limited to 256. Moreover, the allowed sources and targets of opcodes (see Table 8) may be different from ALU row to ALU row.

**Table 8: ALU hardware instructions summary**

| Instruction | Short description |
|---|---|
| add | signed addition |
| addc | signed addition with carry in |
| and | bit-wise AND |
| blkm | Block move (four sub-instructions) |
| call | call subroutine, ret address to (sp-) |
| call | call with address deifned by 16-bit immediate, return address to (sp-) |
| cmpai | compare 16-bit immediate with ALU |
| cmpri | compare 16-bit immediate with register |
| cpb | copy byte from memory to memory |
| cprc | reserved for coprocessors |
| cpw | copy word from memory to memory |
| emovi | move immediate to register |
| hlt | Processor Halt |
| intdis | interrupt disable |
| inten | interrupt enable |
| jmp | jump absolute via register |
| jmp | jump to address defined by 16-bit immediate |
| ldbs | load byte signed, address from AG |
| ldbu | load byte unsigned, address from AG |
| ldw | load word, address from AG |
| lnk | load lnk to pp (branch) |
| mov | move source to a target |
| movai | move 16-bit immediate to ALU-output |
| movr | move 16-bit immediate to register |
| nop | No operation |
| not | bit-wise inverter |
| or | bit-wise OR |
| pop | pop (++sp) to target |
| push | push source to (sp-) |
| rdp | read port |
| rds | read 2-bit (events) from port to sreg |
| ret | reture from subroutine, ret. address from (++sp) |
| reti | reture from interrupt, ret. address from intlnk |
| setlnki | set link register with 16-bit immediate value |
| setlnkr | set link register with register as source |
| shl | barrel shift left, bits defined by operand |
| shrs | barrel shift right signed, bits defined by operand |
| shru | barrel shift right unsigned, bits defined by operand |
| spd | Special opcodes spanning two ALUs |
| stb | store byte, address from AG |
| stw | store word, address from AG |
| sub | subtraction |
| subc | subtraction with carry |
| wrp | write port |
| wrs | write 2-bit from sreg to 2-bit port (events) |
| xor | bit-wise EXCLUSIVE OR |

### 2.12.2 Availability of Instructions

The following tables summarize the availability of ALU instructions.

The rows specify the ALUs, while the columns specify the allowed operand sources and targets.
● (x): instruction available
● (o): offset sources for the address generator + one of the basepointers.
● (f): result flags which are written to the sreg.
● (i): shadow register support not yet implemented
● (b): only 2 bits are transferred to the status ports
● (?) depends on final implementation

### 2.12.2.1 Arithmetic, Logic and SFU Instructions

These instructions define two sources and one target. The arithmetic /logical opcodes comprise nop, not, , and, or, xor, add, sub, addc, subc, shru, shrs and shl.

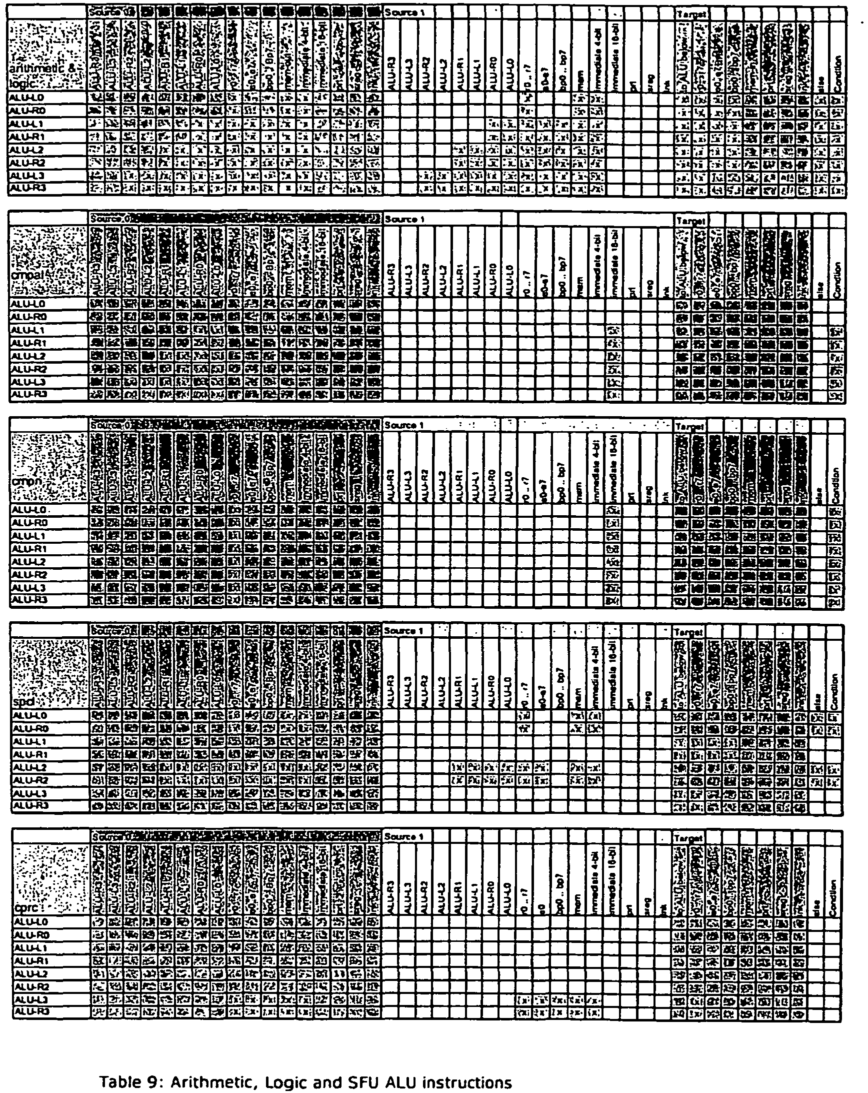

### 2.12.2.2 Move Instructions

These instructions move a source to a target.

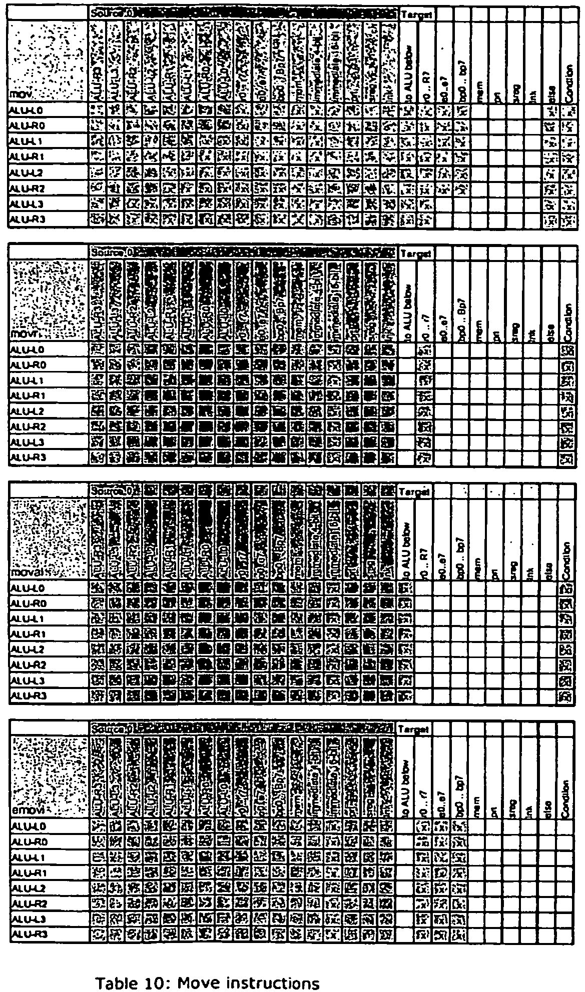

### 2.12.2.3 Load / Store Instructions

These instructions transfer data between the ALUs or register files to and from memory. The copy instruction allows to define the source and target in the memory. The address generator uses one of the base pointers (bp0 ..bp7) and the offset as specified in the tables. Optionally, post-increment / decrement is possible with ap0 and ap1.

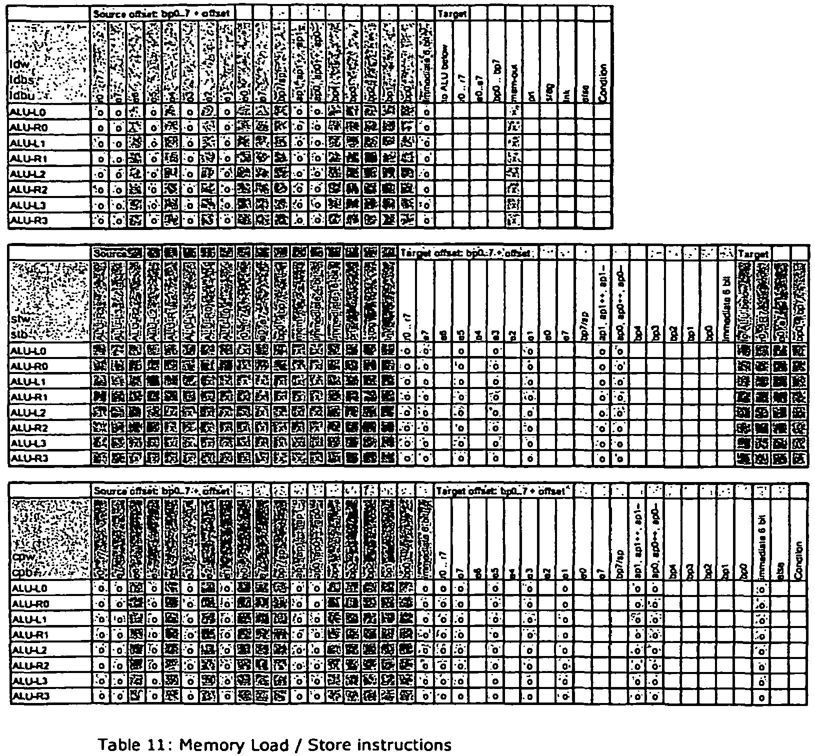

Push / Pop use bp7 /sp as stack pointer with post-decrement rsp pre-increment. Pop from stack loads the results directly to the registers i.e. without using the mem-out registers as with load/store operations.

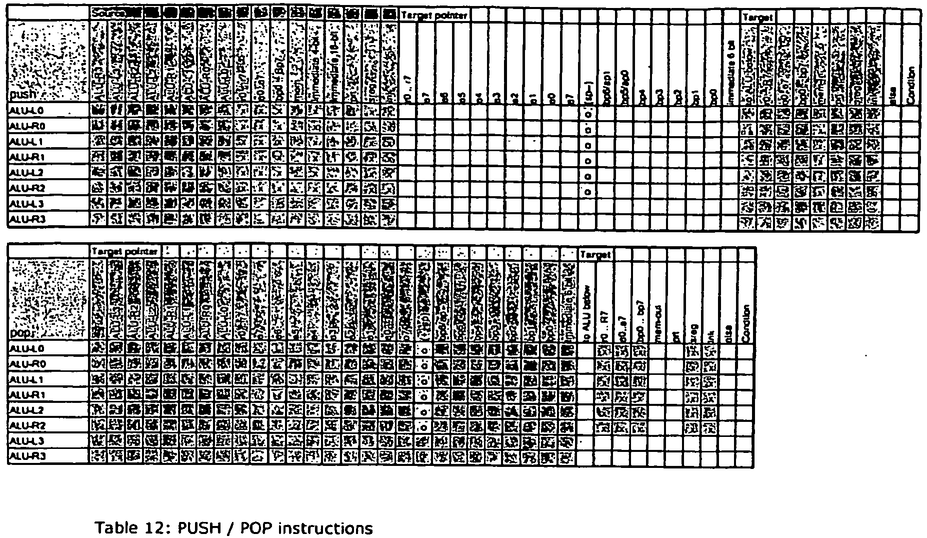

### 2.12.2.4 Program Pointer Modifying Instructions

These instructions modify the program pointer implicitly. The SETLNK opcodes are listed here, since they modify the PP indirectly with the next rfl instruction.

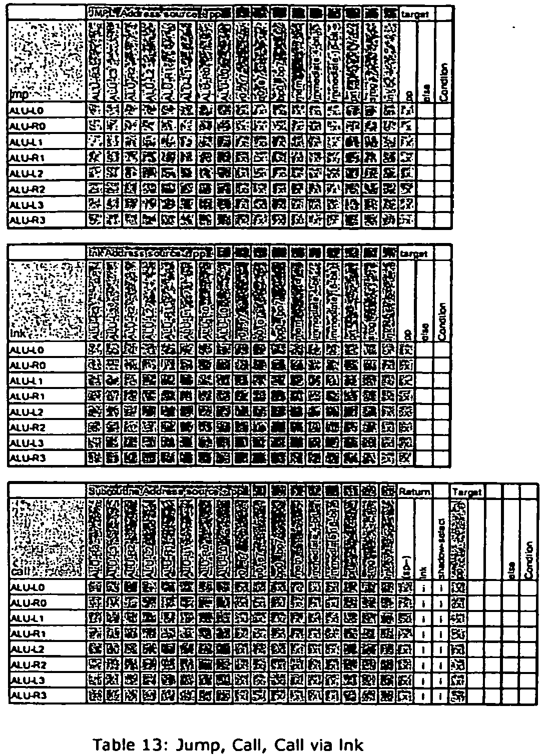

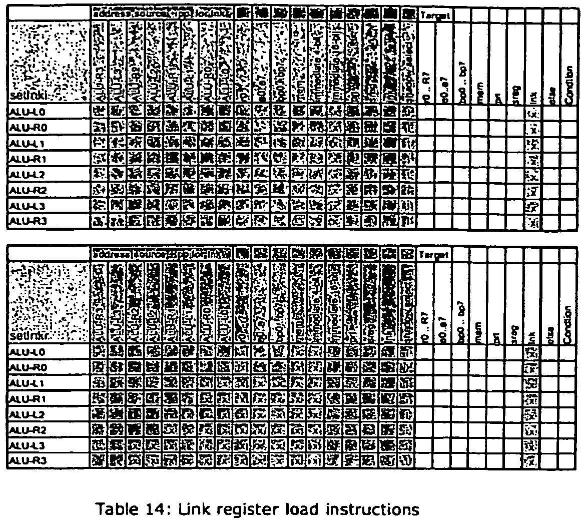

Return is possible via stack, the *lnk* register or the interrupt lnk register *intlnk.*

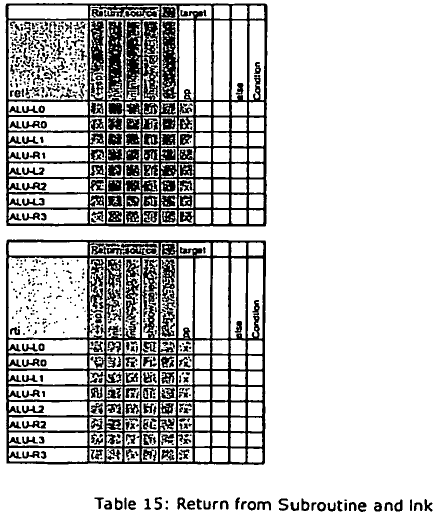

### 2.12.2.5 Port read/write Instructions

These instructions read or write to ports. RDS and WRS transfer two bits of the status register from and to the ports.

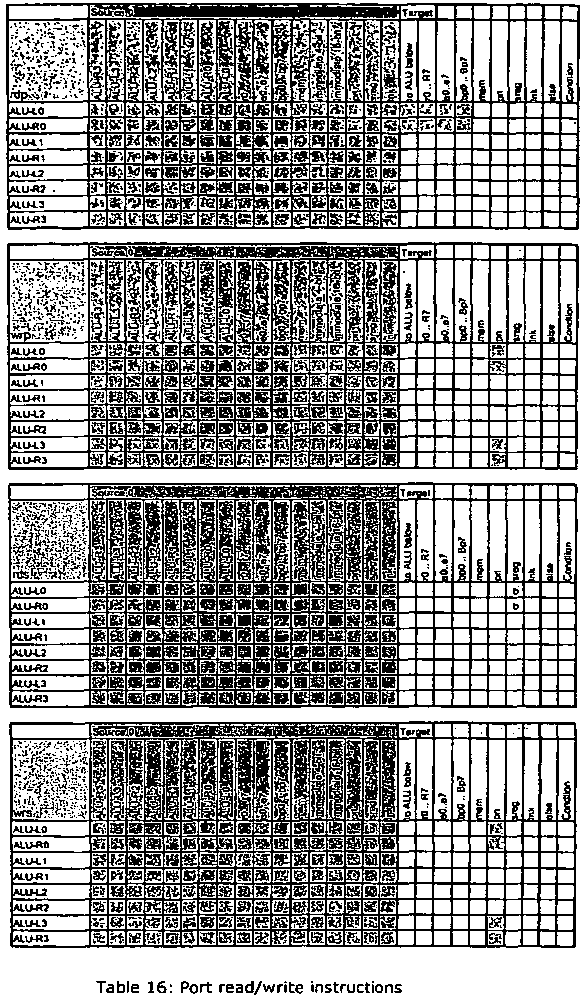

### 2.12.2.6 Miscellaneous Instructions

● *hlt* stops the processor
● *inten* enables the interrupts
● *intdis* disables interrupts.

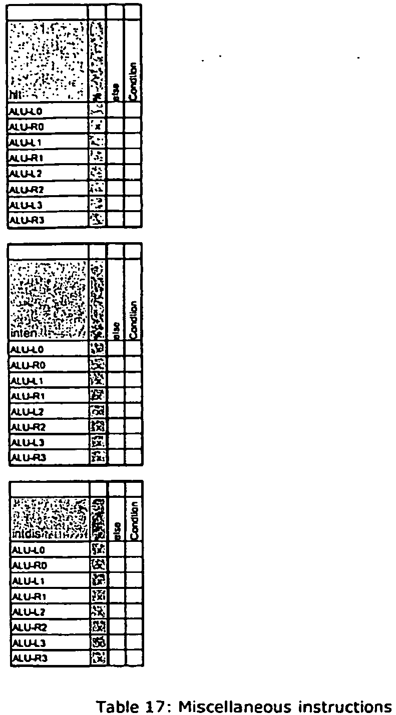

### 2.12.3 Ambiguous Targets

Multiple ALUs may attempt to write within one cycle to the same target register. In this case the following list of priorities applies:

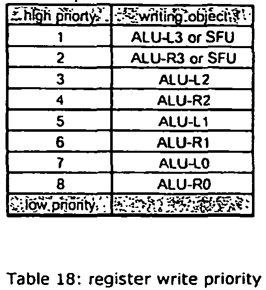

Only the object with the highest priority writes to the target. Write attempts of the other objects are discarded.

### 2.13 Register Summary

The following section table summarize the registers in the FNC PAE.

### 2.13.1 General Purpose Register

**Table 19: General purpose register file**

| DREG | Usage | Shadow register |
|---|---|---|
| r0 | GP, 16 Bit | no, = r0 |
| r1 | GP, 16 Bit | no, = r1 |
| r2 | GP, 16 Bit | yes |
| r3 | GP, 16 Bit | yes |
| r4 | GP. 16 Bit | yes |
| r5 | GP. t6 Bit | yes |
| r6 | GP. 16 Bit | yes |
| r7 | GP. 16 Bit | yes |
| | | |

| EREG | Usage | Shadow register |
|---|---|---|
| e0 | GP. 16 Bit | yes |
| e1 | GP. 16 Bit | yes |
| e2 | GP.16 Bit | yes |
| e3 | GP. 16 Bit | yes |
| e4 | GP. 16 Bit | yes |
| e5 | GP.16 Bit | yes |
| e6 | GP. 16 Bit | yes |
| e7 | GP. 16 Bit | yes |

### 2.13.2 Address Generator Registers

**Table 20: AG Registers**

| AGREG | Usage | post Incr | post Decr | Stack Pointer |
|---|---|---|---|---|
| bρ0 | Base addr. register | no . | no | no |
| bp1 | Base addr. register | no | no | no |
| bp2 | Base addr. register | no | no | no |
| bp3 | Base addr. register | no | no | no |
| bp4/tp | Base addr. register or Frame Pointer | no | no | no |
| bp5/ag0 | Base addr. register or Address Pointer ap0 | yes | yes | no |
| bp6/ag1 | Base addr. register or Address Pointer ap1 | yes | yes | no |
| bp7/sp | Base addr. register or Stack Pointer sp | no | no | yes |

### 2.13.3 Mem-in, Mem-out Register

The memory registers are use for transfer between the FNC-core and the memory. Reading from memory (Idw, Idbu, ldbs) load the result values to mem-out. The ALUs can access this register in the next cycle. Writing to the register is performed implicitly with the store instructions. The Ram is written in the next cycle.

**Table 21: Mem Registers**

| MEMREG | Usage, | |
|---|---|---|
| Mem-in | ALUs write to this register which transfers the content to the Memory. | |
| Mem-out | Memory read opertions deliver the result to this register. | |

### 2.13.4 Link and Intlnk Register

The *Ink* and *intlnk* register store program pointers. It is not possible to read the registers.

**Table 22: Link Register**

| Link-Register. | Usage | Shadow reglster |
|---|---|---|
| Ink | Stores the program address for the jump via Ink (Ink) or return via Ink (rfl) instruction | no |
| intlnk | Stores the return address for return from interrupt (reti) instruction | no |

### 2.13.5 Status Register

Direct access to the status register is not possible, however conditional statements in the first ALU row use this register.

**Table 23: Status Register Bits**

| Status Reg Bit. | Meaning | Shadow |
|---|---|---|
| 0 | left zero (L-ZE) | no |
| 1 | left carry (L-CY) | no |
| 2 | left overflow (L-OV) | no |
| 3 | left path activated (L-PA) | no |
| 4 | right path activated (R-PA) | no |
| 5 | right zero (R-ZE) | no |
| 6 | right carry (R-CY) | no |
| 7 | right overflow (R-OV) | no |

### 2.13.6 Ports

The usage of I/O ports is defined as follows

**Table 24: Ports**

| Port | Usage |
|---|---|
| | read: XPP horizontal data bus (bottom) Port A0 |
| prt0 | write: XPP horizontal data bus (top), Port X0 |
| | read: XPP horizontal data bus (bottom) Port A1 |
| prt1 | write: XPP horizontal data bus (top), Port X1 |
| | read: XPP horizontal data bus (bottom) Port A2 |
| prt2 | write: XPP horizontal data bus (top), Port X2 |
| | read: XPP horizontal data bus (bottom) Port A3 |
| prt3 | write: XPP horizontal data bus (top). Port X3 |
| | read: XPP horizontal event bus (bottom) Port E0 |
| prt4 | write: XPP horizontal data bus (top). Port R0 |
| | read: XPP horizontal data bus (bottom) Port E1 |
| prt5 | write: XPP horizontal data bus (top). Port R1 |
| | read: XPP horizontal data bus (bottom) Port E2 |
| prt6 | write: XPP horizontal data bus (top). Port R2 |
| | read: XPP horizontal data bus (bottom) Port E3 |
| prt7 | write: XPP horizontal data bus (top). Port R3 |
| | read: XPP vertical data bus (bottom) Port A0 |
| prt8 | write: XPP vertical data bus (top), Port X0 |
| | read: XPP vertical data bus (bottom) Port A1 |
| prt9 | write: XPP vertical data bus (top). Port X1 |
| | read: XPP vertical data bus (bottom) Port A2 |
| prt 10 | write: XPP vertical data bus (top). Port X2 |
| | read: XPP vertical data bus (bottom) Port A3 |
| prt 11 | write: XPP vertical data bus (top). Port X3 |
| | read: XPP vertical event bus (bottom) Port E0 |
| prt 12 | write: XPP vertical data bus (top). Port R0 |
| | read: XPP vertical data bus (bottom) Port E1 |
| prt13 | write: XPP vertical data bus (top). Port R1 |
| | read: XPP vertical data bus (bottom) Port E2 |
| prt 14 | write: XPP vertical data bus (top). Port R2 |
| | read: XPP vertical data bus (bottom) Port E3 |
| prt 15 | write: XPP vertical data bus (top). Port R3 |

### 2.14 SFUs

The FNC-PAE supports up to 16 SFUs, while each of them can execute up to 7 different defined SFU instructions. SFUs operate in parallel to the ALU data-path. Each instruction may contain up to two SFU commands. Each SFU command disables *al3* or *ar3* in the bottom row. The results of the SFU operation are fed into the bottom multiplexers, instead of the results of the disabled al3. SFU instructions are non-conditional and are executed whether the respective ALU path is active or not.

SFUs may access all registers as sources but no ALU outputs.

The SFU instruction format is shown in Table 25:

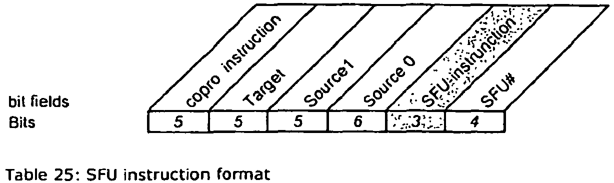

The SFU may generate a 32-bit result (e.g. multiplication). In this case the result is written simultaneously to two adjacent registers, requiring the target register to be even. The least significant 16-bit word of the result is written to the even register, the most significant word is written to the odd register.

For each of the 16 SFUs Copro-instruction = 7 is reserved for multi-cycle SFUs. (see 2.14.1) Copro# selects one of up to 16 SFUs. SFUs 0-7 are reserved for PACT standard releases.

### 2.14.1 Multi-cycle SFUs

Typically a SFU is required to process its operation within the timeslot (one cycle) determined by the ALU data-path. If the SFU requires multiple cycles (e.g. division), it has to support a valid flag identifying the availability of the result. Pipelined SFU operation is supported by issuing multiple SFU commands. Whenever the availability of a result is indicated by the valid flag and a new SFU command is issued, the result is written into the register file. All SFUs have to support the command "SFU Write Back" (CWB, CMD = 7) that writes available results into the register file.

### 2.14.2 SFU 0

The SFU 0 provides signed and unsigned multiplication on 16 bit operands. The least significant word of the result is written to the specified target register. The most significant word is discarded.

The result is available in the target register in the next clock cycle.

**Table 26: SFU 0 instructions**

| SFU 0 instructions | |
|---|---|
| Instruction | Short description |
| muls | signed 16-bit multiplication. The result is a signed 16-bit integer. |
| mulu | unsigned 16-bit multiplication with 16-bit result. |

### 2.14.3 SFU 1

SFU I provides a special function to read and write blocks of bits from a port.

### Bit-block input (ibit)

The SFU reads a 16-bit word from a port and shifts the specified number of bits to the target (left-shift). If all bits have been "consumed", a new 16-bit word is read.

### Bit-block output (obit)

The specified number of bits of a source is left-shifted to the SFU. As soon as overall 16 bits have been shifted, the SFU writes the word to the output port.

**Table 27: SFU 1 instructions**

| SFU 1 instructions | |
|---|---|
| Instruction | Short description |
| ibit | Left shift bits from port |
| obit | Left shift bits to port |

### 2.15 Memory Hierarchy

The FNC-PAE uses separate memories for Data (DMEM) and Code (IMEM). Different concepts are implemented:
■ DMEM is a tightly coupled memory (TCM) under explicit control by the programmer
■ IMEM is implemented as 4-way associative cache which is transparent for the programmer.

The next hierarchy level outside of the FNC-PAEs depends on the system implemention in a SoC. In this manual we assume reference design, which provides a good balance between area and performance.

The reference design consists of a 4-way associative cache and interface to an external GGDR3 DRAM. Several Function PAEs are mapped into a global 32-bit address space and share both interfaces. Access to the interfaces is arbitrated fairly.

Figure 4 depicts the basic structure of the memory hierarchy spanning several Function PAEs, the shared D-cache and the shared Sysmem interface. The Instruction decoder accesses the local IRAM, which updates its content automatically according to its LRU access mechanism. The Load-Store unit may access the local TCM, the shared D-cache or the shared SYSMEM. The TCM must be updated under explicit control of the program either using the load /store Opcodes or the Block-Move Unit.

All data busses are 256 Bit wide. Thus a 256 Bit opcode can be transferred in one cycle or up to 8 x 16 bits (16-bit aligned) can be transferred using the block-move unit.
Note
The implementation of the D-cache and SYSMEM are out of scope for this
document. However the
SYSMEM must be designed to support the highest possible bandwidth.
(e.g. by using burst transfers to external DRAMs).

D-Cache Arbitration:
■ Highest priority has FNC0
■ FNCI to FNCn are using round robin

SYSMEM Arbitration:
■ Highest priority has FNC0
■ FNCI to RNC3 have falling priority
■ FNC4 to FNCn use round-robin.

### 2.15.1.1 Bootstrap

Needs to be defined

### 2.15.1.2 ALU/RAM-PAE array (re-)configuration and FNC-PAE booting

The block move unit of one of the FNC-PAEs may boot other FNC-PAEs or (re-) configure the array of ALU-/RAM-PAEs by fetching code or configuration data from the external memory.

While configuring another device, the block-move unit is selecting the target to be reconfigured or booted. Simultaneously it is rising the configuration output signal, indicating the configuration cycle to the target unit.

### 2.16 Integration into the XPP-array

The FNC-PAE will be connected near the RAM-PAEs of the even rows of the XPP array: The FNC-PAEs will have ports to exchange data directly between the FNC-PAE cores or external components without the need to go through the XPP array datapaths.

### 2.17 Planned extensions

Some features are not yet implemented and summarized in the following sections.

### 2.17.1 Shadow Register File

All instructions modifying the *pp* contain a *SDW* (shadow) bit, selecting the register file to be used after the jump. If *SDW* is set to I , the shadow register file is used. For instructions *ret* and *lnk* the SDW-bit is restored according to the calling subroutine.
Usage of shadow registers is not implemented yet

### 2.17.2 Opcode Execution within Delay Slots

Some opcodes cause delay slots because of pipeline stages when accessing memories. *HPC* does not generate a delay slot but executes the target instruction in the very next cycle. The delay slot caused by *LPC* in low performance implementations should not be used for compatibility reasons. The delay slot caused by *IJMP0* cannot be used for execution of other opcodes.

*jmp* and *call* (Assembler statement JMPL, CALL) will lead to one delay slot which may be used by another opcode. *ret* causes two delay slots.

Using delay slots for opcode execution - whenever the type of application allows such behaviour - eliminates performance reduction while jumping. However operations which modify the program or stack pointers are forbidden. Furthermore, during the first delay slot caused by *RET no* memory access is possible.
The current implementation does not allow the usage of delay slots

### 2.17.2.1 Jumps over Segments

The definition of FNC-opcodes reserved bits for long jumps using up to four program segment pointers (*psp*).
This feature is planned as future extension.

### 2.17.3 Data Segment Pointer

The instruction format allows the definition of up to four data segment pointers. Selection of segments extends the addressable memory space.

### Chapter 3

### Assembler

The Function PAE is can be programmed in assembler language and - in a second project phase - in C. The FNC-Assembler supports all features which the hardware provides. Thus, optimised code for high performance applications can be written. The assembler language provides only a few elements which are easy to learn. The usage of a standard C-preprocessor allows the definition of commands preceded with the "#" symbol. Examples are #include and conditional assembly with #if ... #endif.

The FNCDBG, which is an integrated assembler, simulator and debugger, allows simulating and testing the programs with cycle accuracy. The debugger shows all ALU outputs, the register files and the memory content. It features single stepping through the program and the definition of breakpoints.

### 3.1 General Assembler Elements

### 3.1.1 Opcode Syntax

The assembler uses a typical three-address code for most instructions: it is possible to define the target and two sources. Multiple ALU instructions are merged into one FNC opcode. The right ALU path is separated witch '|' from the left ALU path. Each FNC opcode is terminated with keyword 'NEXT'.

The example Figure 5 shows the structure of one opcode. If a row of ALUs is not required it can be left open (the assembler automatically inserts NOPs here).

The example shows a typical opcode with branching to the right path with the OPI condition.

The column delimiter and the instructions for the right column can also be written in the next code line. This may simplify editing and writing comments (see example chapter 3.6.4). If no column delimiter is defined, the assembler maps the instruction to the left columns (left path).

If no modification of the program pointer is required, the assembler sets the HPC automatically to point to the next opcode.

### 3.1.2 Comments

Comments are specified with
- ";" until end of line.
- "//" until end of line.
- /* comment */ nested comments are possible.

### 3.1.3 Numbers, Constants and Aliases

**Numbers** can be
- signed decimals
- hexadecimal with syntax 0x0000
- binary with syntax 0b0000000000000000

**Constant definitions** are preceded by keyword CONST. Constants expressions must be within parenthesis ( ).

### Examples

CONST max_line_count = 96
CONST line_length = 144
CONST frame = max_line_count * line_lenght
CONST macroblock_last_element = ((8 * 8) - 1)
CONST frame =
CONST MB_I4x4 = 0

### Aliases are preceded by keyword ALIAS

### Examples

ALIAS state = r6
ALIAS ctx = r7
ALIAS trnsTab = bp3

### 3.1.4 Object Naming, Default Aliases

**Table 28: Assembler naming of objects and registers**

| Group / Reg. | Name |
|---|---|
| DREG | r0 .. r7 |
| EREG | e0 .. e7 |
| AGREGS | bp0 .. bp7 |
| ALU-OUT | al0 .. al2; ar0, ar2 |
| Ports | p0 .. p31 |
| Memory | mem |
| Link Reg. | Ink |
| program pointer | pp |

| Aliases | FNC PAE object |
|---|---|
| fp | bp4 |
| ap0 | bp5 |
| apt | bp6 |
| sp | bp7 |

Immediate values are preceded by "#". The number of allowed bits of the immediate value depends on the ALU instruction.
Refer to refer Table 9 to Table 17 for the definition which immediate
values are available for a specific instruction.

### 3.1.5 Labels

Labels define addresses in the instruction memory and can be defined everywhere in between the opcodes. Labels are delimited by a colon ":". The instructions JMPL, JMPS, HPC, LPC and CALL refer to labels. Furthermore, Data memory sections can be named using Labels. For the Data section, the assembler assigns the Byte-address to the Label, for program memory it assigns the absolute entry (256-bit opcode word). Refer to section 3.5 for the definition of reserved labels for reset and interrupt.

Optionally the register set to be used when jumping to a label can be specifier with (RS0) rsp. (RS1) before the colon.

### 3.1.6 Memory

### Instruction RAM

The Instruction RAM is initialized with the keyword *FNC_IRAM(0).* The parameter (here 0) defines the FNC-PAE core to which the instruction memory section is assigned. *FNC_IRAM(0)* must be specified only if another RAM section is defined (default is *FNC_IRAM(0)).*

### Data RAM

Data RAM sections are specified with the keyword *FNC_DRAM(0).* The parameter (here 0) defines the FNC-PAE core to which the data memory section is assigned.

Parameters or data structures can be named using Labels. The length of the section must be specified if the data is not initalized:
RAMSECTION: BYTE[length) ?
   or
RAMSECTION: WORD[length] ?

The "?" symbol specifies uninitalized data. *Length* is the number of bytes or words, respectively. *Word* reserves two bytes with big endian byte ordering¹. The MSB is addressed with address bit 0 = 0, i.e. stored at the lowest storage address.
¹ Currenty big endian is supported. It is planned to allow also little endian mode. Then, FNCDBG will display initalized words with reversed byte ordering within the words.

Data sections can also be initialised using a list of values.

RAMSECTION: BYTE <list of values>²
² XDSDBG from Oct.26, 2005 requires the # symbol before numbers.

The values are separated by space characters. The first value is loaded to the lowest address.

The data sections are reserved in the Data RAM in the order of their definition. The Labels can be used in programs to point to the RAM section.

### Example:

| | | |
|---|---|---|
| FNC_DRAM (0) | | |
| DemoRam0: | BYTE[0x20] ? | ; reserves 32 bytes of uninitialized data |
| DemoRaml: | BYTE[2] ? | ; reserves 2 bytes of unititialized data |
| Table1: | BYTE #3 #8 #0x25 #-3 | ; defines an initialized table (8 bytes) |
| | BYTE #-5 #-8 #0xff | |
| | BYTE #0b00001010 | |
| //Wordtab: | WORD #1 #0, #0xffff | ; initalize words with 1 0 -1. |
| EndOfRam: | | ; begin of unused Ram |
| | | |
| FNC_IRANM (0) | | ; program section (Instruction RAM) |
| | | |
| | NOP | |
| | MOV bp0, #DemoRam0 | ; loads the basepointer with the address of DamoRam. |
| | MOV ap0,#2 | ; offset rel. to bp0 (third byte) |
| | NEXT | |
| | | |
| | SIB bp0 + ap0. #0 | ; clear the third byte of DemoRam0 |
| | NEXT | |
| | | |
| | HALT | |
| | NEXT | |

| | | |
|---|---|---|
| *Note:* FNCDBG fills uninitialized Data RAM sections with default values: ■ Oxfefe: reserved data sections ■ Oxdede: free RAM | | |

FNCDBG shows the memory content in a separate frame on the right side. Bytes or words which have been changed in the previous cycle(s) are highlighted red.

### 3.1.7 Conditional Operation

Arithmetic and move ALU instructions can be prefixed with one of the conditions. For restrictions on which ALU-instructions conditions can be specified, refer to Table 9 to Table 17 Column "Condition".

The status flags of ALU are available for evaluation for the ALU of the same column the row below. If the condition is TRUE, the subsequent ALUs that column are enabled. If the condition is false, the ALU with the condition statement and all subsequent ALUs of that column don't write results to the specified source¹.
¹ Anyhow, the disabled ALUs provide results at their outputs which can be used by other ALUs

The status of the ALUs of the bottom column *(al3, ar3*) are written to the status register for evaluation by the ALUs in the first row during the next opcode.

The conditions OP] (opposite column inactive) and OPA (opposite column active) are used to disable an active column based on the activity status of the opposite column. With ACT, a disabled column can be enabled again.

The LCL (last column active left) rsp. LCR (last column active right) are used as conditions which reflect the status of the final row of ALUs of the previous opcode.

The conditions are derived from three ALU flags:
■ ZE: result was zero
■ CY: carry
■ OV: result with overflow.

**Table 29: Conditions**

| Mnemonic | Physical Flag | Description |
|---|---|---|
| | - | No condition |
| ZE | ZE | Zero Flag Set |
| NZ | -ZE | Zero Flag not set |
| CY | CY | Carry flag set |
| NC | -CY | Carry flag not set |
| ov | ov | overflow |
| NO | -OV | not overflow |
| EO | ZE | unsigned compare was equal |
| NE | -ZE | unsigned compare was not equal |
| GE | -CY | unsigned compare was greater or equal |
| GT | -ZE & CY | unsigned compare was greater than |
| GES | -OV | signed compare was greater or equal |
| GTS | -ZE & -OV | signed compare was greater than |
| LT | CY | unsigned compare was less then |
| LTS | OVL | signed compare was less then (behaviour to be verified) |
| LE | ZE CY | unsigned compare was less equal then |
| LES | ZE \| OV | signed compare was less equal then |
| OPI | OPI | opposite ALU columns is inactive |
| OPA | OPA | opposite ALU columns is active |
| LCL | L-PA | if last condition (in one of the previous cycles) enabled left column (status register flag) |
| LCR | R-PA | if last condition (in one of the previous cycles) enabled right column (status register flag) |
| ACT | ACT | activate ALU column if deactived |
| ! | else | select the opcode instruction HPC, LPC or JMPS if the condition is FALSE |

### 3.1.8 Program Flow

The FNC-PAE does not have a program counter in the classical sense, instead, a program pointer must point to the next opcode. The assembler allows to set the three opcode fields *HPC, LPC* and *IJMP0* which define the next opcode. The maximum branch distance for this type of branches is +-31.

The assembler instructions must be defined in a separate source code line.

### 3.1.8.1 EXIT branch

The instructions HPC, LPC and JMPS define the next opcode when exiting a column. HPC, LPC or JMPS can only be specified once per column. The relative pointer must be within the range +-15. For branches outside of this range, JMPL must be used.

### Syntax

■ **Default:** without specification of HPC, LPC or JMPS, the HPC field points to the *pp+*1*.*
■ HPC HPC points to the *pp*+1
■ HPC label HPC points to the label
■ HPC #const HPC points to the *pp*+const
■ LPC LPC points to the *pp*+1
■ LPC label LPC points to the label.
■ LPC #const LPC points to the *pp*+const
■ JMPS JMPS points to the *pp*+1
■ JMPS label JMPS points to the label
■ JMPS #const JMPS points to the *pp*+const

For definition of the pointers, the assembler uses the following scheme:
■ The specification of ELSE branches (see 3.1.8.2) has priority. The specified pointers are filled with those settings.
■ Then, the definitions as specified in the assembler code are filled into the not used pointers.
■ If nothing is specified in column, HPC is used if not already filled in, else LPC or, if LPC was already filled in JMPS.

The following tables (Table 30, Table 31) specify which pointers the assembler enters (during design-time) and which pointers are used based on the runtime activity of columns. "Default" means, that the exit pointer was not explicitly specified in the assembler code.

Settings for the right columns are only applied where when the left column is inactive and the right columns is active.
Note:
Refer to 3.1.8.2 for the behavior with ELSE branches. If an ELSE branch is applied, the exit settings are overridden. Also long jumps (*JMPL*) override the Exit settings.

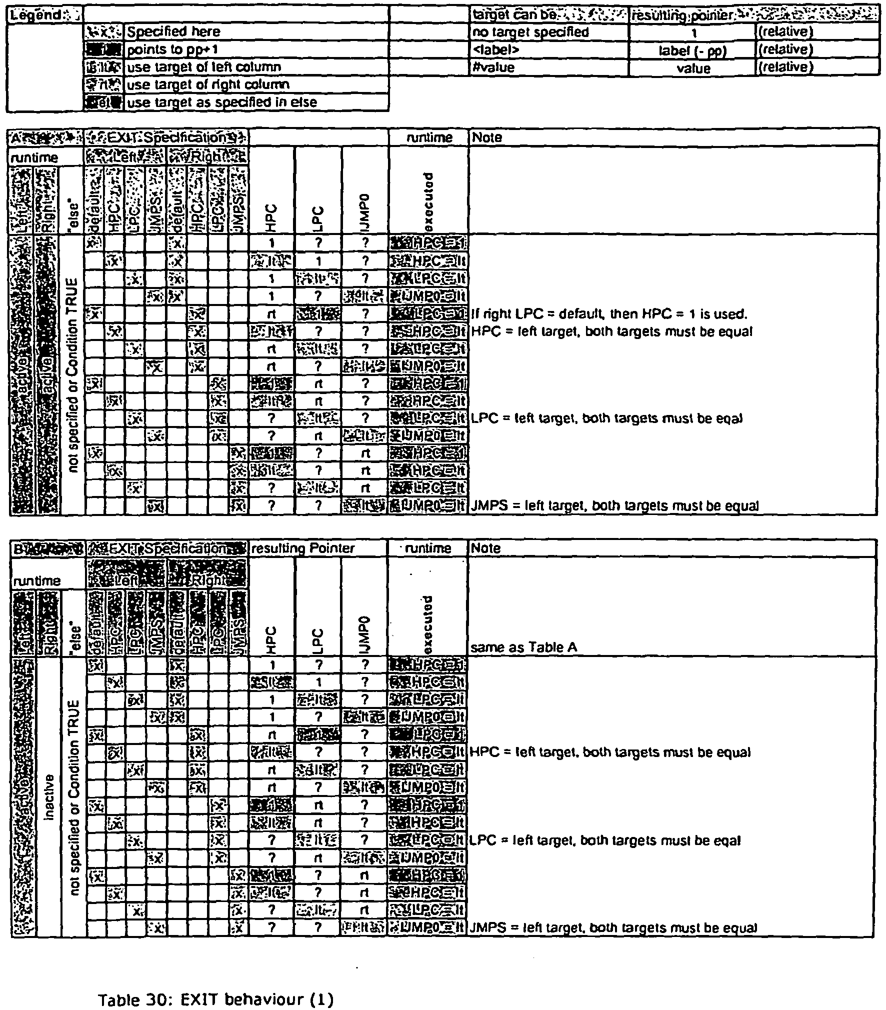

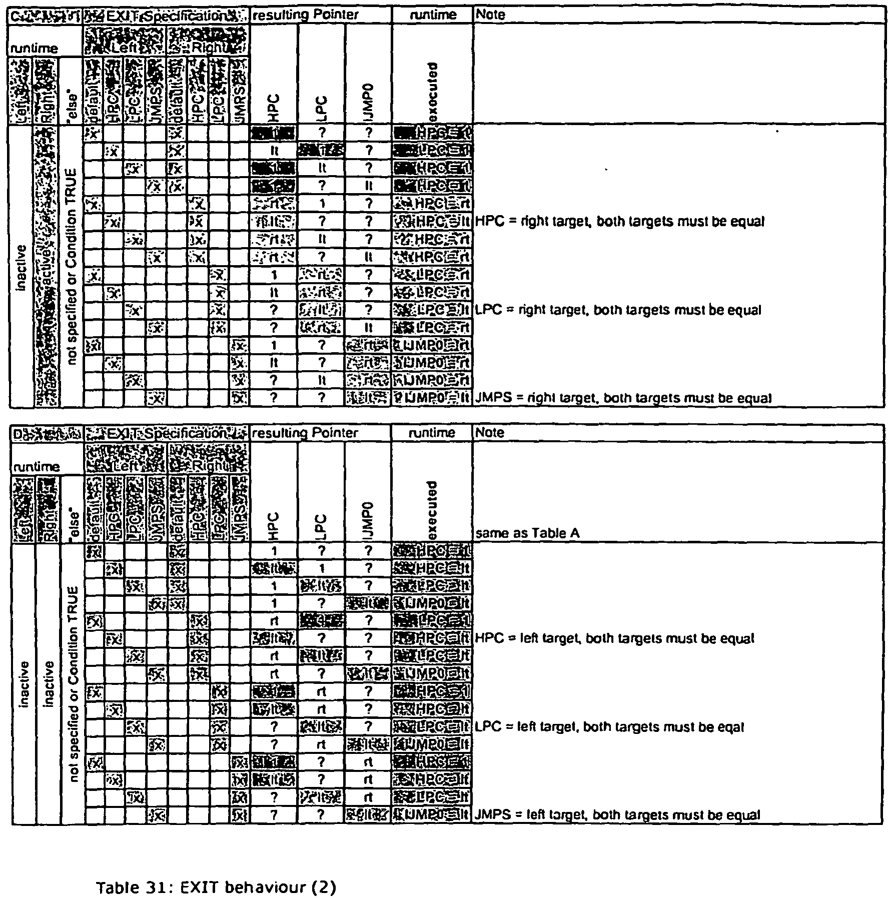

### 3.1.8.2 ELSE branch

Some ALU instructions allow the definition of "ELSE" branches. The ELSE branch evaluates the result of a conditional ALU instruction and defines one of the HPC, LPC or JMPS fields to point to the next opcode as specified by the target or default (if no target is specified). For restrictions, which ALU-instructions ELSE allow branches, refer to Table 9 to Table 17 Column "ELSE".

If the condition is TRUE, the ALU column is enabled and the setting for the EXIT branch is used.

If the condition is FALSE, the ALU column is disabled and the setting for the ELSE branch is used. If an ALU column is disabled by a previous condition, the ELSE branch is not evaluated.

In case that more than one ELSE branches are defined in an opcode, the bottom specification is used.

A long jump (JMPL) overrides the ELSE branches if both are active.

Syntax:
The Else statements as defined below must be written in the same instruction line.
   ■ HPC label : use HPC in case that the condition in the previous instruction was FALSE.
   ■ LPC label : use LPC in case that the condition in the previous instruction was FALSE.
   ■ JMPS label : use 1JMP0 in case that the condition in the previous instruction was FALSE.

Table 32 shows which pointer is used based on the else statement. If the condition in the line is TRUE, the specification of the EXIT branch is used (See Table 30, Table 31), If the condition is FALSE the else target (e) is used.

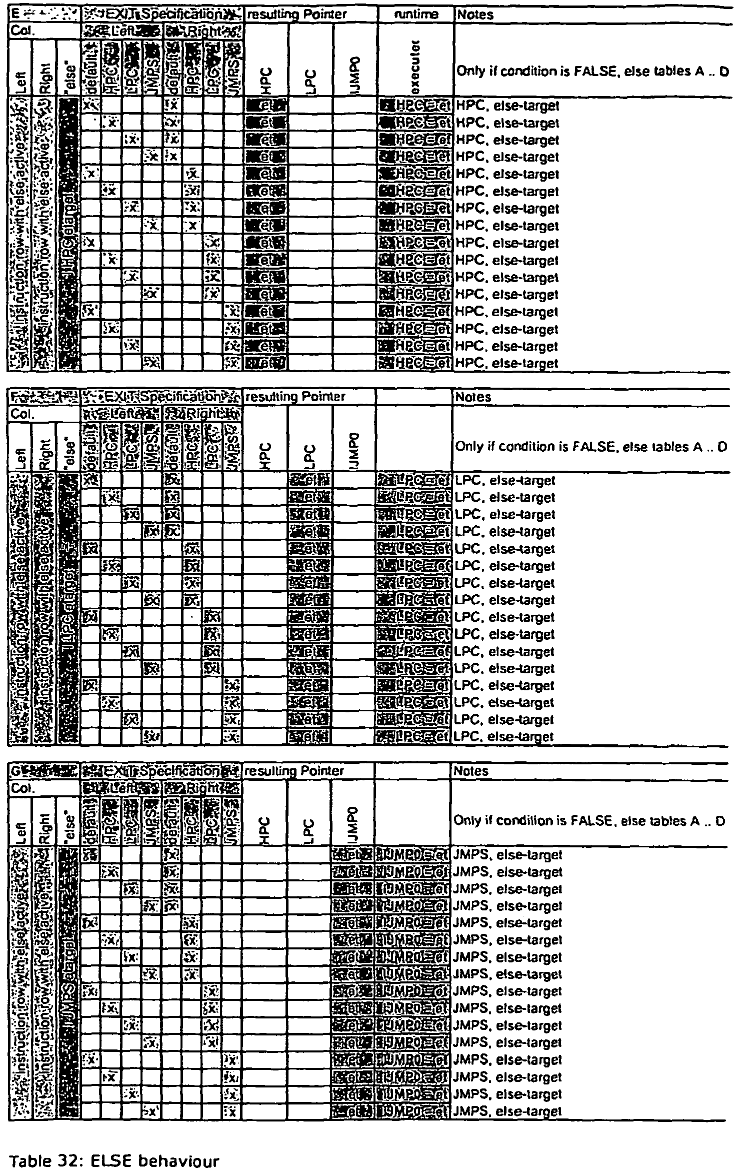

### 3.1.8.3 Long Jump

Long Jumps are performed by ALU instructions *jmp*, which add an immediate value or another source to the program pointer. If a long jump instruction is executed, the HPC, LPC or IJMPO fields are ignored.

### Syntax:

■ JMPL source : use a register or ALU or 6-bit immediate as relative jump target to the actual program pointer. The source is added to the pp.
■ JMPL #const : use an immediate value as relative jump target. The constant value is added to the pp.
**Note:**
Only one JMPL instruction per opcode is allowed

### 3.2 Assembler Instructions

The assembler uses in most cases the ALU instructions. However, some of the hardware instructions are merged (e.g. *mov, movr, movai* to MOV) in order to simplify programming. Besides the ALU instructions, a set of instructions allow to control the program flow on opcode level (e.g. definition of the HPC to point to the next opcode - see previous chapter).

Placeholders for objects:
■ target: the target object to which the result is written. Target "-" means that nothing is written to a register file, however, the ALU output is available.
■ src: the source operand, can also be a 4 bit or 6 bit immediate
■ src0: the left side source operand, can also be a 4 bit or 6 bit immediate
■ src1 : the right side ALU operand, can also be a 4 bit or 6 bit immediate
■ const: 16 bit immediate value
■ bpreg: one of the base registers of the AGREG
■ port: one of the 1/O ports
   Not all ALU instructions can be used on all ALUs. For restrictions refer to Table 9 to Table 17.

**Table 33: Assembler ALU instructions (1)**

| ALU Instruction | Assembler Mnemonic | Short description | Comment |
|---|---|---|---|
| nop | NOP | No operation | |
| not | NOT target, src0 | bit-wise inverter | |
| mov | MOV target, src0 | move source to a target | |
| spcl | CLZ target, src0 | Special opcodes spanning two ALUs | currently: CLZ |
| hlt | HALT | Processor Halt | |
| and | AND target, src0, src1 | bit-wise AND | |
| or | OR target, src0, src1 | bit-wise OR | |
| xor | XOR target, src0. src1 | bit-wise EXCLUSIVE OR | |
| add | ADD target, src0, src1 | signed addition | |
| sub | SUB target, src0, src1 | subtraction target = src0 - src1 | |
| addc | ADDC target, src0, src1 | signed addition with carry | |
| subc | SUBC target, src0, src1 | subtraction with carry. target = src0 - src1 , carry | |
| shru | SHRU target, src0, src1 | shift src0 right unsigned, no. of bits defined by src I Bits shifted to carry | |
| shrs | SHRS target, src0, src1 | shift right signed, no. of bits defined by src 1. Bits are shifted to carry | |
| shl | SHL target, src0, src1 | shift left src0, no. of bits defined by src1. Bits shifted to carry | |
| movr | MOV target, #const | move 16-bit immediate to target | |
| movai | MOV -, #const | move 16-bit immediate to ALU-output | |
| cmpri | CMP src, #const | compare 16-bit immediate with register | |
| cmpai | CMP src, #const | compare 16-bit immediate with ALU | |
| emovi | MOV target, #const | move 16-bit immediate to register | |
| blkm | tbd | Block move (four sub-instructions) | TBD |
| push | PUSH src | push source to (sp--) | |
| pop | POP target | pop (sp++) to target | |
| rdp | MOV target, port | read port | |
| wrp | MOV port, src | write port | |
| rds | tbd | read 2-bit (events) from port to sreg | TBD |
| wrs | tbd | write 2-bit from sreg to 2-bit port (events) | TBD |
| Idw | LDW bpreg + src | load word, address from AG | |
| Idbs | LDBS bpreg + src | load byte signed, address from AG | |
| Idbu | LDBU bpreg + src | load byte unsigned, address from AG | |
| stw | STW bpreg + offset,src0 STW bpreg, src0 | store word, address from AG | |
| stb | STB bpreg + offset,src0 STW bpreg, src0 | store byte, address from AG | |
| cpb | CPB bpreg+src, bpreg+src | copy byte from memory to memory | |
| cpw | CPW bpreg+src, bpreg+src | copy word from memory to memory | |

Note: *movai (MOV* -, #*CONST*) moves an immediate 16-bit value to the ALU output which can be used by the subsequent ALU stages.

**Table 34: Assembler ALU instructions (2)**

| ALU Instruction | Assembler Mnemonic | Short description | Comment |
|---|---|---|---|
| call | CALL source | call subrouline, rel address to (sp--) | TBD |
| jmp | JMPL source JMPL #const | long jump relative via offset in source or 6-bit immediate | one delay slot |
| ret | RET | reture from subroutine, ret. address from (sp++) moved to pp | TBD |
| rfl | MOV pp, lnk | return from link, return address moved from link register to pp | |
| reti | MOV pp, intlnk | return from interrupt, return address moved from intlink register to pp, interrupts are enabled. | |
| | ADD lnk, pp, source | calculate branch address relative to pp. | |
| setlnkr | MOV lnk, source | Loads link register with source. | |
| setlnki | MOV lnk. #const | set link register wih immediate value | |
| lnk | JMPL lnk | Jump via Ink. Move Ink to pp | no delay slot |
| | CALL #const | call with address defined by 16-bit immediate, | TBD |
| call | CALl label | return address to (sp--) | |
| | JMPL #const | long jump to address defined by 16-bit immediate | one delay slot |
| jmp | JMPL label | | |
| cprc | *(See SFU0, SFU1)* | up to 7 instructions per SFU up to 16 SFUs | |
| inten | ENI | enable interrupt | |
| intdis | DIE | disable interrupt | |

**Table 35: Assembler opcode instructions**

| pointer | Assembler Mnemonic | Short description | Comment |
|---|---|---|---|
| | HPC label | | |
| | HPC #const | | |
| hpc | HPC lnk | High priority opcode exit via HPC pointer | if column is enabled |
| | LPC label | | |
| | LPC #const | | |
| lpc | LPC lnk | Low priority opcode exit via LPC pointer | if column is enabled |
| | JMPS #const | | |
| | JMPS label | | |
| ijmp0 | JMPS lnk | Short Jump via IJMPO pointer (one delay slot) | if column is enabled |
| | NEXT | delimits the opcode | no function |

**Table 36: Assembler SFU O instructions**

| Copro 0 Instruction | Assembler Mnemonic | Short description | Comment |
|---|---|---|---|
| muls | MULS target, src0, src1 | signed 16-bit multiplication | The result is a signed 16-bit integer. |
| mulu | MULU target, src0, src1 | unsigned 16-bit multiplication | The result is a 16-bit integer |

**Table 37: Assembler SFU 1 instructions**

| Coprol Instruction | Assembler Mnemonic | Short description | Comment |
|---|---|---|---|
| ibit | IBIT target, src0, src1 | Input from a special ibit port is left shifted into src0. The MSB of the defined bits is shifted first. src I defines the number of shifts. The instruction supports bitfields of up to 16 bits spanning two subsequent 16-bit words. | max shift count = 16. A 4-bit immediate can be specified either for src0 or src1 but not for both. |
| obit | OBIT src0, src1 | src 1 is shifted to the coprocessor. src1 defines the number of shifts. When a 16-bit word is full, the word is written to the output port. | An 4-bit immediate can be specified either for src0 or src1. |

### 3.3 Shadow Registers

The shadow register set is selected by one of ther following methods:
■ RS0 (standard register set) specified behind instructions *CALL, JMPL* or when the *lnk* register is set selects register set 1. Example CALL RS0 label1 selects the standard register set. *RET* reverts to the register set of the calling routine.
■ RS1 (shadow register set) specified behind instructions *CALL, JMPL* or when the *lnk* register is set selects register set 1. Example CALL RS1 labell selects the standard register set. *RET* reverts to the register set of the calling routine.
■ The register set can also be specified in label with syntax *label(RS0):* or *label(RS1):.* Any *MOV* or *ADD* to lnk register, CALL or JMPL using that label will switch to the register set as specified with the label. RET reverts to the register set of the calling routine.

The (RS0) rsp. (RS1) definition HPC LPC or JMPS point tp the label However with *HPC Ink, LPC lnk, JMPS lnk* the register set is selected.

### 3.4 Input/ Output

Stimuli can be defined in a file and can be read with using an FNC-PAE I/O port. Vice Versa, data can be written via a port to a file.

Currently only input and output port 0 is supported.

The files must be specified using the command line switches
■ -inX <file>, X specified the port number (currently 0)
■ -outX <file>, X specifies the port number (currently 0)

Similarly the SFU instructions *IBIT* reads input bitfields from a file. *OBIT* writes bitfields to a file. The files must be specified using the command line switches
- -ibit <file>
- -obit <file>

The numbers in the stimuli files must fit into 16 bit and must be separated with white-space characters. Decimal and hexadecimal (0x0000) figures can be specified.

### 3.5 Reset and Interrupt Vectors

The assembler generates the default module "FNC DISPATCHER" defining the reset and interrupt vectors which are loaded to the program memory at address 0x0000. It consists of a list of long jumps to the entry points of the reset and up to seven interrupt service routines.

| Reset: | JMPL RS0 #1 |
|---|---|
| ISR 1: | JMPL #0 |
| ISR 2: | JMPL #0 |
| ISR 3: | JMPL #0 |
| ISR 4: | JMPL #0 |
| ISR 5: | JMPL #0 |
| ISR 6: | JMPL #0 |
| ISR 7: | JMPL #0 |

The assembler inserts the branch addresses to the reserved respective labels as defined in Table 38.

**Table 38: Reserved Labels**

| **Reserved Label** | **Description** |
|---|---|
| FNC RESET: | Reset entry point. |
| FNC ISR1: | Entry point of interrupt service routine 1 |
| FNC_ISR2: | Entry point of interrupt service routine 1 |
| FNC_ISR3: | Entry point of interrupt service routine I |
| FNC_ISR4: | Entry point of interrupt service routine I |
| FNC_ISR5: | Entry point of interrupt service routine 1 |
| FNC_ISR6: | Entry point of interrupt service routine 1 |
| FNC_ISR7: | Entry point of interrupt service routine I |

The FNC_RESET: label is mandatory, the entry points of ISR routines are optional.

After calling the interrupt routine (ISR), further interrupts are disabled. The ISR must enable further interrupts with the *El* instruction, either for nested interrupts or before executing *RETI.*
Notes
The ISR must explicitly save and restore all registers which are modified,
either using the stack or by other means.
Interrupt requests are only accepted in opcodes using the HPC. Thus,
opcodes which are using the LPC or JMPS cannot be interrupted.
Therefore loops should always use the HPC and the LPC when exiting.

### 3.6 Examples

The following examples demonstrate basic features of the Function PAE. We don't define aliases in the examples in order to demonstrate the hardware features of the architecture¹.
¹ The examples are only intended to show the FNC-PAE features, some examples can be optimised or written differently, but this is not the scope of the examples.

### 3.6.1 Example 1

The example shows basic parallel operation without conditions.

The contents of r1 ..r5 and e0 .. e2 are accumulated with result in r0. The first opcode loads the registers with constants. The second opcode accumulates the registers and writes the results to r0.

Since EREGSs cannot be used as sources in row 0, r1 .. r4 are added in the first row.

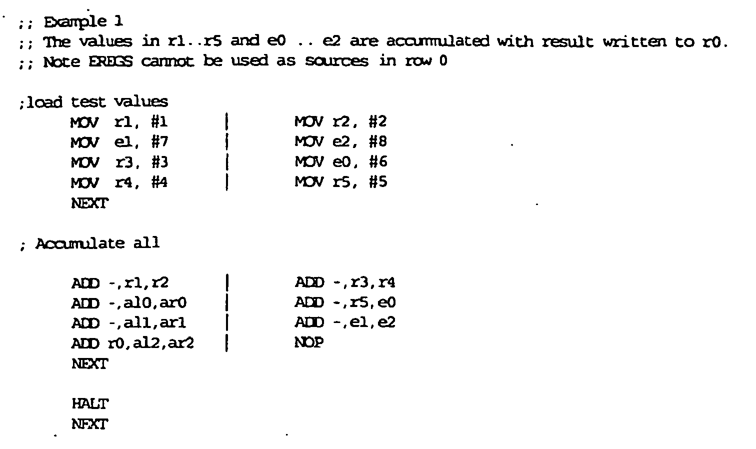

### 3.6.2 Example2

The example shows how conditions on instruction level (i.e. within an opcode) can be used.

The example delimits the value in register r0 to lower and upper boundaries which are defined in r1 and r2, respectively. Then, the result is multiplied by 64 with shift left by 6 bits.

This operation requires two comparisons and decisions as depicted in Figure 7.

First, r0 is compared against the upper limit r2. For this, we subtract r2- r0. If the result is greater /equal 0 (i.e. r0 >= upper limit) column L is disabled and Column R enabled by means of the OPI condition. Then the right path moves the r2 (upper limit) to r0.

The second comparison must also be done in the left path. We subtract r1 from r0. If the result is greater/equal = (i.e. r0 < = lower limit), r1 is moved to r0. Otherwise, the right path is enabled and no further operation is performed. Figure 8 shows the behaviour during runtime. The shaded ALUs are enabled while "-" means, that those ALUs are disabled.

The code demonstrates this behaviour with three different values for r0. The NOP opcodes which are explicitly defined in assembler source can be omitted. If NOPs are not defined in a row, the assembler will insert them automatically. In the example, the second OPI Is not required, since NOPs don't need to be activated since they are doing nothing. We used the NOPs just to demonstrate the general principle.

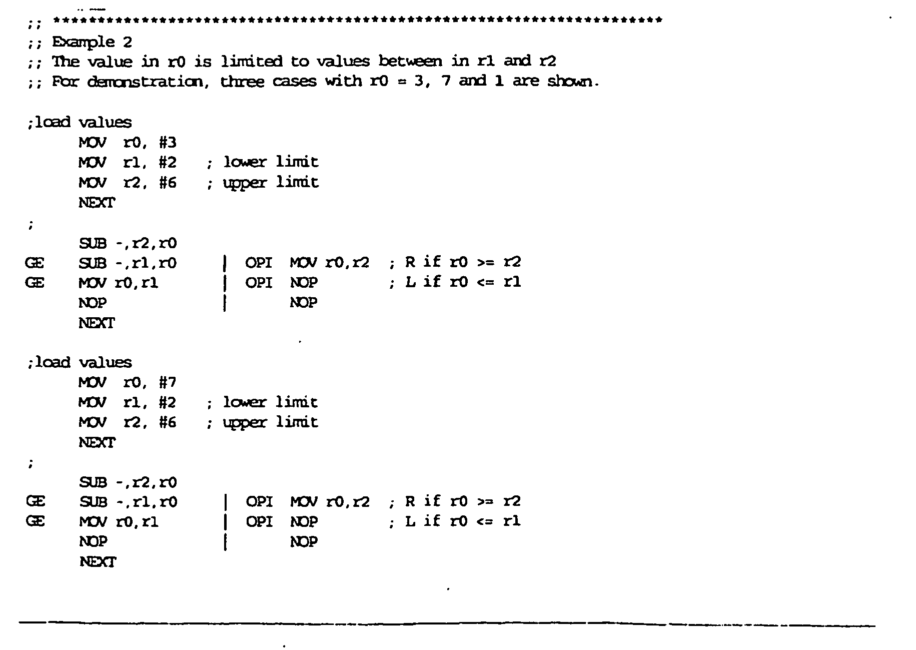

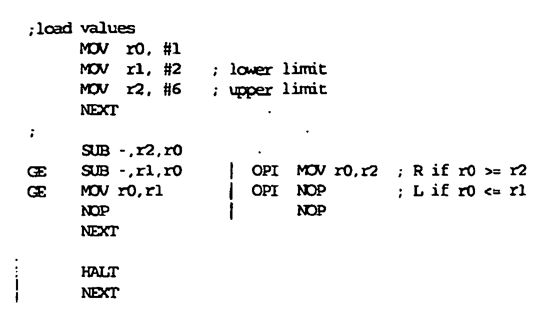

### 3.6.3 Example 3

The example shows how conditions on instruction level (i.e. within an opcode) can be used and how a loop can be defined by conditional specification of the HPC respectively. Furthermore it demonstrates the compactness of FNC-PAE Code.

The example multiplies sequentially two 8 bit numbers in *r0* and *r1* with result in *r2*. The loop-counter is *r7,* which is decremented until 0. If the loop counter is not 0, the ! HPC loop ("ELSE HPC loop") statement specifies to use the *HPC* entry of the opcode for the loop target address. If the result of the *SUB* which decrements the loop-counter was not zero, the *HPC* points to the label "loop"¹. Otherwise (after the loop) the *LPC* entry of the opcode points to the next opcode. The assembler loads the *HPC* and *LPC* bits accordingly- the LPC must not be defined explicitly if the branch points to the next opcode. The ACT conditional statement is required to reactivate the left column in order to process the loop-counter in those cases when a zero was shifted into carry. Thus, only the ADD instruction is omitted.
¹ The assembler uses the absolute value of HPC. On the physical side, the generated 6 bits of the HPC pointer are relative to the current PP.

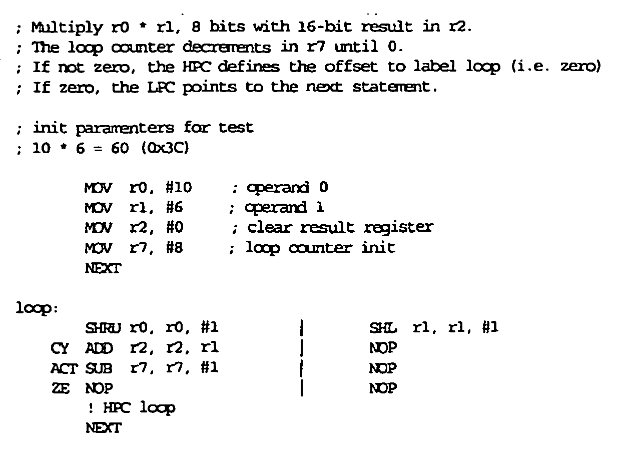

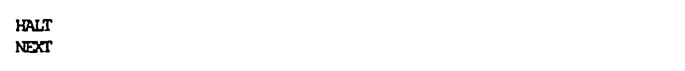

### 3.6.4 Examples 4

The examples show how to access the data memory, the visualisation in FNCDBG and the behaviour of the auto-incrementing address pointers ap0 and ap1. The examples shows also that the "I" delimiter can be used in the next line. This simplifies commenting left and right columns separately.

### Task

In a first loop the data memory is alternatively loaded with 0x1111 and 0x2222 (initloop).

The second loop (modifyloop) first reads the content of memory, compares the content with 0x1111. In case that 0x1111 is read, 0x9999 is added (result Oxaaaa), else the low byte are is set to 0x00.

### Implementation 4a

The example 4a implementation defines the memory sections as bytes. The debugger shows the bytes in a memory line in increasing order with the smallest byte address at the left.

### Initloop:

The base register *bp0* points to *DemoRam0.* The address generator uses *bp0* as base address and adds the offset *r3* to build the memory address. Writing to memory uses the byte store *STB,* thus *r3* must be incremented by 1. The offset address bit 1 of *r3* is checked and the value to be written in the next loop is moved to *r0.*

### Modifyloop:

Reading from memory is done with Word access and requires two steps. The result of the *LDW* instruction is available one cycle later in the mem register. Therefore we must launch one *LDW* before the loop in order to have the first result available in *mem* during the first loop. The *ap0* read pointer and *ap1* write pointers are explicitly incremented by 2. The compare operation is performed in the first opcode, the result is written in the second opcode in the loop.

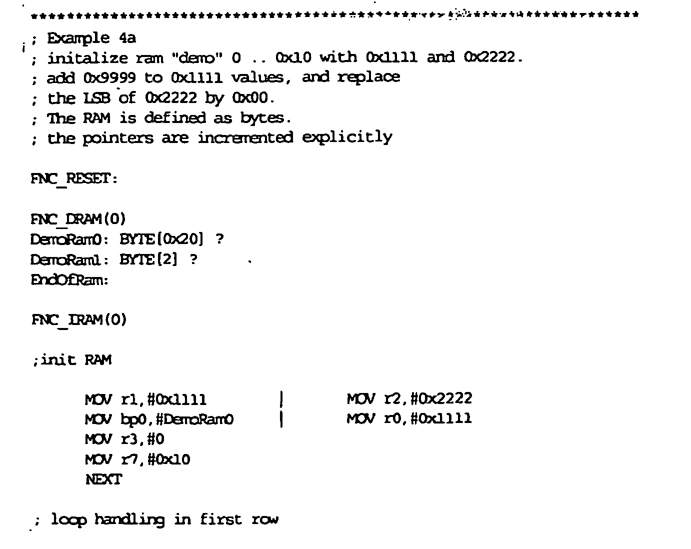

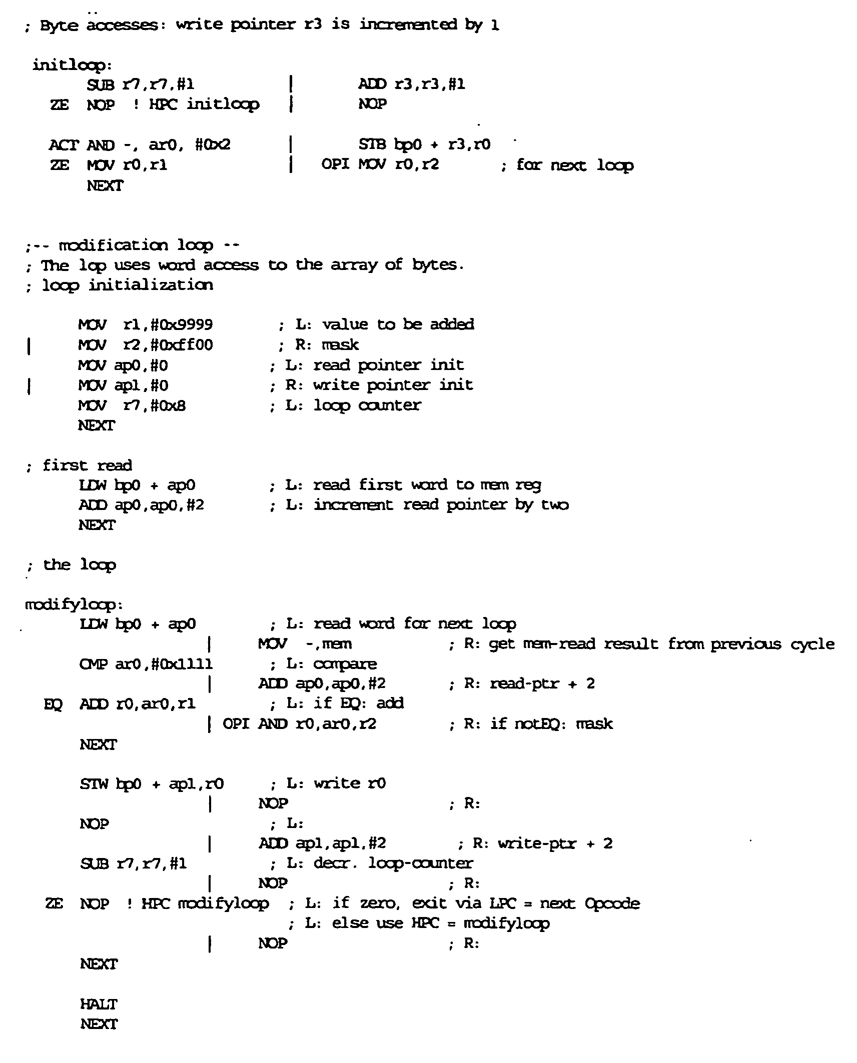

### Implementation 4b

The example 4b implementation defines the memory sections as words. The debugger shows the words in a memory line in increasing order with the smallest word address at the left. Since we use little endian mode, the debugger shows the LSB in a word correctly aligned at the right.

### Initloop:

The memory is loaded using byte accesses. The address bits of *ap0* are checked and the decisions whether 22 or 11 should be used in the nexts cycle depends on the address bits. We use the post-increment mode of ap0. Since *LDB* is used, *ap0* increments by 1. Since the incremented value of ap0 is not available during the current cycle, ap0 is read and one is added value before the bit 1 is checked (AND with 0x10). When stepping through the loop one can see that the LSB of each word is written first.

### Modifyloop:

Reading from memory is done similarly to example 4a using with Word accesses. However the post-increment mode of the *op0* read pointer and *ap1* write pointers is used. Since we use *LDW* rsp. *STW,* the pointers are incremented by 2.

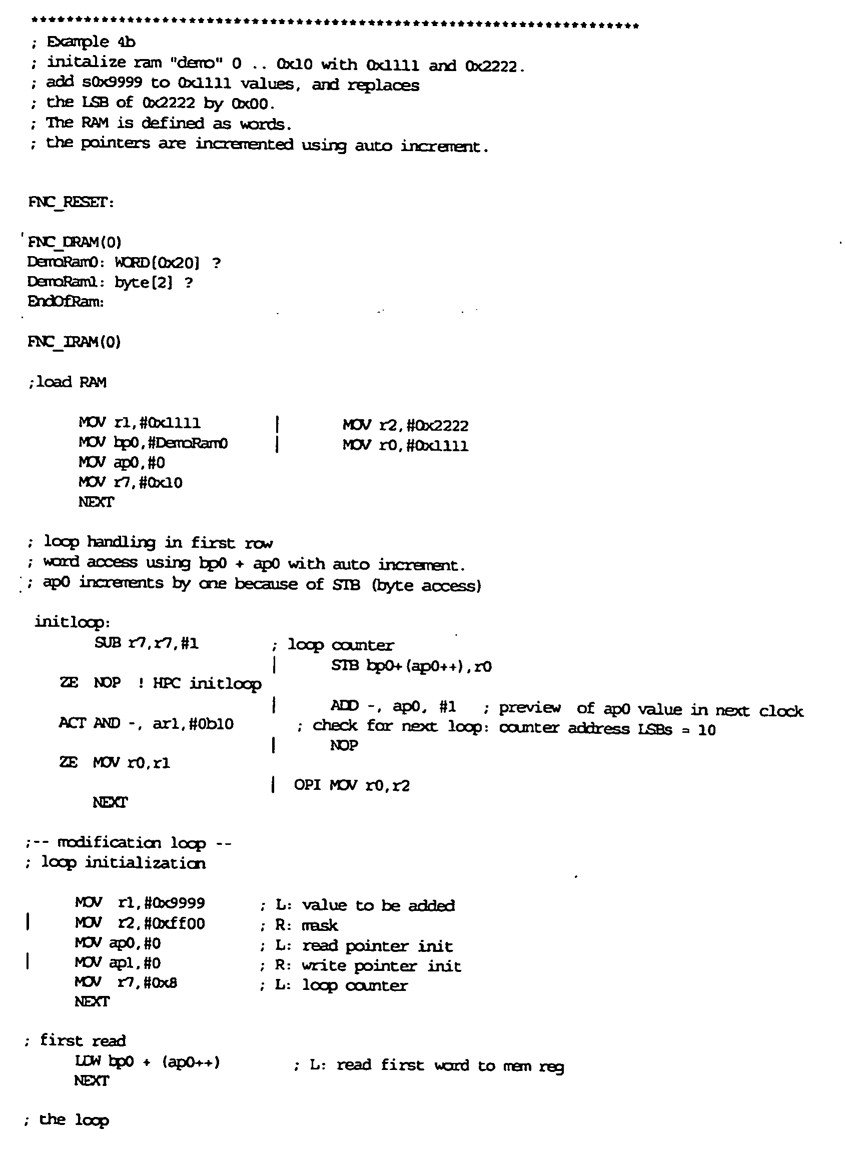

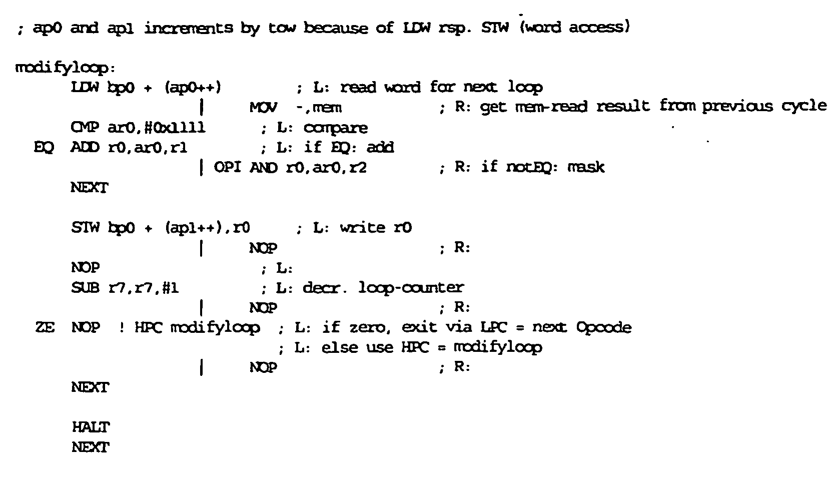

### 3.6.5 Examples 5

The following examples demonstrate the usage of the branches using the HPC, LPC or IJMPO pointers. For demonstration of branchnes, a loop increments r0 which is compared to a constant value. In example 5a, the full assembler code is shown. Examples 5b to 5d show only the opcode which controls the branch.

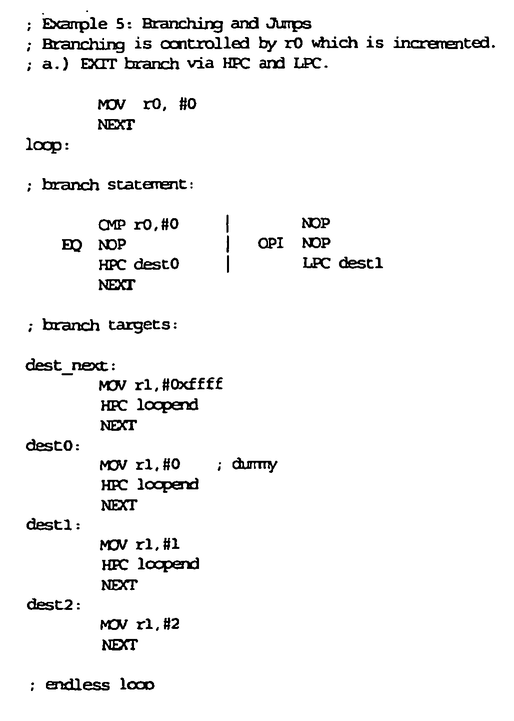

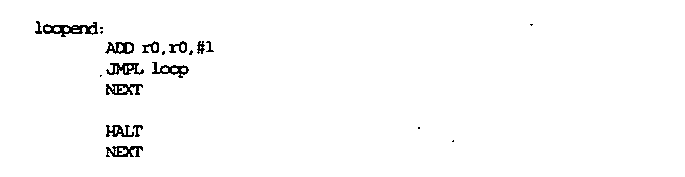

### Exampe 5a

shows a two target branch using the HPC and LPC assembler statements for the left and right path. Only the HPC rsp. LPC statement of the active path is used for the branch. LPC requires an additional cycle since the current implementation has only one instruction memory. The instruction *at label loopend* uses JMPL loop ALU instruction, which allows a 16-bit wide jump. In this example, also an unconditional HPC loop would be possible.

### Hardware background

The assembler sets the pointers HPC to dest0, LPC to dest1. Furthermore, it sets the opcode's EXIT-L field to select the HPC-pointer if the left path is enabled and the EXIT-R field to select LPC-pointer if the right path is enabled during exit.

### Exampe 5b

shows a two target branch using an ELSE branch and the exit of the left path using the LPC. If the comparison is equal the left path is activated and the LPC dest0 statement is evaluated i.e. the branch goes to dest0. Else, the ! HPC dest1 is used and the jump target is dest1.

### Hardware background

The assembler sets the pointers HPC to dest1, LPC to dest0, further the opcode's EXIT-L field to select the LPC. If the condition was TRUE, the EXIT-L field selects LPC as pointer to the next opcode, since the left path is enabled. If the condition was NOT TRUE, the ELSE bits of the ALU instruction select the HPC-pointer.

### Note:

If the LPC dest0 statement would be omitted, the assembler would set the LPC per default to point to the next opcode (label *dest_next).*

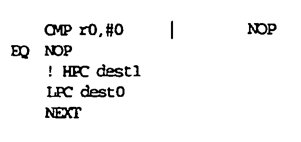

### Exampe 5c

shows a three target branch using an EXIT branches and an ELSE branch. The first comparison enables the left path if r0 >=2, thus LPC dest2 is evaluated and the LPC pointer is used. Otherwise the right path is activated. The second comparison (ALU *ar1)* enables the right path if r0 = 1, thus JMPS dest1 is evaluated and the pointer IJMP0 is used. Otherwise the ! HPC dest0 is evaluated and the branch goes to dest0 using the HPC pointer.

### Hardware background

The assembler sets the pointers HPC to dest0, LPC to dest2 and IJMP0 to dest1. The EXIT-L field specifies to use the LPC if the left path is active. The EXIT-R field specifies to use the IJMP1 if the right path is active. The ELSE bits of the NOP instruction for ALU *ar1* define to use the HPC if the condition is NOT TRUE.

During runtime the hardware must decide which pointer to use. First the else bits are checked if the condition is NOT TRUE. Otherwise, the enabled path selects the pointer using EXIT-L or EXIT-R, respectively.

Note: if both paths would be enabled, the priority HPC - LPC - IJMP0 (lowest) would be applied.

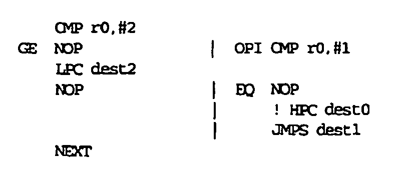

### 3.6.6 Example 6

The example shows how to read and write from files. Two types of ports exist: the general purpose streaming ports and special ports for the *IBIT* and *OBIT* SFU instructions. Both types are show in the following example. The files are specified with the following command line:

xfnodbg -in0 infile.dat -out0 outfile.dat -ibit ibitfile.dat -obit obitfile.dat exi6.fnc the stimuli files are defined as follows:

| Infile-dat | ibitfile!dat(1) |
|---|---|
| 1 | 0x4a9d |
| 2 | 0x7967 |
| 3 | 0xd420 |
| 4 | |
| 5 | |
| 6 | |
| 7 | |
| 8 | |

The first loop reads eight values from the file, adds 10 and writes the result back to the outfile.dat.

The second loop shows how the ibit function can be used to extract bitfields and how to read in sequentially a variable number of bits.

The input bitstream is packed into consecutive 16 bit words, with the first bit right aligned at the MSB. The first 4 bits of the bit-stream are a command which defines how many subsequent bits must be read. Command word = 0 stops the loop. Src0 of the ibit instruction is always set to #0. Figure 9 shows the sequence of the sample ibitfile.dat. In the example the extracted bits are accumulated.

```
 Usage of I/O and ibit
 ; loopl:
 ; reads data from file adds 0x10
 ; and writes the result back to a file
 ; command line option -in0 infile.dat -out0 outfile.dat
 ; loop2:
 ; the second loop reads bit fields via SFU ibit from a file
 ; command line option -ibit ibitfile.dat -obit obitfile.dat

 FNC_RESET:
       MOV r7, #8        ; loopoounter
       MOV r1, #0x10        ; to be added
       NEXT

       loop1:
                 MOV -, p0          ; read port
                 ADD r2, al0, r1
                 NEXT

                 MOV p0, r2        ;write port
                 SUB r7, r7, #1        ;dec.counter
                 ZE NOP ! HPC loop1
                 NEXT

      ; loop2 reads a structured bit-stream
      ; the bit stream is structured as follows:
      ; 4 bits command define how many subsequent bits must be read in.
      ; the read bits are accumulated in r2
      ; the loop is finalized when command = 0 is detected.

                 MOV r0 #0
                 MOV r1, #0
                 MOV r2, #0        ; accu init
                 MOV r3, #4        ; number of command bits
                 NEXT
       loop2:
                 ADD r2, r2, r1    ; accumulate bits
                 NOP
                 NOP
                 IBIT r0, #0, r3   ; read 4 command bits
                 NEXT

                 CMP r0, #0        ; was comand = 0 ?
           NE NOP ! LPC loop2end   ; break loop if command = 0
                 NOP
                 IBIT r1, #0, r0   ; read bits, number as specified by previous 4bits in r0
                 HPC loop2
                 NEXT

       loop2end:
                 HALT
                 NEXT
```

### 3.6.7 Example 7

The example shows the usage of the Stack and subroutine call and return. The calling routine is a loop which increments a pointer to a RAM. *Dataram* which is passed to the subroutine.

The subroutine picks the pointer from the stack after having registers saved. It calculates the average value of 8 consecutive words and writes the result back to the stack at the same position where the pointer was passed: The subroutine saves all registers which are affected to the stack and recovers them before return. Generally spoken, there is no difference to classical microprocessor designs.
Note
Subroutines have in most cases some overhead for stack handling and
saving registers. Therefore usage of subroutines in inner loops of time-critical algorithms should be carefully evaluated. A faster possibility is the usage of the link register *lnk*, however *lnk* can only be used once at the same time.

Table 39 shows the stack usage of this example.

**Table 39: Stack usage of example 7**

| Stack pointer.sp. | usage |
|---|---|
| 0x46 | Calling parameter: pointer to Dataram first sample Return parameter: result value |
| Ox44 | Return address |
| Oa42 | Saved r0 |
| 0x40 | Saved r7 |
| Ox3e | Saved ap0 |
| Ox3c | Saved bp0 |

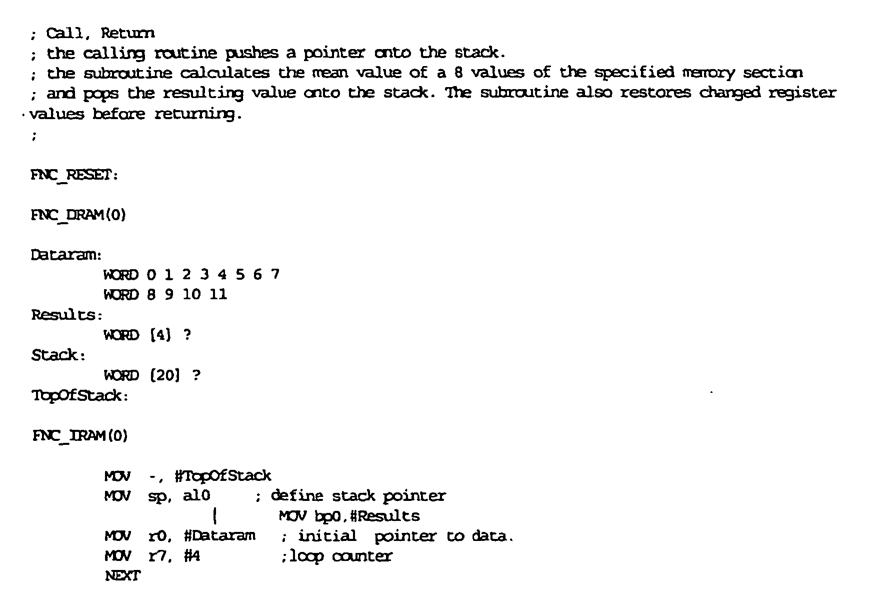

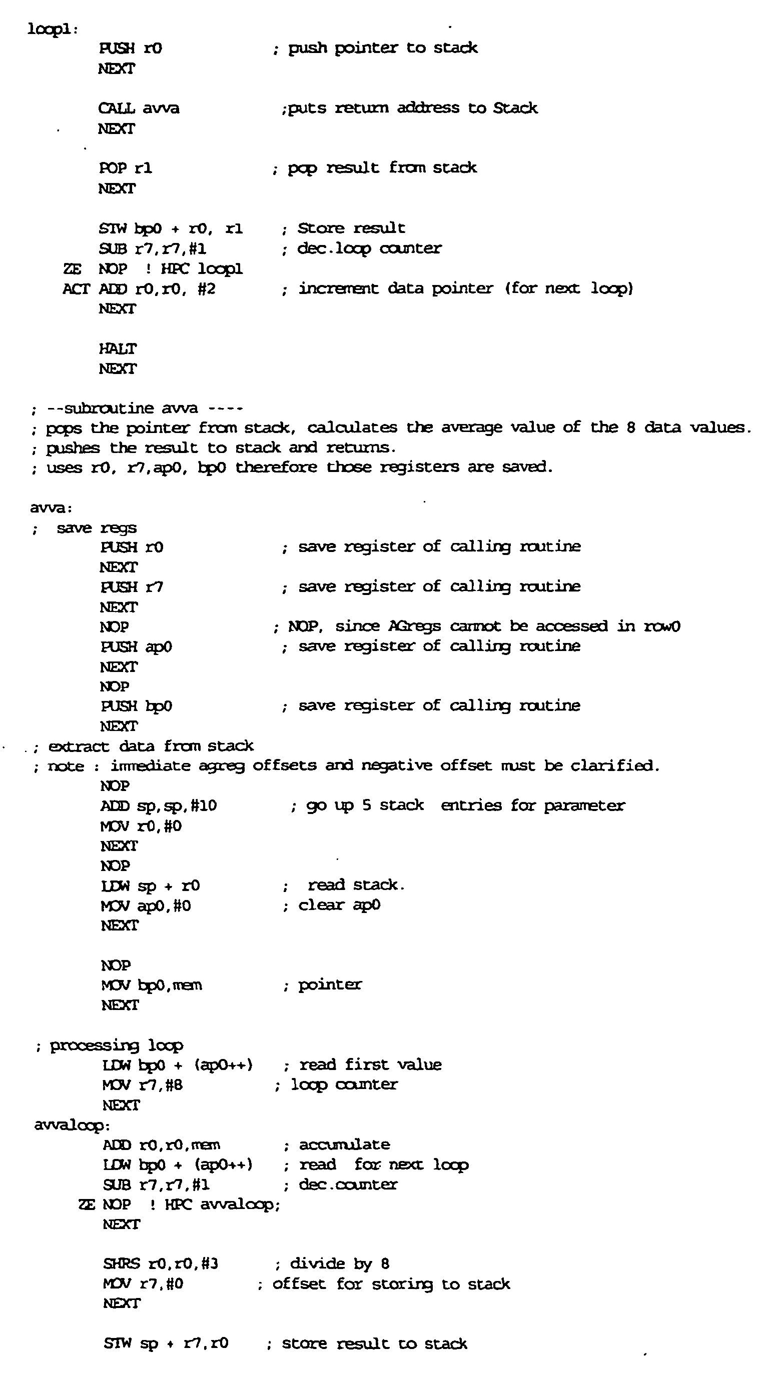

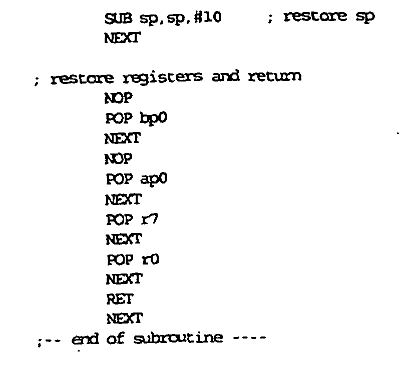

### Appendix A

### FNC Debug Beta (Oct. 28, 2005)

The following picture shows a commented view of the current status of the FNCDBG.EXE.

The debugger is invoked by command line with the initial file. A C-preprocessor must be installed on the system.

The frame of the previously executed opcode shows:
- green: processed instructions
- red: disabled ALU instructions. The result is available at the ALU outputs anyway.
- ---- : NOPs

The breakpoint can be toggled with right mouse click over the opcode.

The following attachment 2 does form part of the present application to be relied upon for the purpose of disclosure and to be published as integrated part of the application.

### Introduction

IS-95 uses two PN generators to spread the signal power uniformly over the physical bandwidth of about 1.25 MHz. The PN spreading on the reverse link also provides near-orthogonality of and; hence, minimal interference between, signals from each mobile. This allows universal reuse of the band of frequencies available, which is a major advantage of CDMA and facilitates soft and softer handoffs.

A Pseudo-random Noise (PN) sequence is a sequence of binary numbers, e.g. ±1, which appears to be random; but is in fact perfectly deterministic. The sequence appears to be random in the sense that the binary values and groups or runs of the same binary value occur in the sequence in the same proportion they would if the sequence were being generated based on a fair "coin tossing" experiment. In the experiment, each head could result in one binary value and a tail the other value. The PN sequence appears to have been generated from such an experiment. A software or hardware device designed to produce a PN sequence is called a PN generator.

A PN generator is typically made of N cascaded flip-flop circuits and a specially selected feedback arrangement as shown in Attachment 2 / Fig. 11.

The flip-flop circuits when used in this way is called a shift register since each clock pulse applied to the flip-flops causes the contents of each flip-flop to be shifted to the right. The feedback connections provide the input to the left-most flip-flop. With N binary stages, the largest number of different patterns the shift register can have is 2N. However, the all-binary-zero state is not allowed because it would cause all remaining states of the shift register and its outputs to be binary zero. The all-binary-ones state does not cause a similar problem of repeated binary ones provided the number of flip-flops input to the module 2 adder is even. The period of the PN sequence is therefore 2N-1, but IS-95 introduces an extra binary zero to achieve a period of 2N, where N equals 15.

Starting with the register in state 001 as shown, the next 7 states are 100, 010, 101, 110, 111, 011, and then 001 again and the states continue to repeat. The output taken from the right-most flip-flop is 100101 and then repeats. With the three stage shift register shown, the period is 23-1 or 7.

The PN sequence in general has 2N/2 binary ones and [2N/2]-1 binary zeros. As an example, note that the PN sequence 1001011 of period 23-1 contains 4 binary ones and 3 binary zeros. Furthermore, the number of times the binary ones and zeros repeat in groups or runs also appear in the same proportion they would if the PN sequence were actually generated by a coin tossing experiment.

The flip-flops which should be tapped-off and fed into the module 2 adder are determined by an advanced algebra which has identified certain binary polynomials called primitive irreducible or unfactorable polynomials. Such polynomials are used to specify the feedback taps. For example, 1S-95 specifies the in-phase PN generator shall be built based on the characteristic polynomial $PI \left(x\right) = x ⁢ 15 + x ⁢ 13 + x ⁢ 9 + x ⁢ 8 + x ⁢ 7 + x ⁢ 5 + 1$

Now visualize a 15 stage shift register with the right-most stage numbered zero and the successive stages to the left numbered 1, 2, 3 etc., until the left-most stage is numbered 14. Then the exponents less than 15 in Eq. (1) tell us that stages 0, 5, 7, 8, 9, and 13 should be tapped and summed in a module 2 adder. The output of the adder is then input to the left-most stage. The shift register PN sequence generator is shown in Attachment 2 / Fig. 12.

PN spreading is the use of a PN sequence to distribute or spread the power of a signal over a bandwidth which is much greater than the bandwidth of the signal itself. PN despreading is the process of tasking a signal in its wide PN spread bandwidth and reconstituting it in its own much narrower bandwidth.

NOTE: PN sequences can be used in at least two ways to spread the signal power over a wide bandwidth. One is called Frequency Hopping (FH) in which the center frequency of a narrowband signal is shifted pseudo randomly using the PN code. A second method is called Direct Sequence (DS). In DS the signal power is spread over a wide bandwidth by in effect multiplying the narrow-band signal by a wideband PN sequence. When a wideband signal and a narrowband signal are multiplied together, the resulting product signal has a bandwidth about equal to the bandwidth of the wideband signal.

IS-95 uses DS PN spreading to achieve several signaling advantages. These advantages include increasing the bandwidth so more users can be accommodated, creating near-orthogonal segments of PN sequences which provide multiple access separation on the reverse link and universal frequency reuse, increasing tolerance to interference, and allowing the multi-path to be resolved and constructively combined by the RAKE receivers. Multipath can be resolved and constructively combined only when the multi-path delay between multipath component signals is greater than the reciprocal of the signal bandwidth. Spreading, and thus increasing the signal band-width, allows resolution of signals with relatively small delay differences. Assume a signal s(t) has a symbol rate of 19,200 sym/sec. Then each symbol has a duration of 1/19200 or 52.0833 µsec. If s(t)is module 2 added to a PN sequence PN(t) with chips changing at a rate of 1.2288 Mchips/sec, each symbol will contain 1.2288x52.0833 or exactly 64 PN chips. The band-width of the signal is increased by a factor of 64 to 64x19,200 or 1.2288 MHz. The received spread signal has the form PN(t-t)s(t-t). At the receiver, a replica of the PN generator used at the transmitter produces the sequence PN(t-x) and forms the product. When the variable x is adjusted to equal t, PN(t-x)PN(t-t)s(t-t) equals PN(t-t)2s(t-t) which equals the desired symbol stream s(t-t) since PN(t-t)2 always equals one. This illustrates despreading.

### Typical PN code length

In IS-95 two different type of PN sequences are used:

| | |
|---|---|
| Short PN code | 2¹⁵ |
| Long PN code | 2⁴² |

### PAE Bit Logic Extension

XPP-III PAEs support one line of logic elements within the data path. Up to three registers can feed data into the Bit-Logic-Line (BLL), the results can be store in up to two registers.

A single Bit-Logic element comprises a three input, two output look-up table (LUT). Attachment 2 / Fig. 13 Should now be looked at.

To achieve high silicon efficiency each bit in the BLL is processed in the same manner, which means only one set of memory is needed for the whole line of LUTs.

Attachment 2 / Fig. 14 shows the configuration of a BLL as used for PN Generators:

A PAE stores up to 4 BLL configuration, which are accessible using the commands bl1, bl2, bl3, bl4 similar to an opcode.

Attachement 2 / Fig. 15 shows the arrangement of bit level extensions (BLE) in a XPP20 processor. The side ALU-PAEs next to the memory PAEs offer the BLL extension. For area efficiency reasons the core ALU-PAEs does not have the extension implemented.

### PN Generator Implementation

Within each LUT a modulo 2 adder is configured. Since each LUT looks the same, in addition a multiplexer is implemented in the LUT to bypass the adder, according to the used polynomial.

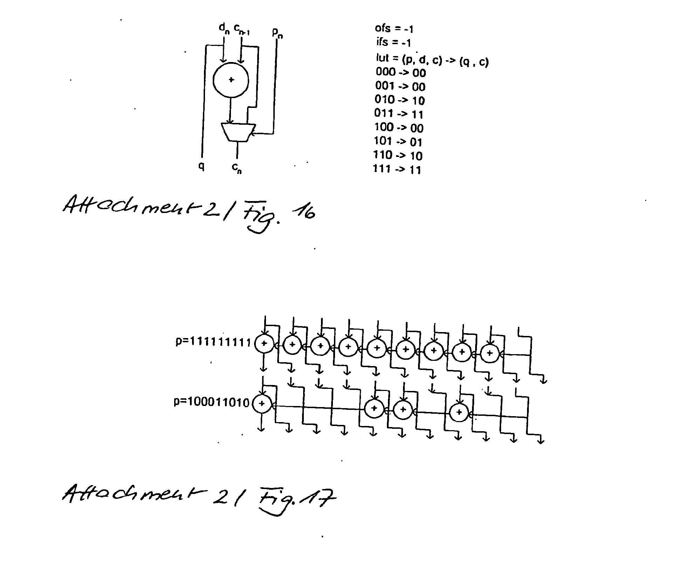

Attachment 2/Fig. 16 Shows the schematics of a LUT and the according configuration data:

Q0₀ is fed to the flag register FU₃, which is used to store a generated bit and distribute it to the consuming algorithms over the event network.

In register R0 the PN data is stored, register R1 contains p which defines the polynomial as shown in the example in Attachment 2/Fig. 17 by setting the multiplexes in each LUT.

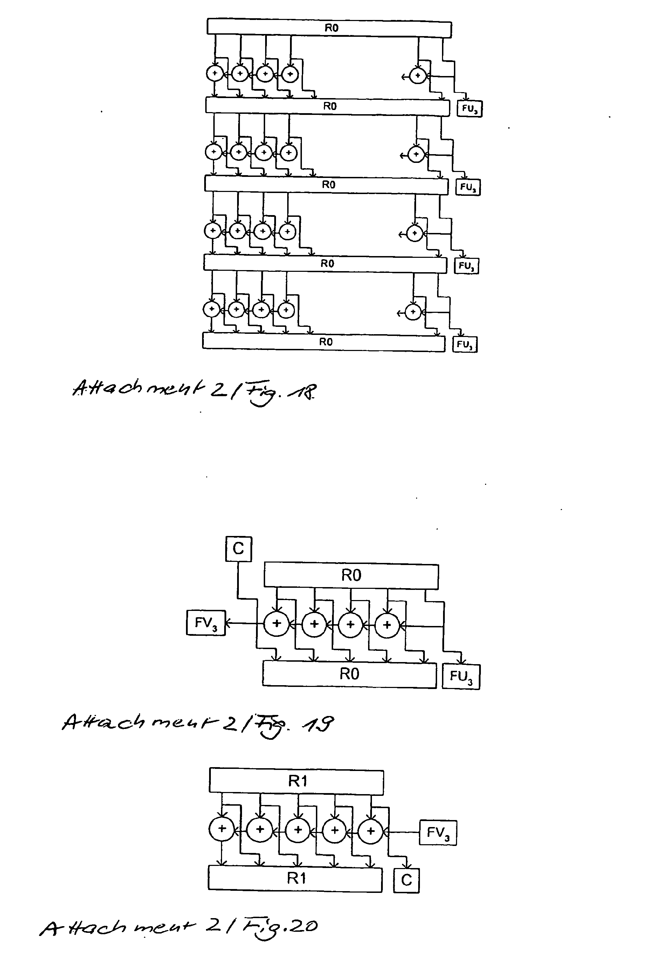

Multiple sequential iterations generate the PN sequence as shown in Attachement 2/Fig. 18.

This very basic method generates PN sequences up to the word length of the ALU.

### Long PN sequences

For longer sequences (i.e. IS-95 Long PN Code is 2⁴²), the generation has to be split into multiple parts. Since XPP-III is planed for Software Defined Radio application having 24-bit wide ALUs, two processing steps are necessary to compute a 42-bit long PN sequence. Attachment 2/Fig. 13 Should now be looked at.

The first step computes the lower half of the PN sequence. The Carry flag (C) is used to move the lowest bit of the higher half of the sequence into the shifter. FV3 is used to carry the sum of the modulo 2 adders to the processing of the higher half. Attachement 2/Fig. 20 should now be looket at.

Higher half processing moves the lowest bit into the Carry flag (C) and uses the FV3 flag as carry input for the modulo 2 adder chain.

As a prerequisite the shown operation need to preload the Carry flag before the processing loop starts.

An example algorithm is given below. r0, r1, r2, r3 are preset as constants by configuration. r0 and r1 contain the base values for the PN generation, r2 and r3 contain polynomial definition for the higher respective lower part of the PN processing. Since r1 is shifted right and therefore destroyed it is reloaded right after from the configuration memory.

```
           sr r1, r1; # Preload C R1 scratch
           load r1, <const>;
    loop: bl1 r0, r0, r2; # process lower half with key r2
           bl2 r1, r1, r3; # process higher half with key r3
           write fu3;
           jmp loop;
```

The code requires 7 entries in the configuration memory.

## Claims

1. A data processing device for processing data according to instructions fetched and decoded each processing cycle comprising
a multidimensional array of ALUs (0101a-0104a; 0101b-0104b),
the multidimensional array having at least two dimensions along which at least two ALUs (0101a-0104a; 0101b-0104b) are provided,
a plurality of chains (0101a-0104a; 0101b-0104b) of ALUs being provided having a register-free interconnection of at least two ALUs,
an instruction fetch and decode unit adapted to issue an instruction per processing cycle to the ALUs,
at least one signal line being provided
for the transfer of signals
relating to states and/or conditions from
a first of said chains of ALUs (0101a-0104a) to
at least one ALU of a different of said plurality of chains of ALUs (0101b-0104b),
said at least one ALU of said different chain (0101b-0104b), being adapted
to evaluate said signals relating to states and/or conditions and
to carry out or to not carry out an operation in response to said evaluation and said instructions issued and decoded,
so as to process data in a manner free of latencies caused by registers between at least some of the ALUs in the corresponding array.

2. The data processing device according to claim 1, wherein the ALU chains (0101a-0104a; 0101b-0104b) between which signals are transferred are neighboring chains and the ALU from which the signal is transferred is placed in the same stage or at an upstream stage as the receiving ALU.

3. The data processing device according to claim 1 or 2, wherein the evaluating ALU is adapted to evaluate the signal transferred and to respond to the evaluation by execution or non-execution within one clock cycle.

## Patentansprüche

1. Datenverarbeitungsvorrichtung zum Verarbeiten von Daten in Übereinstimmung mit Befehlen, die in jedem Verarbeitungszyklus geholt und decodiert werden, die Folgendes umfasst:
eine mehrdimensionale Anordnung von ALUs (0101a-0104a; 0101b-0104b),
wobei die mehrdimensionale Anordnung wenigstens zwei Dimensionen hat, längs derer wenigstens zwei ALUs (0101a-0104a; 0101b-0104b) vorgesehen sind,
wobei mehrere Ketten (0101a-0104a; 0101b-0104b) von ALUs vorgesehen sind, die eine registerfreie Verbindung von wenigstens zwei ALUs besitzen,
eine Befehlshol- und Befehlsdecodierungseinheit, die dafür ausgelegt ist, pro Verarbeitungszyklus einen Befehl zu den ALUs auszugeben,
wenigstens eine Signalleitung, die vorgesehen ist für die Übertragung von Signalen,
die sich auf zustände und/oder Bedingungen beziehen,
von
einer ersten der Ketten von ALUs (0101a-0104a)
zu
wenigstens einer ALU einer anderen der mehreren Ketten von ALUs (0101b-0104b),
wobei die wenigstens eine ALU der anderen Kette (0101b-0104b) dafür ausgelegt ist,
die Signale bezüglich Zuständen und/oder Bedingungen zu bewerten; und
eine Operation als Antwort auf die Bewertung der ausgegebenen und decodierten Befehle auszuführen oder nicht auszuführen,
um so Daten auf eine Weise zu verarbeiten, die frei von Latenzen ist, die durch Register zwischen wenigstens einigen der ALUs in der entsprechenden Anordnung hervorgerufen werden.

2. Datenverarbeitungsvorrichtung nach Anspruch 1, wobei die ALU-Ketten (0101a-0104a; 0101b-0104b), zwischen denen Signale übertragen werden, benachbarte Ketten sind und die ALU, von der das Signal übertragen wird, in derselben Stufe wie die empfangende ALU oder in einer vorgeordneten Stufe hiervon angeordnet ist.

3. Datenverarbeitungsvorrichtung nach Anspruch 1 oder 2, wobei die bewertende ALU dafür ausgelegt ist, das übertragene Signal zu bewerten und auf die Bewertung durch Ausführung oder Nichtausführung innerhalb eines Taktzyklus zu antworten.

## Revendications

1. Dispositif de traitement de données pour traiter des données conformément à des instructions extraites et décodées, chaque cycle de traitement comprenant :
un réseau multidimensionnel d'ALU (0101a-0704a ; 0101b-0104b),
le réseau multidimensionnel ayant au moins deux dimensions le long desquelles au moins deux ALU (0101a-0104a ; 0101b-0104b) sont prévues,
une pluralité de chaînes (01C1a-0104a ; 0101b-0104b) d'ALU prévues ayant une interconnexion sans registre d'au moins deux ALU,
une unité d'extraction et de décodage d'instructions conçue pour délivrer en sortie une instruction par cycle de traitement aux ALU,
au moins une ligne de signal étant prévue pour le transfert de signaux concernant des états et/ou des conditions depuis
une première desdites chaînes d'ALU (0101a-0104a) à
au moins une ALU d'une chaîne différente de ladite pluralité de chaînes d'ALU (0101b-0104b),
ladite au moins une ALU de ladite chaîne différente (0101b-0104b) étant adaptée
pour évaluer lesdits signaux concernant des états et/ou des conditions, eL
pour exécuter ou une pas exécuter une opération en réponse à ladite évaluation et auxdites instructions émises et décodées,
ce manière à traiter des données sans les latence causées par les registres entre au moins certaines des ALU dans le réseau correspondant.

2. Dispositif de traitement de données selon la revendication 1, dans lequel les chaînes d'ALU (0101a-0104a ; 0101b-(0104b) entre lesquelles des signaux sont transférés sont des chaînes avoisinantes et l'ALU depuis laquelle le signal est transféré est placée dans le même étage ou à un étage amont par rapport à l'ALU réceptrice.

3. Dispositif de traitement de données selon la revendication 1 ou la revendication 2, dans lequel l'ALU d'évaluation est conçue pour évaluer le signal transféré et pour répondre à l'évaluation par l'exécution ou la non exécution dans un cycle d'horloge.
